# EUROPEAN PATENT SPECIFICATION

(11) **EP 3 882 113 B1**
(45) Date of publication and mention of the grant of the patent: **09.08.2023**
(21) Application number: 18940293.6
(22) Date of filing: 14.11.2018
(51) Int. Cl.: B62J 27/20, B60R 21/16

(54) **SADDLED VEHICLE**
SATTELFAHRZEUG
VÉHICULE À SELLE

(43) Date of publication of application: 22.09.2021
(73) Proprietor: HONDA MOTOR CO., LTD., Minato-ku Tokyo 107-8556 (JP)
(72) Inventor: AIKYO Yutaka, Wako-shi, Saitama 351-0193 (JP); KUROHORI Seiichi, Wako-shi, Saitama 351-0193 (JP); SATO Takashi, Wako-shi, Saitama 351-0193 (JP)
(74) Representative: Kiwit, Benedikt
(86) International application number: PCT/JP2018/042179
(87) International publication number: WO 2020/100239

(56) References cited:
- EP-A2- 2 075 165
- JP-A- H0 939 703
- JP-A- H08 239 005
- JP-A- 2009 196 410
- JP-A- 2010 155 526
- JP-A- 2010 155 526
- JP-A- 2011 000 969
- US-A1- 2003 222 439

## Description

### [Technical Field]

The present invention relates to a saddled vehicle.

### [Background Art]

Conventionally, a saddled vehicle has been known in which an airbag control device (an ECU) is provided to control deployment of an airbag device (for example, see JP 2015 - 067 148 A). Patent Literature 1 does not disclose a position where the airbag control device is disposed.

The document JP 2010 155526 A shows a two-wheeled motor vehicle comprising an airbag unit and showing all the features of the preamble of independent claim 1.

The airbag unit is mounted in a separate housing rear of the head pipe.

The document EP 2 075 165 A2 shows a two-wheeled vehicle comprising an airbag. Also here, the airbag is mounted in a separate housing behind the head bar.

The document US 2003/0222439 A1 shows a two-wheeled vehicle comprising an airbag. The airbag is mounted beneath the seat of the vehicle.

### [Summary of Invention]

### [Technical Problem]

In a saddled vehicle, it is desirable to protect an airbag control device when an impact for operating an airbag acts on the saddled vehicle. Further, it is desirable that the airbag control device is hardly affected by water.

The present invention has been made in view of the above circumstances, and is to provide a saddled vehicle in which the airbag control device is effectively protected from the impact and the airbag control device is hardly affected by water.

### [Solution to Problem]

The present invention is defined by the independent claims. Further advantageous developments are shown by the dependent claims.

The present invention is to provide a saddled vehicle including an engine (12, 212, 312); a body frame (10, 210, 310); a retainer (55, 255, 355); an inflator (57, 257, 357); and an airbag (56, 256, 356) that is housed in the retainer (55, 255, 355), is inflated by gas released from the inflator (57, 257, 357), and is deployed outside the retainer (55, 255, 355), the saddled vehicle including: an airbag control device (54a, 54b, 54c, 54d, 54e, 54f, 54g, 54h, 54i, 54j, 254a, 254b, 254c, 254d, 254g, 254h, 254i, 254j, 354a, 354b, 354c, 354d, 354e, 354f, 354g, 354h, 354i, 354j) that is provided separately from an engine control device (59, 259, 359) configured to control the engine (12, 212, 312) and controls deployment timing of the airbag (56, 256, 356); and an intake device (35, 235, 335) that supplies taken-in outside air to the engine (12, 212, 312) as intake air, the airbag control device (54a, 54b, 54c, 54d, 54e, 54f, 54g, 54h, 54i, 54j, 254a, 254b, 254c, 254d, 254g, 254h, 254i, 254j, 354a, 354b, 354c, 354d, 354e, 354f, 354g, 354h, 354i, 354j) being disposed above a lower end (36b, 236b, 336b) of the intake device (35, 235, 335) and being disposed inside a region surrounded by the body frame (10, 210, 310) as viewed from a top of the vehicle.

According to the invention, the retainer (55, 255, 355) is provided in an L-shape with a left and right extending portion(60, 260, 360) extending in a left-right direction and an upward extending portion (61, 261, 361) extending upward from an end of the left and right extending portion (60, 260, 360), and the airbag control device (54a, 254a, 354a) is disposed above the left and right extending portion (60, 260, 360) and on a side of the upward extending portion (61, 261, 361).

In the configuration described above but not claimed the airbag control device (54b, 54c, 254b, 254c, 354b, 354c) may be disposed below the retainer (55, 255, 355) to be adjacent to a lower surface (55a, 255a, 355a) of the retainer (55, 255, 355).

In the configuration described above but not claimed, the retainer (55, 255, 355) may be disposed behind a head pipe (14, 214, 314) located at a front end of the body frame (10, 210, 310), and the airbag control device (54d, 254d, 354d) may be disposed between the head pipe (14, 214, 314) and the retainer (55, 255, 355).

In the configuration described above, the inflator (57, 257, 357) may be provided in the retainer (55, 255, 355), and the airbag control device (54a, 54b, 54c, 254a, 254b, 254c, 354a, 354b, 354c) may be connected to the inflator (57, 257, 357), and may be fixed to the retainer (55, 255, 355).

In the configuration described above, the airbag control device (54e, 54f, 354e, 354f) may be disposed along an upper surface (38c, 338c) of a fuel tank (38, 338), and may be fixed to the fuel tank (38, 338).

In the configuration described above, the fuel tank (38, 338) may include an oil filler port (38f, 338f) erected upward from the upper surface (38c, 338c), and the airbag control device (54e, 354e) may be disposed to be adjacent to the oil filler port (38f, 338f).

In the configuration described above, the body frame (10, 310) may include a down frame (15, 315) extending downward from a head pipe (14, 314) located at a front end of the body frame (10, 310) and a lower frame (16, 316) extending rearward from the down frame (15, 315), the fuel tank (38, 338) may be disposed behind the down frame (15, 315) and above the lower frame (16, 316), the upper surface (38c, 338c) of the fuel tank (38, 338) may be inclined to descend rearward, the oil filler port (38f, 338f) may extend upward to rise rearward from the upper surface (38c, 338c), and the airbag control device (54e, 354e) may be disposed in front of the oil filler port (38f, 338f).

In the configuration described above, the body frame (10, 310) may include a down frame (15, 315) extending downward from a head pipe (14, 314) located at a front end of the body frame (10, 310) and a lower frame (16, 316) extending rearward from the down frame (15, 315), the fuel tank (38, 338) may be disposed behind the down frame (15, 315) and above the lower frame (16, 316), the upper surface (38c, 338c) of the fuel tank (38, 338) may be inclined to descend downward, and the airbag control device (54f, 354f) may be provided at a rear part of the upper surface (38c, 338c).

In the configuration described above, the body frame (310) may include a pair of left and right frames (389) configured to connect the head pipe (314) and a rear end of the lower frame (316) to each other, each of the frames (389) being inclined above the upper surface (338c) of the fuel tank (338) to descend rearward along the upper surface (338c), and the airbag control device (354e, 354f) may be disposed between the left and right frames (389).

In the configuration described above, the body frame (10, 210, 310) may include a pair of left and right seat frames (17, 217, 317) that support a seat (13, 213, 313) for an occupant and a cross frame (20, 220, 320) through which the seat frames (17, 217, 317) are coupled to each other in a left-right direction, and the airbag control device (54g, 54h, 54i, 54j, 254g, 254h, 254i, 254j, 354g, 354h, 354i, 354j) may be adjacent to the cross frame (20, 220, 320), and be disposed in front of or behind the cross frame (20, 220, 320).

In the configuration described above, the airbag control device (54g, 54i, 254g, 254i, 354g, 354i) may be fixed to the cross frame (20, 220, 320).

In the configuration described above, the airbag control device (54h, 54j, 254h, 254j, 354h, 354j) may be fixed to the seat frame (17, 217, 317).

In the configuration described above, a housing box (39, 339) configured to house an article may be disposed between the left and right seat frames (17, 317), and the airbag control device (54g, 54h, 54i, 54j, 354g, 354h, 354i, 354j) may be covered from above with a lower surface (39a, 339a) of the housing box.

In the configuration described above, the engine (12, 212, 312) may be a unit swing engine that is swingably supported by the body frame (10, 210, 310) and supports a rear wheel (3, 203, 303), and the intake device (35, 235, 335) may be fixed to the unit swing engine.

In the configuration described above, the airbag control device (54a, 54b, 54c, 54d, 54e, 54f, 54g, 54h, 54i, 54j, 254a, 254b, 254c, 254d, 254g, 254h, 254i, 254j, 354a, 354b, 354c, 354d, 354e, 354f, 354g, 354h, 354i, 354j) may include a storage portion (70, 270, 370) that holds an operation record of the airbag (56, 256, 356) even after the airbag (56, 256, 356) deploys.

In the configuration described above, the airbag control device (54a, 54b, 54c, 54d, 54e, 54f, 54g, 54h, 54i, 54j, 254a, 254b, 254c, 254d, 254g, 254h, 254i, 254j, 354a, 354b, 354c, 354d, 354e, 354f, 354g, 354h, 354i, 354j) may control deployment timing of the airbag (56, 256, 356) based on a detection value obtained from an acceleration sensor (53, 253, 353), and an electric wire (77a, 77b, 77c, 77d, 77e, 277a, 277d, 277e, 377a, 377b, 377c, 377d, 377e) may be arranged along an inside surface of the body frame (10, 210, 310) in a vehicle width direction to connect the acceleration sensor (53, 253, 353) and the airbag control device (54a, 54b, 54c, 54d, 54e, 54f, 54g, 54h, 54i, 54j, 254a, 254b, 254c, 254d, 254g, 254h, 254i, 254j, 354a, 354b, 354c, 354d, 354e, 354f, 354g, 354h, 354i, 354j) to each other.

In the configuration described above, the body frame (10, 210, 310) may include a down frame (15, 215, 315) extending downward from a head pipe (14, 214, 314) located at a front end of the body frame (10, 210, 310), a lower frame (16, 216, 316) extending rearward from the down frame (15, 215, 315), and a seat frame (17, 217, 317) extending rearward and upward from a rear end of the lower frame (16, 216, 316), the engine (12, 212, 312) being located behind the seat frame (17, 217, 317), and the acceleration sensor (53, 253, 353) may be disposed on an inside surface in the vehicle width direction of a connection portion (78, 278, 378) between the lower frame (16, 216, 316) and the seat frame (17, 217, 317).

### [Advantageous Effects of Invention]

A saddled vehicle includes an engine, a body frame, a retainer, an inflator, and an airbag that is housed in the retainer, is inflated by gas released from the inflator, and is deployed outside the retainer, the saddled vehicle including: an airbag control device that is provided separately from an engine control device configured to control the engine and controls deployment timing of the airbag; and an intake device that supplies taken-in outside air to the engine as intake air, the airbag control device being disposed above a lower end of the intake device and being disposed inside a region surrounded by the body frame as viewed from a top of the vehicle.

According to such a configuration, since the airbag control device is disposed inside the region surrounded by the body frame as viewed from the top of the vehicle, the airbag control device is effectively protected from the impact by the body frame. Further, the airbag control device is disposed above the lower end of the intake device, and thus is hardly affected by water.

According to the invention, the retainer may be provided in an L-shape with a left and right extending portion extending in a left-right direction and an upward extending portion extending upward from an end of the left and right extending portion, and the airbag control device may be disposed above the left and right extending portion and on a side of the upward extending portion.

According to such a configuration, the airbag control device can be compactly disposed using a space above the left and right extending portion and on the side of the upward extending portion in the L-shaped retainer.

In the configuration described above but not claimed, the airbag control device may be disposed below the retainer to be adjacent to a lower surface of the retainer.

According to such a configuration, the airbag control device can be compactly disposed below the retainer using a space adjacent to the lower surface of the retainer.

In the configuration described above but not claimed, the retainer may be disposed behind a head pipe located at a front end of the body frame, and the airbag control device may be disposed between the head pipe and the retainer.

According to such a configuration, the airbag control device can be compactly disposed using a space between the head pipe and the retainer.

Further, the inflator may be provided in the retainer, and the airbag control device may be connected to the inflator, and may be fixed to the retainer.

According to such a configuration, since the airbag control device can be firmly fixed to the retainer, the airbag control device can be satisfactorily connected to the inflator, and the airbag can appropriately deploy.

In the configuration described above, the airbag control device may be disposed along an upper surface of a fuel tank, and may be fixed to the fuel tank.

According to such a configuration, the airbag control device can be compactly disposed along the upper surface of the fuel tank, and can be firmly fixed to the upper surface of the fuel tank.

In the configuration described above, the fuel tank may include an oil filler port erected upward from the upper surface, and the airbag control device may be disposed to be adjacent to the oil filler port.

According to such a configuration, the airbag control device can be compactly disposed using a space around the oil filler port that is erected upward.

In the configuration described above, the body frame may include a down frame extending downward from a head pipe located at a front end of the body frame and a lower frame extending rearward from the down frame, the fuel tank may be disposed behind the down frame and above the lower frame, the upper surface of the fuel tank may be inclined to descend rearward, the oil filler port may extend upward to rise rearward from the upper surface, and the airbag control device may be disposed in front of the oil filler port.

According to such a configuration, the airbag control device can be compactly disposed using a space in front of the oil filler port extending upward so as to rise rearward from the upper surface of the fuel tank inclined to descend rearward.

In the configuration described above, the body frame may include a down frame extending downward from a head pipe located at a front end of the body frame and a lower frame extending rearward from the down frame, the fuel tank may be disposed behind the down frame and above the lower frame, the upper surface of the fuel tank may be inclined to descend downward, and the airbag control device may be provided at a rear part of the upper surface.

According to such a configuration, the airbag control device can be compactly disposed using a space above the rear part of the upper surface of the fuel tank that descends rearward.

In the configuration described above, the body frame may include a pair of left and right frames configured to connect the head pipe and a rear end of the lower frame to each other, each of the frames being inclined above the upper surface of the fuel tank to descend rearward along the upper surface, and the airbag control device may be disposed between the left and right frames.

According to such a configuration, the left and right frame can effectively protect the airbag control device from an impact.

In the configuration described above, the body frame may include a pair of left and right seat frames that support a seat for an occupant and a cross frame through which the seat frames are coupled to each other in a left-right direction, and the airbag control device may be adjacent to the cross frame, and be disposed in front of or behind the cross frame.

According to such a configuration, the airbag control device can be compactly disposed using a space in front of and behind the cross frame through which the seat frames are connected to each other in the left-right direction.

In the configuration described above, the airbag control device may be fixed to the cross frame.

According to such a configuration, the airbag control device can be fixed with a simple structure using the cross frame.

In the configuration described above, the airbag control device may be fixed to the seat frame.

According to such a configuration, the airbag control device can be fixed with a simple structure using the seat frame.

In the configuration described above, a housing box configured to house an article may be disposed between the left and right seat frames, and the airbag control device may be covered from above with a lower surface of the housing box.

According to such a configuration, the airbag control device can be effectively protected from above by the housing box.

In the configuration described above, the engine may be a unit swing engine that is swingably supported by the body frame and supports a rear wheel, and the intake device may be fixed to the unit swing engine.

According to such a configuration, in the saddled vehicle in which the intake device is fixed to the unit swing engine, it is possible to effectively prevent the influence of the airbag control device on water accumulated on a road surface.

In the configuration described above, the airbag control device may include a storage portion that holds an operation record of the airbag even after the airbag deploys.

According to such a configuration, since the airbag control device is disposed inside the region surrounded by the body frame and protected, the operation record of the airbag can be acquired from the storage portion even after the airbag deploys.

In the configuration described above, the airbag control device may control deployment timing of the airbag based on a detection value obtained from an acceleration sensor, and an electric wire may be arranged along an inside surface of the body frame in a vehicle width direction to connect the acceleration sensor and the airbag control device to each other.

According to such a configuration, the electric wire configured to connect the acceleration sensor and the airbag control device to each other can be effectively protected by the body frame.

In the configuration described above, the body frame may include a down frame extending downward from a head pipe located at a front end of the body frame, a lower frame extending rearward from the down frame, and a seat frame extending rearward and upward from a rear end of the lower frame, the engine being located behind the seat frame, and the acceleration sensor may be disposed on an inside surface in the vehicle width direction of a connection portion between the lower frame and the seat frame.

According to such a configuration, the acceleration sensor can be disposed near the position of the center of gravity of the motorcycle and can satisfactorily detect the acceleration. In addition, the acceleration sensor can be effectively protected by the connection portion between the lower frame and the seat frame.

### [Brief Description of Drawings]

[Fig. 1] Fig. 1 is a left side view of a motorcycle according to a first embodiment of the present invention.
[Fig. 2] Fig. 2 is a left side view of a body frame.
[Fig. 3] Fig. 3 is a plan view of the body frame as viewed from above.
[Fig. 4] Fig. 4 is a block diagram showing a control configuration of the motorcycle.
[Fig. 5] Fig. 5 is a view of a peripheral portion of an inner cover as viewed from a rear side.
[Fig. 6] Fig. 6 is a front view of an airbag unit as viewed from the rear side.
[Fig. 7] Fig. 7 is a left side view of the airbag unit.
[Fig. 8] Fig. 8 is a view of a peripheral portion of an inner cover according to a second not claimed embodiment as viewed from a rear side.
[Fig. 9] Fig. 9 is a plan view of a body frame and an airbag control device as viewed from above.
[Fig. 10] Fig. 10 is a view of a peripheral portion of an inner cover according to a third not claimed embodiment as viewed from a rear side.
[Fig. 11] Fig. 11 is a plan view of a body frame and an airbag control device as viewed from above.
[Fig. 12] Fig. 12 is a view of a peripheral portion of an inner cover according to a fourth not claimed embodiment as viewed from a rear side.
[Fig. 13] Fig. 13 is a plan view of a body frame and an airbag control device as viewed from above.
[Fig. 14] Fig. 14 is a left side view of a body frame according to a fifth embodiment.
[Fig. 15] Fig. 15 is a plan view of the body frame as viewed from above.
[Fig. 16] Fig. 16 is a left side view of a body frame according to a sixth embodiment.
[Fig. 17] Fig. 17 is a plan view of the body frame as viewed from above.
[Fig. 18] Fig. 18 is a left side view of a body frame according to a seventh embodiment.
[Fig. 19] Fig. 19 is a plan view of the body frame as viewed from above.
[Fig. 20] Fig. 20 is a left side vide of a body frame according to an eighth embodiment.
[Fig. 21] Fig. 21 is a plan view of the body frame as viewed from above.
[Fig. 22] Fig. 22 is a left side vide of a motorcycle according to a ninth embodiment of the present invention.
[Fig. 23] Fig. 23 is a left side vide of a body frame.
[Fig. 24] Fig. 24 is a plan view of the body frame as viewed from above.
[Fig. 25] Fig. 25 is a block diagram showing a control configuration of the motorcycle.
[Fig. 26] Fig. 26 is a view of a peripheral portion of an inner cover as viewed from a rear side.
[Fig. 27] Fig. 27 is a front view of an airbag unit as viewed from the rear side.
[Fig. 28] Fig. 28 is a left side view of the airbag unit.
[Fig. 29] Fig. 29 is a view of a peripheral portion of an inner cover according to a tenth embodiment as viewed from a rear side.
[Fig. 30] Fig. 30 is a plan view of a body frame and an airbag control device as viewed from above.
[Fig. 31] Fig. 31 is a view of a peripheral portion of an inner cover according to an eleventh embodiment as viewed from a rear side.
[Fig. 32] Fig. 32 is a plan view of a body frame and an airbag control device as viewed from above.
[Fig. 33] Fig. 33 is a view of a peripheral portion of an inner cover according to a twelfth embodiment as viewed from a rear side.
[Fig. 34] Fig. 34 is a plan view of a body frame and an airbag control device as viewed from above.
[Fig. 35] Fig. 35 is a left side view of a body frame according to a thirteenth embodiment.
[Fig. 36] Fig. 36 is a plan view of the body frame as viewed from above.
[Fig. 37] Fig. 37 is a left side view of a body frame according to a fourteenth embodiment.
[Fig. 38] Fig. 38 is a plan view of the body frame as viewed from above.
[Fig. 39] Fig. 39 is a left side view of a motorcycle according to a fifteenth embodiment of the present invention.
[Fig. 40] Fig. 40 is a left side view of a body frame.
[Fig. 41] Fig. 41 is a plan view of the body frame as viewed from above.
[Fig. 42] Fig. 42 is a block diagram showing a control configuration of the motorcycle.
[Fig. 43] Fig. 43 is a view of a peripheral portion of an inner cover as viewed from a rear side.
[Fig. 44] Fig. 44 is a front view of an airbag unit as viewed from the rear side.
[Fig. 45] Fig. 45 is a left side view of the airbag unit.
[Fig. 46] Fig. 46 is a view of a peripheral portion of an inner cover according to a sixteenth embodiment as viewed from a rear side.
[Fig. 47] Fig. 47 is a plan view of a body frame and an airbag control device as viewed from above.
[Fig. 48] Fig. 48 is a view of a peripheral portion of an inner cover according to seventeenth embodiment as viewed from a rear side.
[Fig. 49] Fig. 49 is a plan view of a body frame and an airbag control device as viewed from above.
[Fig. 50] Fig. 50 is a view of a peripheral portion of an inner cover according to an eighteenth embodiment as viewed from a rear side.
[Fig. 51] Fig. 51 is a plan view of a body frame and an airbag control device as viewed from above.
[Fig. 52] Fig. 52 is a left side view of a body frame according to a nineteenth embodiment.
[Fig. 53] Fig. 53 is a plan view of the body frame as viewed from above.
[Fig. 54] Fig. 54 is a left side view of a body frame according to a twentieth embodiment.
[Fig. 55] Fig. 55 is a plan view of the body frame as viewed from above.
[Fig. 56] Fig. 56 is a left side view of a body frame according to a twenty-first embodiment.
[Fig. 57] Fig. 57 is a plan view of the body frame as viewed from above.
[Fig. 58] Fig. 58 is a left side view of a body frame according to a twenty-second embodiment.
[Fig. 59] Fig. 59 is a plan view of the body frame as viewed from above.

### [Description of Embodiments]

Embodiments of the present invention will be described below with reference to the accompanying drawings. In the description, directions of front, rear, left, right, up and down are the same as directions with respect to a vehicle body unless otherwise specified. Further, in each drawing, reference numeral FR denotes a front side of the vehicle body, reference numeral UP denotes an upper side of the vehicle body, and reference numeral LH denotes a left side of the vehicle body.

### [First Embodiment]

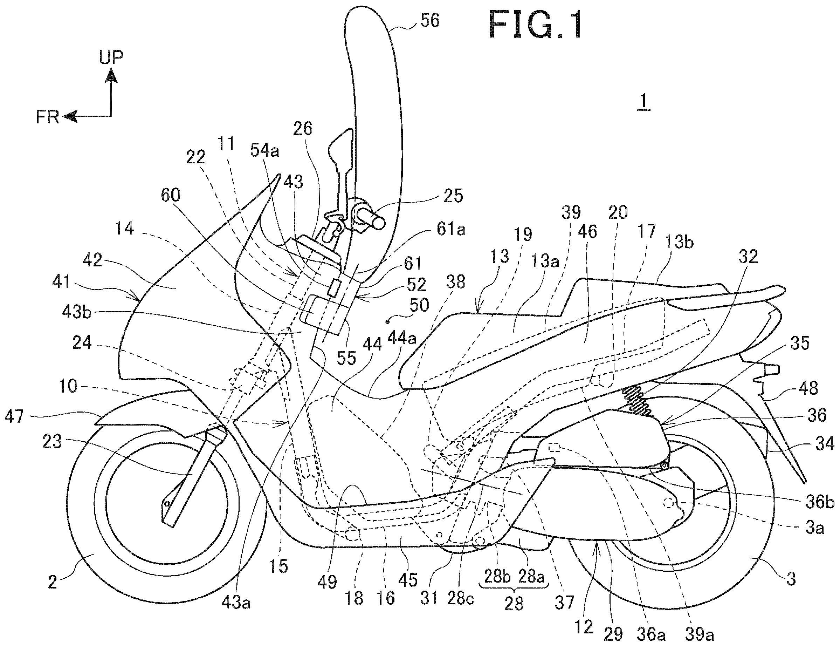

Fig. 1 is a left side view of a motorcycle 1 according to a first embodiment of the present invention. Fig. 1 shows a state in which an airbag 56 to be described below is inflated and deployed.

The motorcycle 1 is a scooter-type saddled vehicle including a body frame 10, a steering system 11 that steerably supports a front wheel 2, a power unit 12 (engine) that is supported by a rear part of the body frame 10, a rear wheel 3, and a seat 13 on which an occupant sits astride.

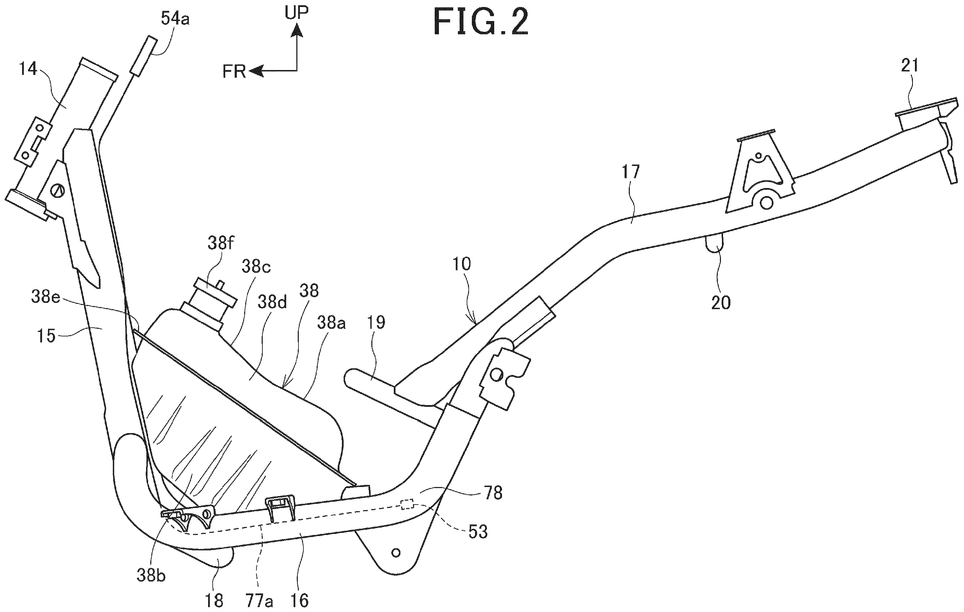

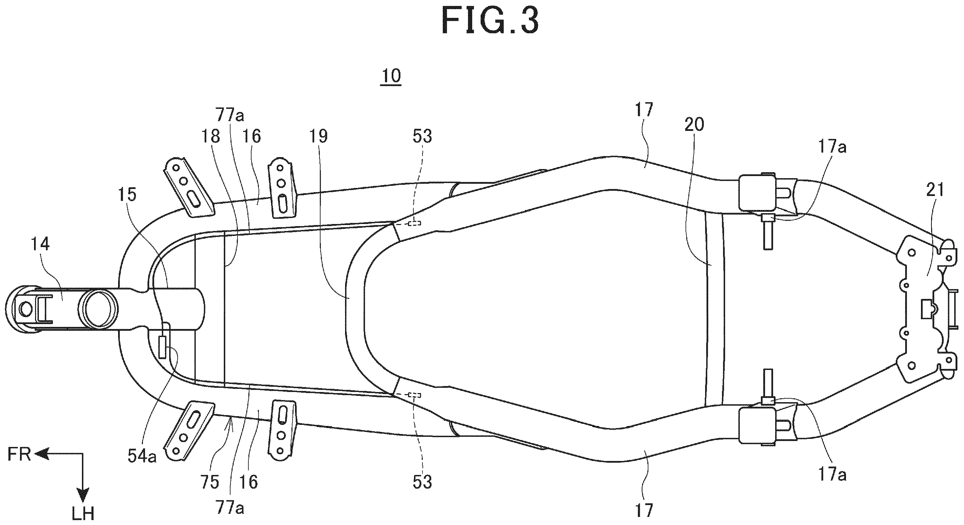

Fig. 2 is left side view of the body frame 10. Fig. 3 is a plan view of the body frame 10 as viewed from above. In Fig. 2, a fuel tank 38 (which will be described below) is shown together with the body frame 10. In Figs. 2 and 3, an airbag control device 54a, an acceleration sensor 53, and an electric wire 77a (all of which will be described below) are shown together with the body frame 10.

Referring to Figs. 1 to 3, the body frame 10 includes a head pipe 14 provided at a front end of the body frame 10, one down frame 15 extending rearward and downward from the head pipe 14, a pair of left and right lower frames 16 extending rearward from a lower part of the down frame 15, and a pair of left and right seat frames 17 extending rearward so as to rise rearward from rear ends of the lower frames 16.

The head pipe 14 is disposed at a center of a vehicle width.

The left and right lower frames 16 extend outward in a vehicle width direction from left and right side surfaces of the lower part of the down frame 15, respectively, and then bend and extend rearward. The lower end of the down frame 15 is located between the left and right lower frames 16.

In addition, the body frame 10 includes a first cross frame 18 configured to couple front parts of the left and right lower frames 16 to each other in the vehicle width direction, a second cross frame 19 configured to couple front parts of the left and right seat frames 17 to each other in the vehicle width direction, a third cross frame 20 (cross frame) configured to couple rear parts of the left and right seat frames 17 to each other in the vehicle width direction, and a fourth cross frame 21 configured to couple rear ends of the left and right seat frame 17 to each other in the vehicle width direction.

The lower end of the down frame 15 is connected to an intermediate part of the first cross frame 18 in the vehicle width direction.

The steering system 11 includes a steering shaft 22 pivotally supported by the head pipe 14, a pair of left and right front forks 23 disposed on both left and right sides of the front wheel 2 to support the front wheel 2, a bridge member 24 fixed to the lower end of the steering shaft 22 and configured to couple upper parts of the left and right front forks 23 to each other, and a handle 25 fixed to the upper end of the steering shaft 22. The handle 25 is connected to the steering shaft 22 through a handle post 26 fixed to the upper end of the steering shaft 22.

In a side view of the vehicle, the head pipe 14 is inclined rearward in a vertical direction by a predetermined caster angle set for the motorcycle 1. The steering shaft 22 is pivotally supported in a state of being inserted into the head pipe 14 and is disposed to be inclined rearward as viewed from the side of the vehicle. The steering shaft 22 is located at the center of the vehicle width.

The power unit 12 is a unit swing-type engine in which an engine body 28 serving as an internal combustion engine is formed integrally with an arm portion 29 configured to support the rear wheel 3.

The engine body 28 includes a crank case 28a housing a crank shaft (not shown) and a cylinder portion 28b extending forward from the crank case 28a. A piston (not shown) reciprocates in the cylinder portion 28b.

The engine body 28 is a horizontal engine in which a cylinder axis 28c of the cylinder portion 28b extends substantially horizontally in a vehicle front-rear direction. Specifically, the cylinder portion 28b extends substantially in a horizontal direction toward the front of the vehicle so as to slightly rise forward as viewed from the side of the vehicle.

The arm portion 29 extends from one side (left side) of the crank case 28a in the vehicle width direction to one side (left side) of the rear wheel 3.

A sub-arm (not shown) is attached to the other side (right side) of the crank case 28a in the vehicle width direction to extend to the other side (right side) of the rear wheel 3. The rear wheel 3 is pivotally supported by a rear wheel axle 3a that is suspended between a rear end of the arm portion 29 and the sub-arm.

A belt-type continuously variable transmission (not shown), a centrifugal clutch mechanism (not shown), and a reduction mechanism (not shown) formed by a plurality of gears are provided in the hollow arm portion 29.

A driving force of the engine body 28 is transmitted to the rear wheel 3 through the belt-type continuously variable transmission, the clutch mechanism, and the reduction mechanism.

The power unit 12 is swingably supported by the body frame 10 through a link mechanism 31.

One end of the link mechanism 31 is coupled to a front lower part of the crank case 28a, and the other end of the link mechanism 31 is coupled to a rear part of the lower frame 16.

A pair of rear suspensions 32 are suspended between the rear end of the arm portion 29 and the rear part of the seat frame 17 and between the sub-arm and the rear part of the seat frame 17.

Suspension coupling portions 17a, to which an upper end of the rear suspension 32 is coupled, are provided at the rear parts of the left and right seat frames 17, respectively. The suspension coupling portions 17a are provided on an inside surface of the seat frame 17 in the vehicle width direction behind the third cross frame 20.

An exhaust pipe (not shown) of the engine body 28 is pulled downward from an exhaust port on a lower surface of the cylinder portion 28b, and is connected to a muffler 34 disposed on the right side of the rear wheel 3 by extending rearward through the other side (right side) in the vehicle width direction.

The motorcycle 1 includes an intake device 35 that supplies intake air for combustion to the cylinder portion 28b of the engine body 28.

The intake device 35 includes an air cleaner box 36 that takes in outside air and purifies the outside air and a throttle body 37 that supplies the outside air purified by the air cleaner box 36 to the cylinder portion 28b as intake air.

The air cleaner box 36 includes an intake port 36a through which the outside air taken into the air cleaner box 36 passes.

The air cleaner box 36 is attached to the upper part of the arm portion 29 of the power unit 12 and is disposed on one side (left side) of the rear wheel 3. The air cleaner box 36 extends in the vehicle front-rear direction along the arm portion 29. The air cleaner box 36 swings integrally with the power unit 12. The intake port 36a is located above the arm portion 29 and below the seat frame 17.

The throttle body 37 is disposed in front of the air cleaner box 36 and above the cylinder portion 28b, and is connected to an intake port on the upper surface of the cylinder portion 28b.

The fuel tank 38 is disposed behind the down frame 15 and above the lower frame 16, and is fixed to the down frame 15 and the lower frame 16. The fuel tank 38 is disposed in front of the front end of the seat frame 17.

A lower end of the fuel tank 38 is located between the left and right lower frames 16.

The fuel tank 38 is formed into a hollow tank shape in which an upper half body 38a and a lower half body 38b divided into upper and lower parts join to each other.

The upper half body 38a includes an upper surface 38c and a peripheral surface 38d extending downward from a peripheral edge of the upper surface 38c. The upper half body 38a is configured in which a flange 38e extending outward from a lower edge of the peripheral surface 38d joins to a flange of an upper edge of the lower half body 38b.

The upper surface 38c of the fuel tank 38 is inclined so as to descend rearward as a whole as viewed from the side of the vehicle. The upper surface 38c and the flange 38e are substantially parallel to each other.

The fuel tank 38 includes a tubular oil filler port 38f that is erected upward from the upper surface 38c. The oil filler port 38f is disposed at the center of the vehicle width at the front end of the upper surface 38c. The oil filler port 38f is provided to be substantially orthogonal to the upper surface 38c that descends rearward, and is inclined so as to rise rearward as viewed from the side of the vehicle.

A housing box 39 capable of housing an article such as a helmet is provided between the left and right seat frames 17. The housing box 39 is supported by the seat frame 17 and is located above the power unit 12.

The seat 13 covers an opening on an upper surface of the housing box 39 in an openable/closable manner. The seat 13 is supported by the left and right seat frames 17 through the housing box 39.

The seat 13 integrally includes a front seat 13a on which a rider sits and a rear seat 13b on which a fellow passenger sits.

The motorcycle 1 includes a body cover 41 that covers the vehicle body, for example, the body frame 10.

The body cover 41 includes a front cover 42 that covers upper parts of the head pipe 14 and the steering system 11 from a front and left and right sides and an inner cover 43 that is continuous with a rear edge of the front cover 42 and covers the upper parts of the head pipe 14 and the steering system 11 from a rear side.

In addition, the body cover 41 includes a center cover 44 that covers a part of the vehicle body located at a front lower side of the front seat 13a, from above and the left and right side, an undercover 45 that covers the lower frame 16 from below, and a rear side cover 46 located below the seat 13 to cover the seat frame 17 and the housing box 39 from sides.

The motorcycle 1 includes a front fender 47 and a rear fender 48.

A front part of the center cover 44 is continuous with a lower part of the inner cover 43. An upper edge 44a of the center cover 44 is located below the front seat 13a. The center cover 44 covers the fuel tank 38 from above and the left and right sides.

Step floors 49, on which the rider puts his/her feet, are provided on outer sides of left and right lower edges of the center cover 44, respectively.

As viewed from the side of the vehicle, a straddling space 50 recessed downward is defined by a rear surface of the inner cover 43, the upper edge 44a of the center cover 44, and a front surface of the front seat 13a. The occupant can straddle the motorcycle 1 through the straddling space 50 when getting on and off the motorcycle 1.

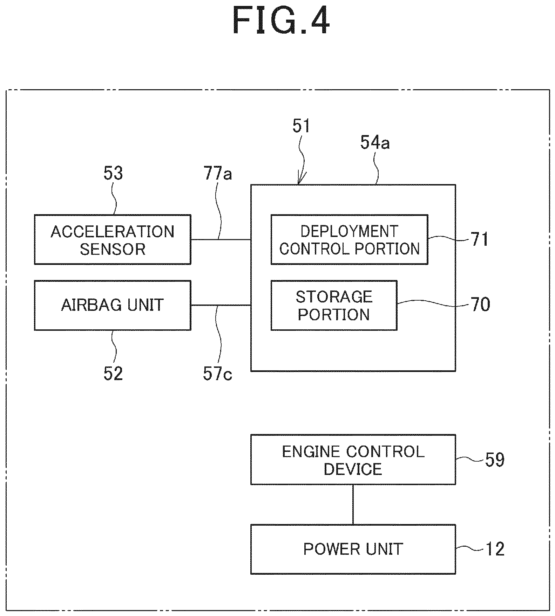

Fig. 4 is a block diagram showing a control configuration of the motorcycle 1.

The motorcycle 1 includes an engine control device 59 that controls an operation of the power unit 12 and an airbag device 51 that protects the occupant from an impact.

The airbag device 51 includes an airbag unit 52, an acceleration sensor 53 that detects an impact applied to the motorcycle 1, and an airbag control device 54a that controls an operation of the airbag unit 52 based on the detection result of the acceleration sensor 53.

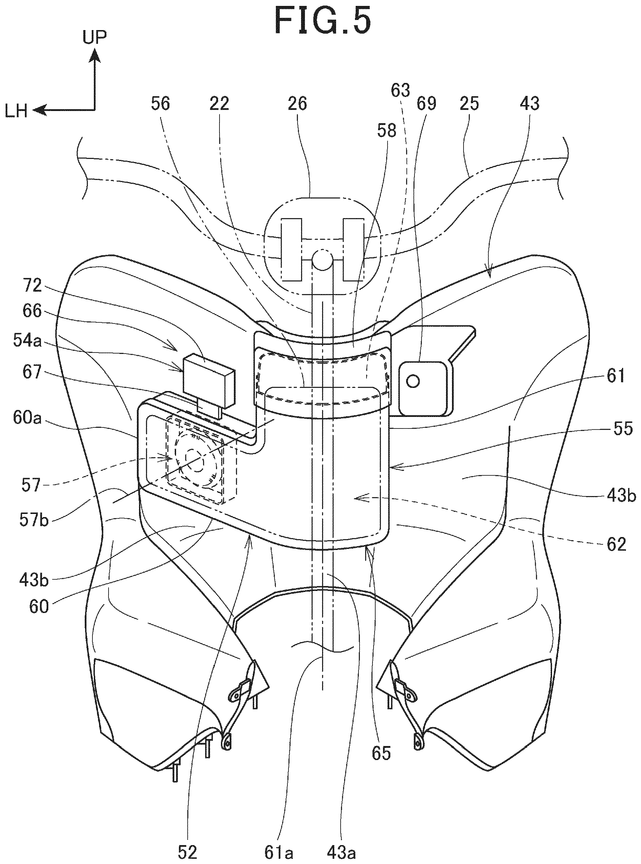

Fig. 5 is a view showing peripheral portions of the inner cover 43 as viewed from the rear side.

Referring to Figs. 1 and 5, the airbag unit 52 is provided on the rear surface of the inner cover 43 and is located in front of the rider seated on the front seat 13a. Further, the airbag unit 52 is provided below the handle 25 on a rear side of the steering shaft 22, and is located at a front part of the straddling space 50.

The rear surface of the inner cover 43 is provided substantially parallel to the head pipe 14 and the steering shaft 22 as viewed from the side of the vehicle, and is inclined rearward along the steering shaft 22.

Further, as shown in Figs. 1 and 5, a central portion 43a in the vehicle width direction located behind the steering shaft 22 is located at a rearmost position on an upper part of the rear surface of the inner cover 43, and side portions 43b located respectively at left and right sides of the central portion 43a are inclined to be located on a front side as approaching the outside in the vehicle width direction.

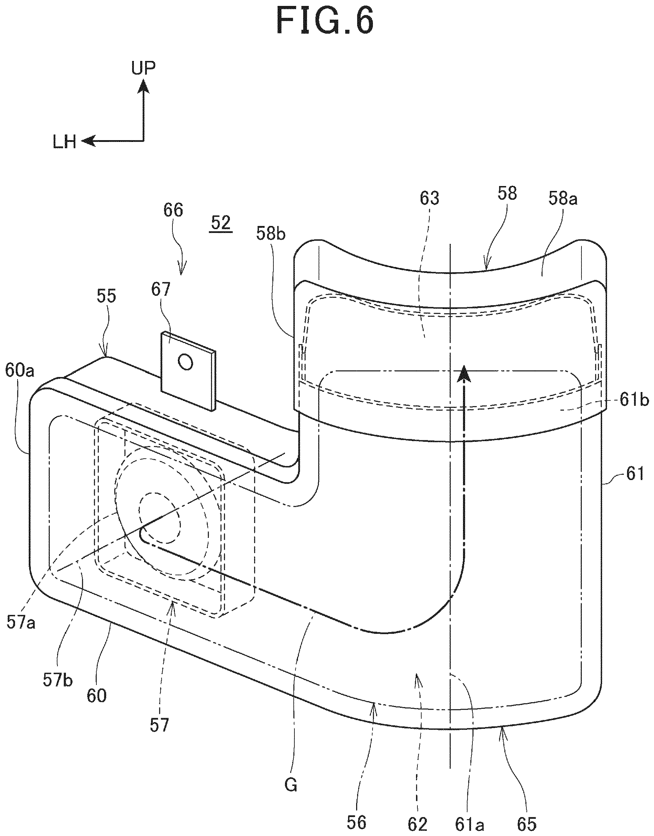

Fig. 6 is a front view of the airbag unit 52 as viewed from a rear side (rider side).

The airbag unit 52 includes a box-shaped retainer 55 provided in front of the occupant seated on the seat 13, an airbag 56 housed in the retainer 55, an inflator 57 that release gas into the airbag 56, and a lid member 58 attached to an upper part of the retainer 55.

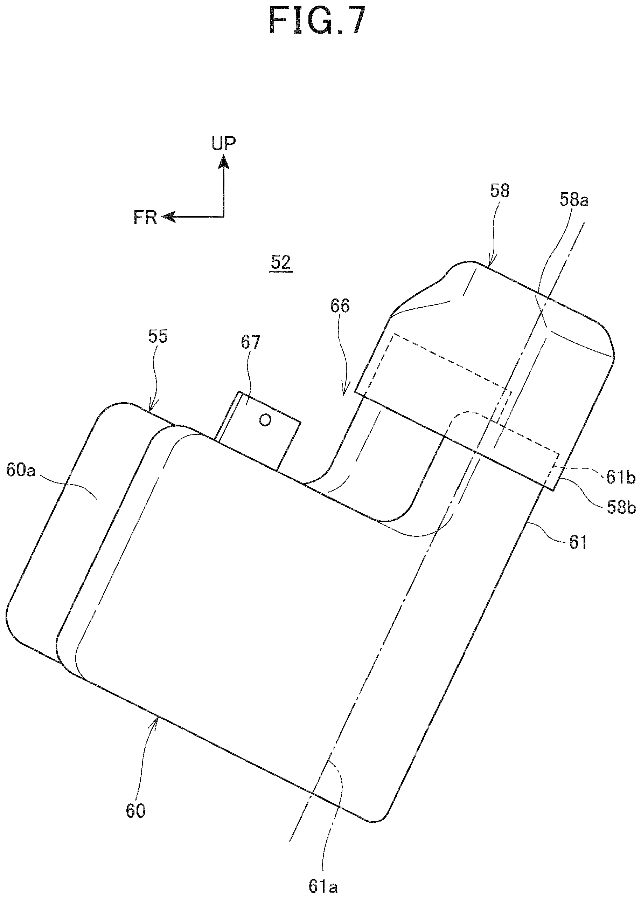

Fig. 7 is a left side view of the airbag unit 52.

Referring to Figs. 5 to 7, the retainer 55 is a box-shaped member formed in an inverted L shape as viewed from the occupant side (rear side). In the following description, an L-shape means an L-shape when the retainer 55 is viewed from the front or the rear. The retainer 55 has an inverted L shape as viewed from the rear, but it can be said that the retainer 55 is formed in an L-shape.

The retainer 55 is located in front of the front seat 13a, and faces the front surface of the front seat 13a.

The retainer 55 includes a left and right extending portion 60 extending in the left-right direction (vehicle width direction) and an upward extending portion 61 extending upward from the left and right extending portion 60.

The left and right extending portion 60 is a box-shaped portion extending in the vehicle width direction. An outer end 60a of the left and right extending portion 60 in the vehicle width direction is located outside in the vehicle width direction from the steering shaft 22 located at the center in the vehicle width. The left and right extending portion 60 extends from the outer end 60a toward the center of the vehicle width along a rear surface of the side portion 43b of the inner cover 43.

The upward extending portion 61 is a box-shaped portion extending in an up-down direction along the steering shaft 22, and is inclined rearward as viewed from the side of the vehicle. The upward extending portion 61 is located at the center of the vehicle width, and covers the central portion 43a of the inner cover 43 from the rear.

A center line 61a of the upward extending portion 61 extending in the up-down direction through a center of the upward extending portion 61 is provided behind the steering shaft 22 to be substantially parallel to the steering shaft 22, and is inclined rearward. The center line 61a is located at the center of the vehicle width.

An inner end of the left and right extending portion 60 in the vehicle width direction is connected to a lower outside surface of the upward extending portion 61. In other words, the upward extending portion 61 extends upward from the inner end of the left and right extending portion 60, and thus the retainer 55 is formed in an L-shape. An L-shaped airbag passage 62 is formed inside the retainer 55, the airbag passage being formed by an internal space of the left and right extending portion 60 and an internal space of the upward extending portion 61.

An upper surface opening 63 is formed on an upper surface of the upward extending portion 61, and thus the airbag passage 62 is exposed upward. The airbag 56 is deployed upward from the upper surface opening 63. An opening surface of the upper surface opening 63 is substantially orthogonal to the center line 61a of the upward extending portion 61. The upper surface opening 63 is closed by the lid member 58.

Referring to Figs. 3 to 6, the lid member 58 includes integrally a lid-upper surface 58a that covers the upper surface opening 63 from above and a lid-peripheral wall portion 58b that fits into a peripheral wall portion 61b of the upper end of the upward extending portion 61.

The lid member 58 is attached to the retainer 55 in such a manner that an inner peripheral surface of the lid-peripheral wall portion 58b is fitted into an outer peripheral surface of the peripheral wall portion 61b.

Referring to Figs. 5 and 6, the inflator 57 is provided in the airbag passage 62, and is located at an upstream end of a deployment path of the airbag 56 in the airbag passage 62.

Specifically, the inflator 57 is provided closer to the outer end 60a (Fig. 5) in the left and right extending portion 60, and is disposed to be offset in the left-right direction (left side) relative to the steering shaft 22 located at the center of the vehicle width. The inflator 57 is fixed to an inner surface of a front surface part of the left and right extending portion 60.

The inflator 57 includes a housing 57a formed in a cylindrical shape (tubular shape). Inside the housing 57a, a gas generating agent and an initiator for initiating a reaction for generating a gas in the gas generating agent are provided. The initiator includes an ignition device.

The inflator 57 is disposed such that an axis 57b of the housing 57a is directed in the front-rear direction of the vehicle. Since the axis 57b is directed in the front-rear direction of the vehicle in this way, even when the inflator 57 has a large diameter, a space occupied by the inflator 57 in the front-rear direction of the vehicle can be reduced, and the inflator 57 can be compactly provided in the front-rear direction.

As shown in Figs. 5 and 6, the airbag 56 is housed in the L-shaped airbag passage 62, and is provided from the left and right extending portion 60 to the upward extending portion 61. The airbag passage 62 is an airbag housing space.

The airbag 56 is configured in which the upstream end of the airbag 56 in the flow of gas is connected to the inflator 57 in the left and right extending portion 60.

Referring to Fig. 4, the acceleration sensor 53 and the airbag unit 52 are electrically connected to the airbag control device 54a.

The acceleration sensor 53 is connected to the airbag control device 54a by the electric wire 77a.

The airbag control device 54a determines, based on acceleration detected by the acceleration sensor 53, whether the airbag unit 52 is activated.

The airbag control device 54a is connected to the inflator 57 of the airbag unit 52 by wiring 57c (Fig. 4).

When causing the airbag unit 52 to operate, the airbag control device 54a causes the inflator 57 to operate and release the gas into the airbag 56. The airbag 56 inflates due to a pressure of the gas, and deploys upward.

The airbag control device 54a is an ECU (Electronic Control Unit) including an arithmetic operation portion (not shown), a storage portion 70, and a deployment control portion 71. The arithmetic operation portion is a processor such as a CPU. The airbag control device 54a executes a program stored in the storage portion 70 to control an operation of the airbag unit 52.

The storage portion 70 includes a non-volatile storage device such as flash ROM or an EEPROM, and stores the program to be executed by the arithmetic operation portion and data to be processed by the arithmetic operation portion.

The deployment control portion 71 causes the inflator 57 to operate based on a detection result of the acceleration sensor 53, and controls deployment timing of the airbag 56. The deployment control portion 71 is formed by cooperation of software with hardware when the arithmetic operation portion executes the program.

The storage portion 70 stores an operation record of the deployment of the airbag 56 in the non-volatile storage device. The operation record of the deployment of the airbag 56 indicates, for example, the detection value of the acceleration sensor 53 and the deployment timing of the airbag 56. Therefore, a worker can acquire, for example, the operation record of the deployment of the airbag 56 at the time of collision of the motorcycle 1 from the storage portion 70.

The engine control device 59 is an ECU that electrically controls ignition and fuel supply of the power unit 12. The engine control device 59 and the airbag control device 54a are provided separately from each other. The engine control device 59 and the airbag control device 54a are not connected to each other, and operate independently of each other.

A flow of gas G released from the inflator 57 will be described below.

As shown in Fig. 6, the inflator 57 releases the gas G into the airbag 56 toward the rear of the vehicle along the axis 57b.

The gas G released from the inflator 57 into the airbag 56 is guided in its path by the left and right extending portion 60 and the upward extending portion 61, and flows in an L-shape in the airbag passage 62.

When the gas G flows from the left and right extending portion 60 to the upward extending portion 61, the flow of the gas in the left-right direction changes to an upward flow, and the gas flows upward in the upward extending portion 61. In other words, the left and right extending portion 60 and the upward extending portion 61 form a deflection portion 65 that deflects the overall flow of the gas G in the left-right direction toward the upward flow.

When the airbag 56 inflates upward due to the gas G flowing upward in the upward extending portion 61, the lid member 58 is pushed by the airbag 56 and is cleaved. The airbag 56 deploys upward from the upper surface opening 63 due to the gas G flowing upward.

As shown in Fig. 5, the airbag control device 54a is configured in which a circuit portion such as a CPU is housed in a box-shaped case 72. The engine control device 59 (Fig. 4) is housed in a case provided separately from the case 72 of the airbag control device 54a. For this reason, each of the airbag control device 54a and the engine control device 59 can be made smaller, and can be easily disposed at a desired location.

As shown in Fig. 5, at the rear of the inner cover 43, the airbag control device 54a is disposed above the left and right extending portion 60 and on the side of the upward extending portion 61 of the retainer 55. In other words, the airbag control device 54a is disposed in a space portion 66 sandwiched between the left and right extending portion 60 and the upward extending portion 61.

The retainer 55 includes a stay 67 extending upward from the left and right extending portion 60, and the airbag control device 54a is supported by the stay 67. The stay configured to support the airbag control device 54a may extend laterally from the upward extending portion 61.

Specifically, the airbag control device 54a is disposed inward in the vehicle width direction from the outer end 60a in the vehicle width direction of the left and right extending portion 60 and below the upper surface opening 63 located at the upper end of the upward extending portion 61. In this way, since the airbag control device 54a is disposed in the space portion 66 defined by the left and right extending portion 60 and the upward extending portion 61 of the L-shaped retainer, the airbag control device 54a can be compactly disposed.

The space portion 66 is located directly above the inflator 57. Therefore, the airbag control device 54a can be disposed near the inflator 57, and the airbag control device 54a can be connected to the inflator 57 with a short wiring.

As shown in Fig. 3, the airbag control device 54a is disposed behind the front ends of the head pipe 14 and the lower frame 16 as viewed from the top of the vehicle. Further, the airbag control device 54a is disposed between the left and right lower frames 16 in the vehicle width direction as viewed from the top of the vehicle.

The body frame 10 includes a frame-shaped frame portion 75 that is formed by the head pipe 14, the down frame 15, the left and right lower frames 16, the left and right seat frames 17, and the fourth cross frame 21 and is long in the front-rear direction as viewed from the top of the vehicle.

The airbag control device 54a is disposed inside a region surrounded by the frame-shaped frame portion 75 as viewed from the top of the vehicle. Thus, even when a large impact acts on the motorcycle 1 due to a collision, the airbag control device 54a can be effectively protected by the frame-shaped frame portion 75. Therefore, the airbag control device 54a can appropriately deploy the airbag 56 at the time of collision of the motorcycle 1, and the worker can acquire the operation record of the airbag 56 from the storage portion 70 of the airbag control device 54a after the collision.

As shown in Fig. 1, the airbag control device 54a is disposed above the lower end 36b of the air cleaner box 36. The lower end 36b of the air cleaner box 36 is a lower end of the intake device 35, and is located below the intake port 36a.

In a case where the motorcycle 1 runs on a puddle, when a water depth of the puddle is deeper than a height of the lower end 36b of the air cleaner box 36, water may enter the air cleaner box 36, so that the motorcycle 1 does not run. In other words, since the motorcycle 1 is configured in which the airbag control device 54a is located higher than the height of the lower end 36b of the air cleaner box 36, the airbag control device 54a can be prevented from being immersed in the puddle during running of the motorcycle 1.

Further, the airbag control device 54a is disposed above the intake port 36a of the air cleaner box 36. When the water depth of the puddle is deeper than the height of the intake port 36a of the air cleaner box 36, there is a high possibility that water will enter the air cleaner box 36 from the intake port 36a, so that the motorcycle 1 does not run. In other words, since the motorcycle 1 is configured in which the airbag control device 54a is located higher than the height of the intake port 36a, the airbag control device 54a can be prevented from being immersed in the puddle during running of the motorcycle 1.

As shown in Figs. 2 and 3, the pair of acceleration sensors 53 are provided at left and right rear sides of the left and right lower frames 16.

Specifically, the acceleration sensor 53 is disposed at a connection portion 78 to which the rear end of the lower frame 16 and the lower end of the seat frame 17 are connected. The connection portion 78 is a bent portion in which a part extending rearward in the body frame 10 is bent rearward and upward.

The acceleration sensor 53 is fixed inside surfaces of the pair of left and right connection portions 78 in the vehicle width direction. In other words, the acceleration sensor 53 is covered with the connection portions 78 from the outside in the vehicle width direction.

The acceleration sensor 53 may be disposed at a position on the inside surface of the lower frame 16 in front of the connection portion 78. For example, the acceleration sensor 53 may be disposed on the inside surface of the front end of the lower frame 16.

The electric wire 77a is disposed along the body frame 10 to connect the acceleration sensor 53 and the airbag control device 54a.

Specifically, the electric wire 77a extends downward along the head pipe 14 and the rear surface of the down frame 15 from the airbag control device 54a disposed on the rear side of the head pipe 14.

The pair of electric wires 77a extending along the rear surface of the down frame 15 are bent rearward at the lower end of the down frame 15, extend rearward along the inside surfaces in the vehicle width direction of the left and right lower frames 16, and are connected to the left and right acceleration sensors 53, respectively. The electric wire 77a is supported by the lower frame 16 through a fixture provided on the lower frame 16.

In this way, the electric wire 77a is covered from the front by the down frame 15 and is covered from the outside in the vehicle width direction by the lower frame 16 at the same time. For this reason, the down frame 15 and the lower frame 16 can protect the electric wire 77a from the impact applied from the outside.

In addition, since the acceleration sensor 53 is covered with the connection portion 78 from the outside in the vehicle width direction, the connection portion 78 can protect the acceleration sensor 53 from the impact applied from the outside in the vehicle width direction. The connection portion 78 is a portion where the lower frame 16 and the seat frame 17 are connected to each other and has high rigidity, thereby capable of effectively protect the acceleration sensor 53.

Further, the acceleration sensor 53 is provided on the rear end side of the lower frame 16 in front of the power unit 12, and thus is close to the position of the center of gravity of the motorcycle 1 in the vehicle front-rear direction. Therefore, the acceleration sensor 53 can satisfactorily detect the acceleration when the motorcycle 1 collides.

As shown in Fig. 5, a main switch 69 configured to perform switching between on and off of power of the motorcycle 1 is provided on a side opposite to the airbag control device 54a with the upward extending portion 61 of the retainer 55 interposed therebetween. The main switch 69 is provided to be embedded in the side portion 43b of the inner cover 43.

As described above, according to the first embodiment to which the present invention is applied, the motorcycle 1 including the power unit 12, the body frame 10, the retainer 55, the inflator 57, and the airbag 56 that is housed in the retainer 55, inflates by the gas released from the inflator 57, and deploys to the outside of the retainer 55 includes: the airbag control device 54a that is provided separately from the engine control device 59 configured to control the power unit 12 and controls the deployment timing of the airbag 56; and the intake device 35 that supplies the taken-in outside air to the power unit 12 as intake air, the airbag control device 54a being disposed above the lower end 36b of the intake device 35 and being disposed inside the region surrounded by the body frame 10 as viewed from the top of the vehicle.

According to such a configuration, since the airbag control device 54a is disposed inside the region surrounded by the body frame 10 as viewed from the top of the vehicle, the airbag control device 54a is effectively protected from the impact by the body frame 10. Further, the airbag control device 54a is disposed above the lower end 36b of the intake device 35, and thus is hardly affected by water.

Further, the retainer 55 includes the left and right extending portion 60 extending to the left and right and the upward extending portion 61 extending upward from the end of the left and right extending portion 60 and is provided in the L-shape, and the airbag control device 54a is disposed above the left and right extending portion 60 and on the side of the upward extending portion 61.

According to such a configuration, the airbag control device 54a can be compactly disposed using the space above the left and right extending portion 60 and on the side of the upward extending portion 61 in the L-shaped retainer 55.

In addition, the inflator 57 is provided in the retainer 55, and the airbag control device 54a is connected to the inflator 57 and is fixed to the retainer 55.

According to such a configuration, since the airbag control device 54a can be firmly fixed to the retainer 55, the airbag control device 54a can be satisfactorily connected to the inflator 57, and the airbag 56 can appropriately deploy.

Further, the power unit 12 is a unit swing engine that is swingably supported by the body frame 10 and supports the rear wheel 3, and the intake device 35 is fixed to the unit swing engine.

According to such a configuration, in the motorcycle 1 in which the intake device 35 is fixed to the unit swing engine, it is possible to effectively prevent the influence of water on the airbag control device 54a.

The airbag control device 54a includes the storage portion 70 that holds the operation record of the airbag 56 even after the airbag 56 deploys.

According to such a configuration, since the airbag control device 54a is disposed inside the region surrounded by the body frame 10, the operation record of the airbag 56 can be acquired from the storage portion 70 even after the airbag 56 deploys.

Further, the airbag control device 54a controls the deployment timing of the airbag 56 based on the detection value of the acceleration sensor 53, and the electric wire 77a configured to connect the acceleration sensor 53 and the airbag control device 54a to each other is arranged along the inside surface of the body frame 10 in the vehicle width direction.

According to such a configuration, the electric wire 77a configured to connect the acceleration sensor 53 and the airbag control device 54a to each other can be effectively protected by the body frame 10.

Further, the body frame 10 includes the down frame 15 extending downward from the head pipe 14 located at the front end of the body frame 10, the lower frame 16 extending rearward from the down frame 15, and the seat frame 17 extending rearward and upward from the rear end of the lower frame 16, the power unit 12 is disposed behind the seat frame 17, and the acceleration sensor 53 is disposed on the inside surface of the connection portion 78 between the lower frame 16 and the seat frame 17 in the vehicle width direction.

According to such a configuration, the acceleration sensor 53 can be disposed near the position of the center of gravity of the motorcycle 1 and can satisfactorily detect the acceleration. In addition, the acceleration sensor 53 can be effectively protected by the connection portion 78 between the lower frame 16 and the seat frame 17.

### [Second Embodiment]

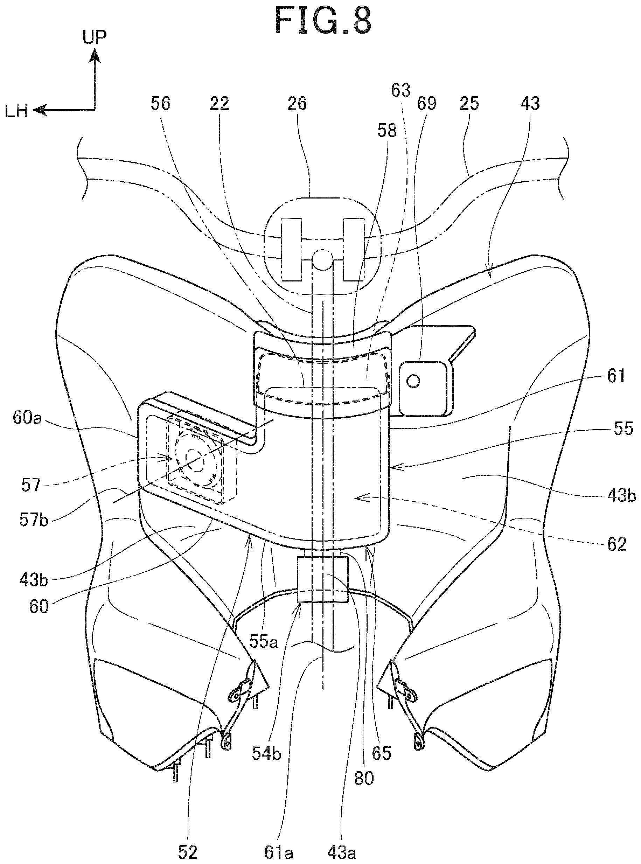

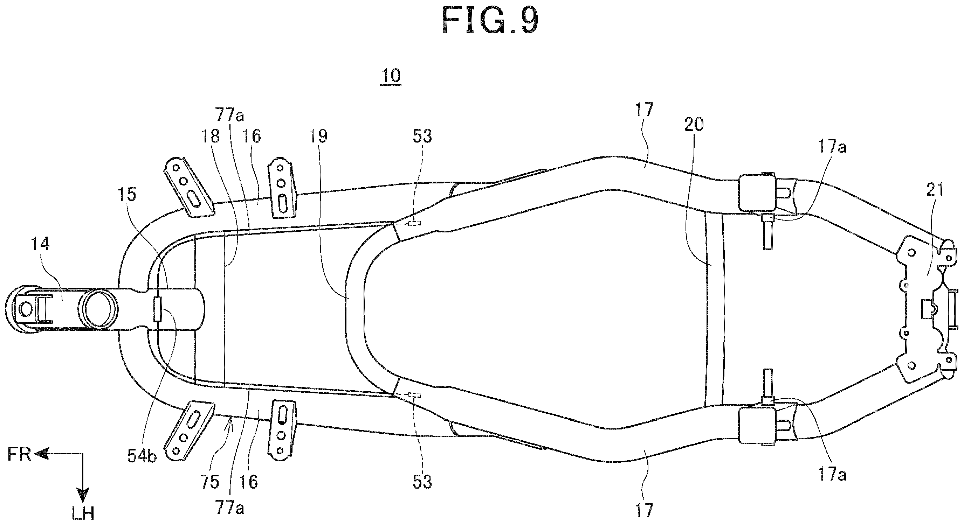

A second not claimed embodiment to which the present invention is applied will be described below with reference to Figs. 8 and 9. In the second not claimed embodiment, the same components as those in the first embodiment are denoted by the same reference numerals and will not be described.

The second not claimed embodiment is different from the first embodiment in terms of a position where an airbag control device 54b is disposed.

Fig. 8 is a view of a peripheral portion of an inner cover 43 according to the second not claimed embodiment as viewed from the rear. Fig. 9 is a plan view of the body frame 10 and the airbag control device 54b as viewed from above. The airbag control device 54b is configured in the same manner as the airbag control device 54a of the first embodiment, and is connected to an inflator 57.

The airbag control device 54b is disposed below the retainer 55 to be adjacent to a lower surface 55a of the retainer 55, and is located behind the inner cover 43.

The retainer 55 includes a stay 80 extending downward from the retainer 55, and the airbag control device 54b is supported by the stay 80.

Specifically, the airbag control device 54b is located at the center of the vehicle width, and overlaps the head pipe 14 from the rear.

As shown in Fig. 9, the airbag control device 54b is disposed behind the front end of the lower frame 16 and the head pipe 14 as viewed from the top of the vehicle. Further, the airbag control device 54b is disposed between the left and right lower frames 16 in the vehicle width direction as viewed from the top of the vehicle.

In other words, the airbag control device 54b is disposed inside a region surrounded by the frame-shaped frame portion 75 as viewed from the top of the vehicle. Therefore, the airbag control device 54b can be protected from an impact by the frame-shaped frame portion 75.

Referring to Figs. 1 and 8, the airbag control device 54b (not shown in Fig. 1) is disposed above the intake port 36a and the lower end 36b of the air cleaner box 36. Therefore, the airbag control device 54b can be prevented from being immersed in the puddle during running of the motorcycle 1.

The electric wires 77a extend along the rear surface of the down frame 15 and the inside surfaces of the left and right lower frames 16 in the vehicle width direction from the airbag control device 54b disposed on the rear side of the head pipe 14, and are connected to the left and right acceleration sensors 53, respectively.

As described above, according to the second not claimed embodiment to which the present invention is applied, the airbag control device 54b is disposed below the retainer 55 to be adjacent to the lower surface 55a of the retainer 55. According to such a configuration, the airbag control device 54b can be compactly disposed below the retainer 55 using the space adjacent to the lower surface 55a of the retainer 55.

Further, since the airbag control device 54b can be firmly fixed to the retainer 55, the airbag control device 54b can be satisfactorily connected to the inflator 57, and the airbag 56 can appropriately deploy.

### [Third Embodiment]

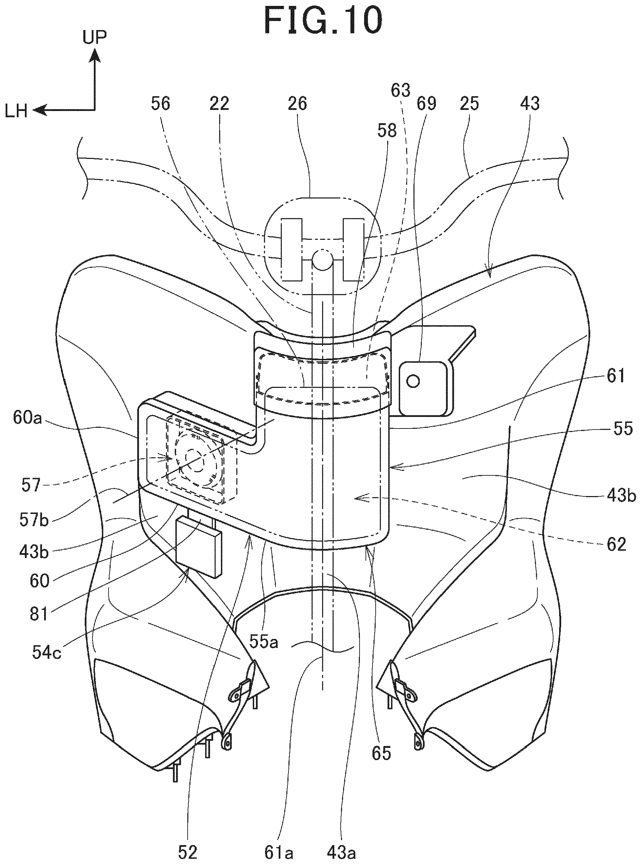

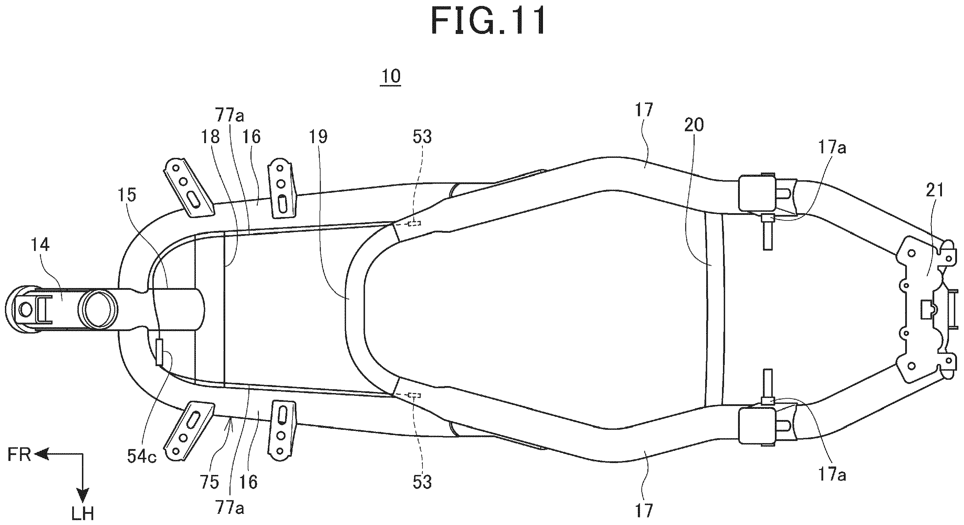

A third not claimed embodiment to which the present invention is applied will be described below with reference to Figs. 10 and 11. In the third not claimed embodiment, the same components as those in the first embodiment are denoted by the same reference numerals and will not be described.

The third not claimed embodiment is different from the first embodiment in terms of a position where an airbag control device 54c is disposed.

Fig. 10 is a view of a peripheral portion of an inner cover 43 according to the third not claimed embodiment as viewed from the rear. Fig. 11 is a plan view of the body frame 10 and the airbag control device 54c as viewed from above. The airbag control device 54c is configured in the same manner as the airbag control device 54a of the first embodiment, and is connected to an inflator 57.

The airbag control device 54c is disposed below the retainer 55 to be adjacent to a lower surface 55a of the retainer 55, and is located behind the inner cover 43.

The retainer 55 includes a stay 81 extending downward from the retainer 55, and the airbag control device 54c is supported by the stay 81.

Specifically, the airbag control device 54c is disposed at the center of the vehicle width in the vehicle width direction to be offset toward the inflator 57. At least a part of the airbag control device 54c is provided at the same position as the inflator 57 in the vehicle width direction. Therefore, the airbag control device 54c can be disposed near the inflator 57, and the airbag control device 54c can be connected to the inflator 57 with a short wiring.

As shown in Fig. 11, the airbag control device 54c is disposed behind the front end of the lower frame 16 and the head pipe 14 as viewed from the top of the vehicle. Further, the airbag control device 54c is disposed between the left and right lower frames 16 in the vehicle width direction as viewed from the top of the vehicle.

In other words, the airbag control device 54c is disposed inside a region surrounded by the frame-shaped frame portion 75 as viewed from the top of the vehicle. Therefore, the airbag control device 54c can be protected from an impact by the frame-shaped frame portion 75.

Referring to Figs. 1 and 10, the airbag control device 54c (not shown in Fig. 1) is disposed above the intake port 36a and the lower end 36b of the air cleaner box 36. Therefore, the airbag control device 54c can be prevented from being immersed in the puddle during running of the motorcycle 1.

The electric wires 77a extend along the rear surface of the down frame 15 and the inside surfaces of the left and right lower frames 16 in the vehicle width direction from the airbag control device 54c disposed on the rear side of the head pipe 14, and are connected to the left and right acceleration sensors 53, respectively.

As described above, according to the third not claimed embodiment to which the present invention is applied, the airbag control device 54c is disposed below the retainer 55 to be adjacent to the lower surface 55a of the retainer 55. According to such a configuration, the airbag control device 54c can be compactly disposed below the retainer 55 using the space adjacent to the lower surface 55a of the retainer 55.

Further, since the airbag control device 54c can be fixed to the retainer 55, the airbag control device 54c can be satisfactorily connected to the inflator 57, and the airbag 56 can appropriately deploy.

### [Fourth Embodiment]

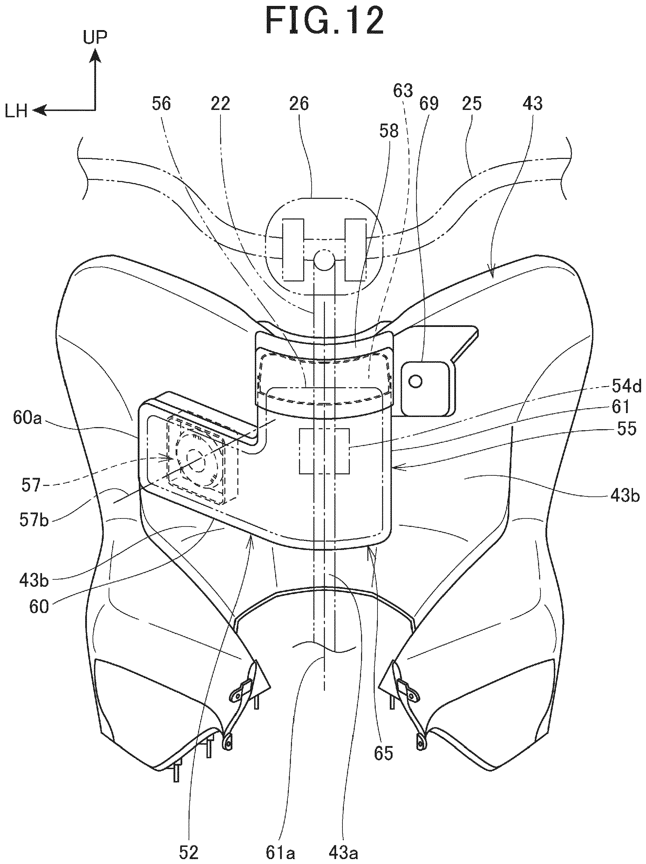

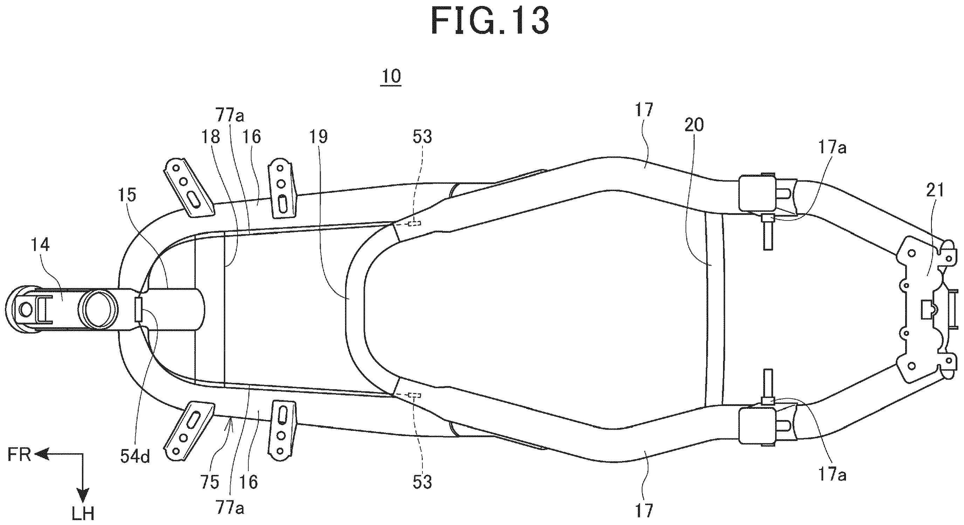

A fourth not claimed embodiment to which the present invention is applied will be described below with reference to Figs. 12 and 13. In the fourth not claimed embodiment, the same components as those in the first embodiment are denoted by the same reference numerals and will not be described.

The fourth not claimed embodiment is different from the first embodiment in terms of a position where an airbag control device 54d is disposed.

Fig. 12 is a view of a peripheral portion of an inner cover 43 according to the fourth not claimed embodiment as viewed from the rear. Fig. 13 is a plan view of the body frame 10 and the airbag control device 54d as viewed from above. The airbag control device 54d is configured in the same manner as the airbag control device 54a of the first embodiment, and is connected to an inflator 57.

The airbag control device 54d is disposed at the center of the vehicle width and is disposed between the head pipe 14 and the retainer 55 in the vehicle front-rear direction. Specifically, the airbag control device 54d is disposed in front of the retainer 55 between the inner cover 43 and the head pipe 14. The airbag control device 54d may be disposed between the retainer 55 and the steering shaft 22.

As shown in Fig. 13, the airbag control device 54d is disposed behind the head pipe 14 as viewed from the top of the vehicle. Further, the airbag control device 54d is disposed between the left and right lower frames 16 in the vehicle width direction as viewed from the top of the vehicle.

In other words, the airbag control device 54d is disposed inside a region surrounded by the frame-shaped frame portion 75 as viewed from the top of the vehicle. Therefore, the airbag control device 54d can be protected from an impact by the frame-shaped frame portion 75.

Referring to Figs. 1 and 12, the airbag control device 54d (not shown in Fig. 1) is disposed above the intake port 36a and the lower end 36b of the air cleaner box 36. Therefore, the airbag control device 54d can be prevented from being immersed in the puddle during running of the motorcycle 1.

The electric wires 77a extend along the rear surface of the down frame 15 and the inside surfaces of the left and right lower frames 16 in the vehicle width direction from the airbag control device 54d disposed on the rear side of the head pipe 14, and are connected to the left and right acceleration sensors 53, respectively.

As described above, according to the fourth not claimed embodiment to which the present invention is applied, the retainer 55 is disposed behind the head pipe 14 located at the front end of the body frame 10, and the airbag control device 54d is disposed between the head pipe 14 and the retainer 55.

According to such a configuration, the airbag control device 54d can be compactly disposed using a space between the head pipe 14 and the retainer 55.

### [Fifth Embodiment]

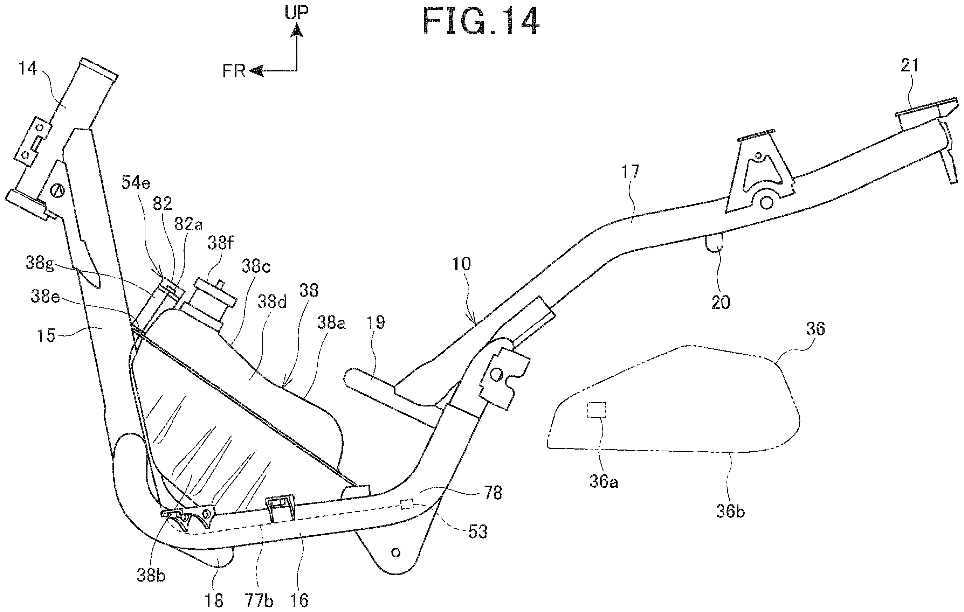

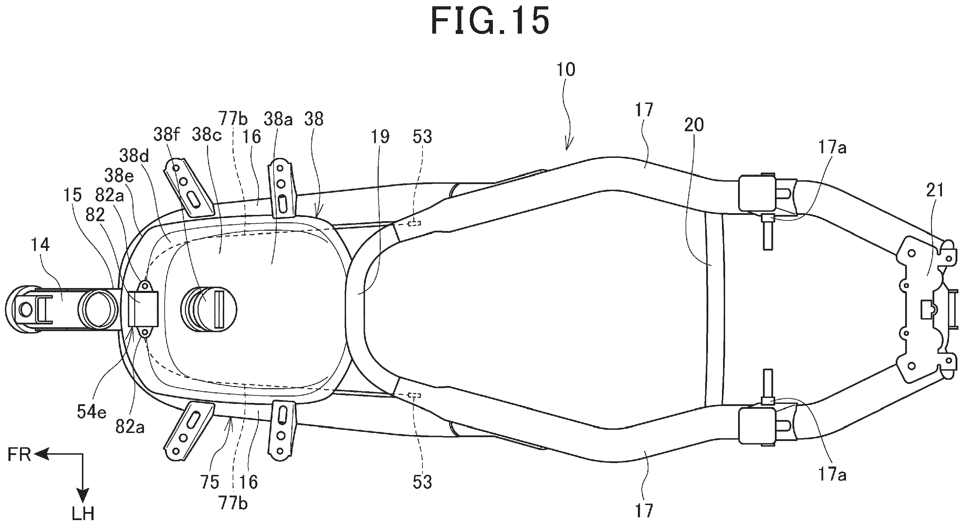

A fifth embodiment to which the present invention is applied will be described below with reference to Figs. 14 and 15. In the fifth embodiment, the same components as those in the first embodiment are denoted by the same reference numerals and will not be described.

The fifth embodiment is different from the first embodiment in terms of a position where an airbag control device 54e is disposed.

Fig. 14 is a left side view of a body frame 10 according to the fifth embodiment. Fig. 15 is a plan view of the body frame 10 as viewed from above. In Figs. 14 and 15, the fuel tank 38 and the airbag control device 54e are shown together with the body frame 10. The airbag control device 54e is configured in the same manner as the airbag control device 54a of the first embodiment, and is connected to an inflator 57.

As shown in Figs. 14 and 15, the airbag control device 54e is disposed along an upper surface 38c of an upper half body 38a of the fuel tank 38, and is fixed to the fuel tank 38.

The fuel tank 38 includes a stay 38g that supports the airbag control device 54e at a front end in front of an oil filler port 38f.

The stay 38g extends upward from a front surface of a flange 38e and a peripheral surface 38d of the upper half body 38a. The stay 38g is disposed at the center of the vehicle width. An upper surface of the stay 38g is located below an upper end of the oil filler port 38f, and is substantially parallel to the upper surface 38c of the fuel tank 38.

A case 82 of the airbag control device 54e includes a pair of attaching portions 82a extending in the left and right sides.

The airbag control device 54e is placed on an upper surface of the stay 38g, and is fastened to the stay 38g by a fixture inserted into the attaching portion 82a from above.

The airbag control device 54e is disposed in front of the oil filler port 38f to be adjacent to a front surface of the oil filler port 38f inclined to rise rearward as viewed from the side of the vehicle.

The airbag control device 54e is located behind a front end of the flange 38e that is a front end of the fuel tank 38. The airbag control device 54e is covered from above with a center cover 44.

As shown in Fig. 15, the airbag control device 54e is disposed behind a front end of a lower frame 16 and a head pipe 14 as viewed from the top of the vehicle. Further, the airbag control device 54e is disposed between left and right lower frames 16 in the vehicle width direction as viewed from the top of the vehicle.

In other words, the airbag control device 54e is disposed inside a region surrounded by a frame-shaped frame portion 75 as viewed from the top of the vehicle. Therefore, the airbag control device 54e can be protected from an impact by the frame-shaped frame portion 75.

Referring to Figs. 1 and 14, the airbag control device 54e is disposed above an intake port 36a and a lower end 36b of an air cleaner box 36. Therefore, the airbag control device 54e can be prevented from being immersed in the puddle during running of the motorcycle 1.

Electric wires 77b configured to connect the airbag control device 54e with an acceleration sensor 53 extend from the airbag control device 54e along a rear surface of the down frame 15 and inside surfaces of the left and right lower frames 16 in the vehicle width direction, and are connected to the left and right acceleration sensors 53, respectively. Therefore, the electric wire 77b can be covered from the outside with the lower frame 16, and the electric wire 77b can be effectively protected. The electric wire 77b is supported by the lower frame 16 through a fixture provided on the lower frame 16.

The acceleration sensor 53 may be disposed at a position on the inside surface of the lower frame 16 in front of a connection portion 78. For example, the acceleration sensor 53 may be disposed on the inside surface of the front end of the lower frame 16.

As described above, according to the fifth embodiment to which the present invention is applied, the airbag control device 54e is disposed along the upper surface 38c of the fuel tank 38, and is fixed to the fuel tank 38.

According to such a configuration, the airbag control device 54e can be compactly disposed along the upper surface 38c of the fuel tank 38, and can be firmly fixed to the upper surface 38c of the fuel tank 38.

Further, the fuel tank 38 includes the oil filler port 38f that is erected upward from the upper surface 38c, and the airbag control device 54e is disposed adjacent to the oil filler port 38f.

According to such a configuration, the airbag control device 54e can be compactly disposed using a space around the oil filler port 38f that is erected upward.

In addition, the body frame 10 includes the down frame 15 extending downward from the head pipe 14 located at the front end of the body frame 10 and the lower frame 16 extending rearward from the down frame 15, the fuel tank 38 is disposed behind the down frame 15 and above the lower frame 16, the upper surface 38c of the fuel tank 38 is inclined to descend rearward, the oil filler port 38f extends upward from the upper surface 38c so as to rise rearward, and the airbag control device 54e is disposed in front of the oil filler port 38f.

According to such a configuration, the airbag control device 54e can be compactly disposed using a space in front of the oil filler port 38f extending upward so as to rise rearward from the upper surface 38c of the fuel tank 38 inclined to descend rearward.

### [Sixth Embodiment]

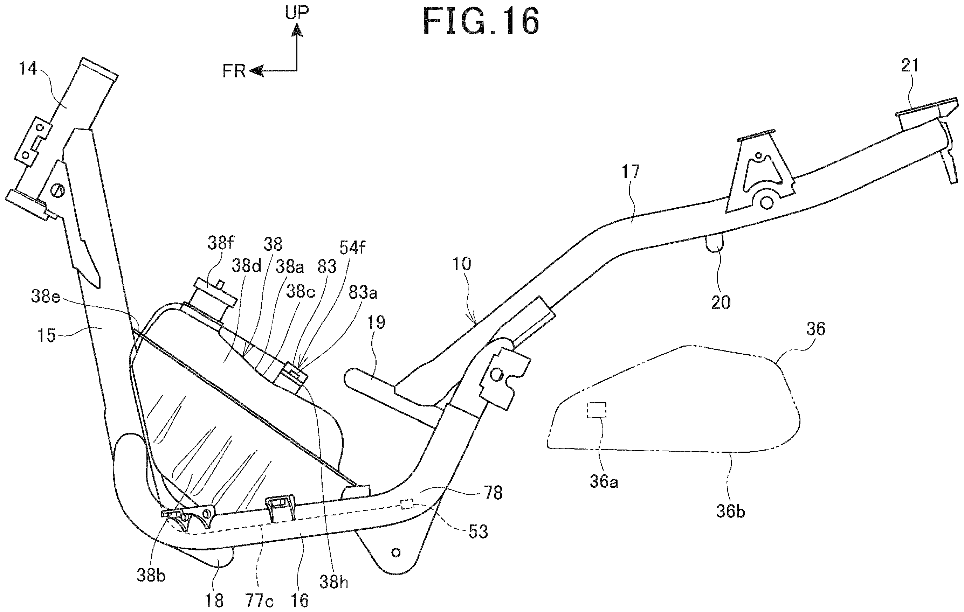

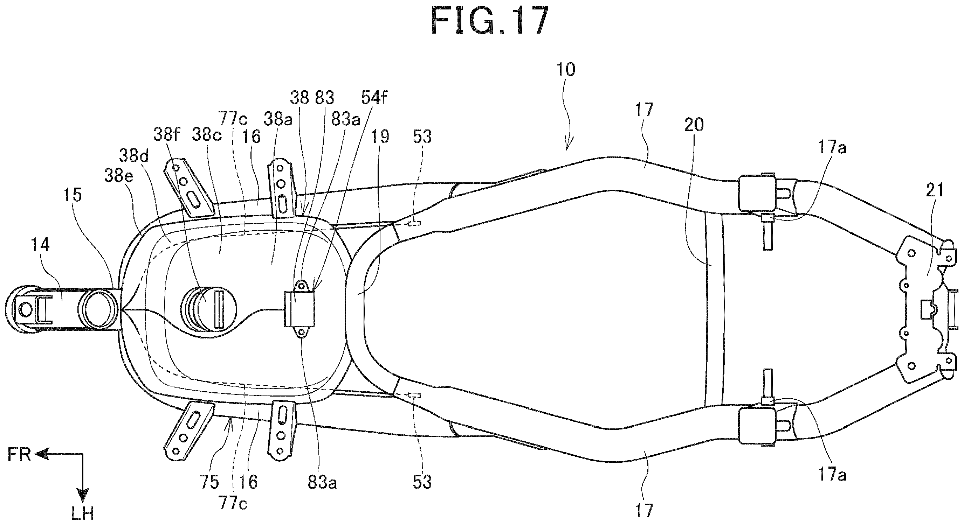

A sixth embodiment to which the present invention is applied will be described below with reference to Figs. 16 and 17. In the sixth embodiment, the same components as those in the first embodiment are denoted by the same reference numerals and will not be described.

The sixth embodiment is different from the first embodiment in terms of a position where an airbag control device 54f is disposed.

Fig. 16 is a left side view of a body frame 10 according to the sixth embodiment. Fig. 17 is a plan view of the body frame 10 as viewed from above. In Figs. 16 and 17, the fuel tank 38 and the airbag control device 54f are shown together with the body frame 10. The airbag control device 54f is configured in the same manner as the airbag control device 54a of the first embodiment, and is connected to an inflator 57.

As shown in Figs. 16 and 17, the airbag control device 54f is disposed along an upper surface 38c of an upper half body 38a of a fuel tank 38, and is fixed to the fuel tank 38.

The fuel tank 38 includes a stay 38h, which supports the airbag control device 54f, at a rear part of an upper surface 38c behind the oil filler port 38f.

The stay 38h is disposed at a rear part of the upper half body 38a in the center of the vehicle width. An upper surface of the stay 38h is substantially parallel to the upper surface 38c of the fuel tank 38.

A case 83 of the airbag control device 54f includes a pair of attaching portions 83a extending in the left and right sides.

The airbag control device 54f is placed on an upper surface of the stay 38h, and is fastened to the stay 38h by a fixture inserted into the attaching portion 83a from above.

As shown in Fig. 17, the airbag control device 54f is disposed behind a front end of a lower frame 16 and a head pipe 14 as viewed from the top of the vehicle. Further, the airbag control device 54f is disposed between left and right lower frames 16 in the vehicle width direction as viewed from the top of the vehicle.

In other words, the airbag control device 54f is disposed inside a region surrounded by a frame-shaped frame portion 75 as viewed from the top of the vehicle. Therefore, the airbag control device 54f can be protected from an impact by the frame-shaped frame portion 75.

Referring to Figs. 1 and 16, the airbag control device 54f is disposed above an intake port 36a and a lower end 36b of an air cleaner box 36. Therefore, the airbag control device 54f can be prevented from being immersed in the puddle during running of the motorcycle 1.

Electric wires 77c configured to connect the airbag control device 54f with an acceleration sensor 53 extend forward along the upper surface 38c of the fuel tank 38. The electric wires 77c bend downward at a front end of the fuel tank 38, extend rearward along a rear surface of the down frame 15 and inside surfaces of the left and right lower frames 16 in the vehicle width direction, and are connected to the left and right acceleration sensors 53, respectively. The electric wire 77c is supported by the lower frame 16 through a fixture provided on the lower frame 16.

As described above, according to the sixth embodiment to which the present invention is applied, the body frame 10 includes the down frame 15 extending downward from the head pipe 14 located at the front end of the body frame 10 and the lower frame 16 extending rearward from the down frame 15, the fuel tank 38 is disposed behind the down frame 15 and above the lower frame 16, the upper surface 38c of the fuel tank 38 is inclined to descend rearward, and the airbag control device 54f is disposed at the rear part of the upper surface 38c.

According to such a configuration, the airbag control device 54f can be compactly disposed using a space of the rear part of the upper surface 38c of the fuel tank 38 that descends rearward.

### [Seventh Embodiment]

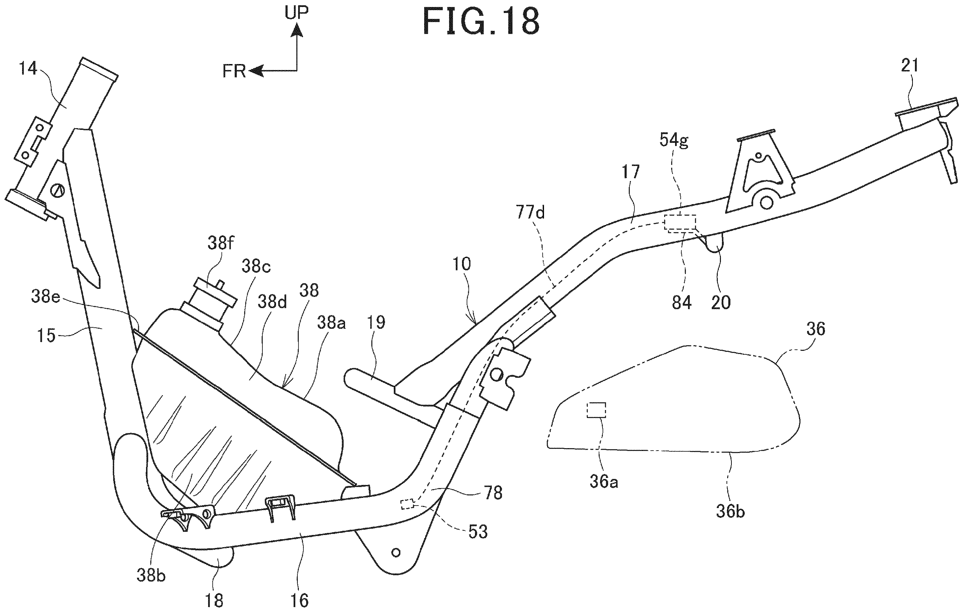

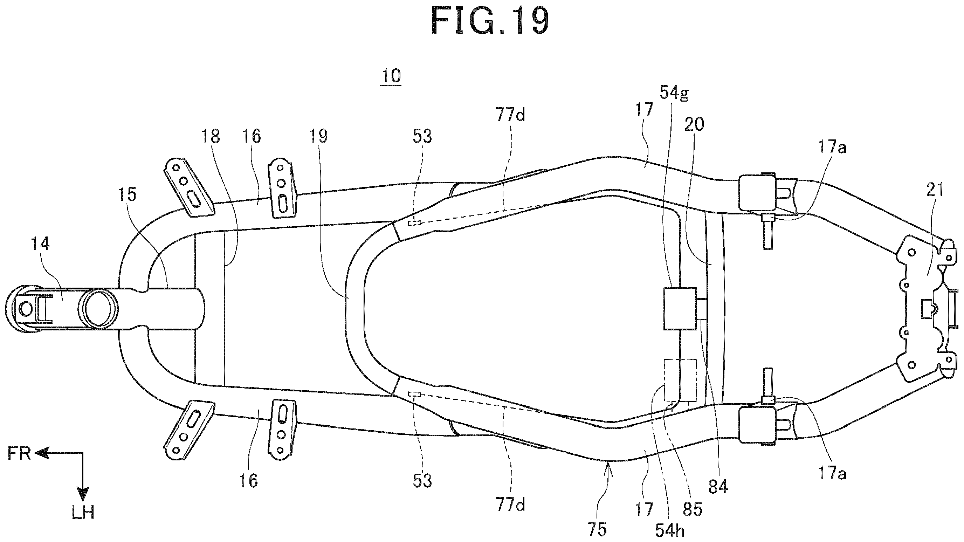

A seventh embodiment to which the present invention is applied will be described below with reference to Figs. 18 and 19. In the seventh embodiment, the same components as those in the first embodiment are denoted by the same reference numerals and will not be described.

The seventh embodiment is different from the first embodiment in terms of a position where an airbag control device 54g is disposed.

Fig. 18 is a left side view of a body frame 10 according to the seventh embodiment. Fig. 19 is a plan view of the body frame 10 as viewed from above. In Figs. 18 and 19, the fuel tank 38 and the airbag control device 54g are shown together with the body frame 10. The airbag control device 54g is configured in the same manner as the airbag control device 54a of the first embodiment, and is connected to an inflator 57.

As shown in Figs. 18 and 19, the airbag control device 54g is disposed adjacent to a third cross frame 20 configured to connect left and right seat frames 17 to each other and in front of the third cross frame 20.

The third cross frame 20 is provided behind a front seat 13a and in front of a suspension coupling portion 17a.

The body frame 10 includes a plate-shaped stay 84 extending forward from the third cross frame 20. The stay 84 is provided at the center of the vehicle width.

The airbag control device 54g is fixed to the third cross frame 20 through the stay 84.

The airbag control device 54g is covered from above with the lower surface 39a (Fig. 1) of the housing box 39, and is covered from below with the rear fender 48 (Fig. 1) extending forward to a lower part of the airbag control device 54g. Here, the lower surface 39a of the housing box 39 is provided with, for example, a recess as a relief portion configured to avoid the airbag control device 54g and the stay 84.

As shown in Fig. 18, the airbag control device 54g is located in front of the third cross frame 20 and is located between the left and right seat frames 17 as viewed from the top of the vehicle. In other words, the airbag control device 54g is disposed inside a region surrounded by a frame-shaped frame portion 75 as viewed from the top of the vehicle. Therefore, the airbag control device 54g can be protected from an impact by the frame-shaped frame portion 75.

Referring to Figs. 1 and 19, the airbag control device 54g is disposed above the intake port 36a and the lower end 36b of the air cleaner box 36. Therefore, the airbag control device 54g can be prevented from being immersed in the puddle during running of the motorcycle 1.

Electric wires 77d configured to connect the airbag control device 54g with an acceleration sensor 53 extend outward from the airbag control device 54g in the vehicle width direction, extend forward along inside surfaces of the left and right seat frames 17 in the vehicle width direction, and are connected to the left and right acceleration sensors 53, respectively. Therefore, the electric wire 77d can be covered from the outside with the seat frame 17, and the electric wire 77d can be effectively protected. The electric wire 77d is supported by the seat frame 17 through a fixture provided on the seat frame 17.

The acceleration sensor 53 may be disposed on the inside surface of the seat frame 17 at a position behind the connection portion 78 and in front of the airbag control device 54g.

As described above, according to the seventh embodiment to which the present invention is applied, the body frame 10 includes the pair of left and right seat frames 17 that support the seat 13 for the occupant and the third cross frame 20 configured to connect the seat frames 17 to each other in the left-right direction, and the airbag control device 54g is disposed adjacent to the third cross frame 20 and in front of the third cross frame 20.

According to such a configuration, the airbag control device 54g can be compactly disposed using space in front of the third cross frame 20 configured to connect the seat frames 17 to each other in the left-right direction.

Further, the airbag control device 54g is fixed to the third cross frame 20. According to such a configuration, the airbag control device 54g can be fixed using the third cross frame 20 with a simple structure.

As a modification of the seventh embodiment, as shown by a virtual line in Fig. 18, an airbag control device 54h configured in the same manner as the airbag control device 54g may be disposed to be closer to one side of the left and right seat frames 17, and the airbag control device 54h may be fixed to the seat frame 17 through the stay 85 provided on the seat frame 17. In this case, the airbag control device 54h can be fixed using the seat frame 17 with a simple structure.

### [Eighth Embodiment]

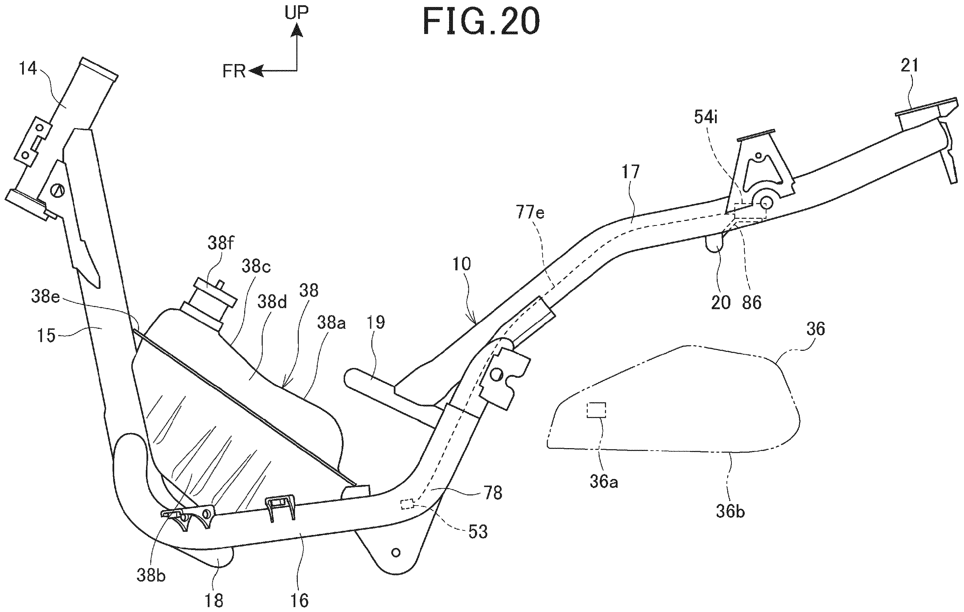

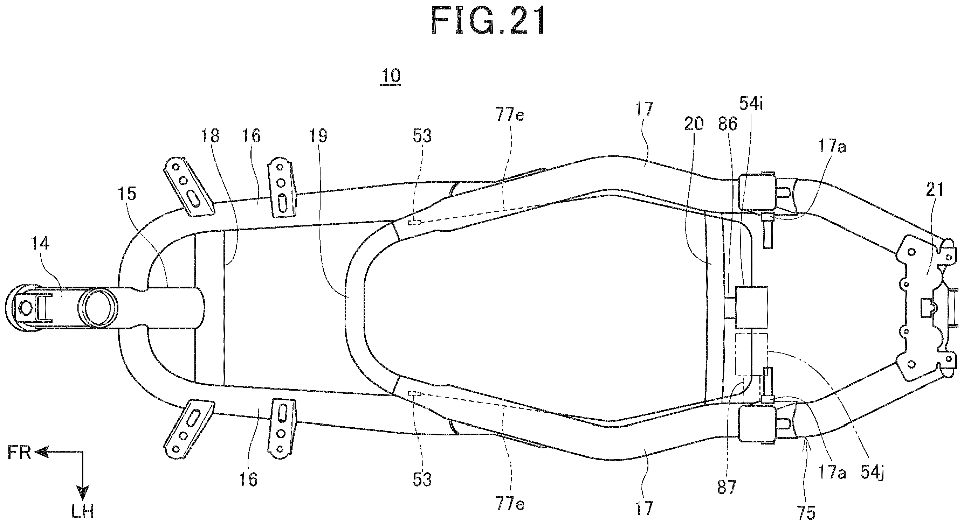

An eighth embodiment to which the present invention is applied will be described below with reference to Figs. 20 and 21. In the eighth embodiment, the same components as those in the first embodiment are denoted by the same reference numerals and will not be described.

The eighth embodiment is different from the first embodiment in terms of a position where an airbag control device 54i is disposed.

Fig. 20 is a left side view of a body frame 10 according to the eighth embodiment. Fig. 21 is a plan view of the body frame 10 as viewed from above. In Figs. 20 and 21, the fuel tank 38 and the airbag control device 54i are shown together with the body frame 10. The airbag control device 54i is configured in the same manner as the airbag control device 54a of the first embodiment, and is connected to an inflator 57.

As shown in Figs. 20 and 21, the airbag control device 54i is disposed adjacent to a third cross frame 20 configured to connect left and right seat frames 17 to each other and behind the third cross frame 20.

The third cross frame 20 is provided behind a front seat 13a and in front of a suspension coupling portion 17a.

The body frame 10 includes a plate-shaped stay 86 extending rearward from the third cross frame 20. The stay 86 is provided at the center of the vehicle width.

The airbag control device 54i is fixed to the third cross frame 20 through the stay 86.

The airbag control device 54i is covered from above with the lower surface of the housing box 39 (Fig. 1), and is covered from below with the rear fender 48 (Fig. 1) extending forward to a lower part of the airbag control device 54i.

As shown in Fig. 21, the airbag control device 54i is located behind the third cross frame 20 and in front of a fourth cross frame 21, and is located between the left and right seat frames 17 as viewed from the top of the vehicle. In other words, the airbag control device 54i is disposed inside a region surrounded by a frame-shaped frame portion 75 as viewed from the top of the vehicle. Therefore, the airbag control device 54i can be protected from an impact by the frame-shaped frame portion 75.

Referring to Figs. 1 and 20, the airbag control device 54i is disposed above the intake port 36a and the lower end 36b of the air cleaner box 36. Therefore, the airbag control device 54i can be prevented from being immersed in the puddle during running of the motorcycle 1.

Electric wires 77e configured to connect the airbag control device 54i with an acceleration sensor 53 extend outward from the airbag control device 54i in the vehicle width direction, extend forward along inside surfaces of the left and right seat frames 17 in the vehicle width direction, and are connected to the left and right acceleration sensors 53, respectively. The electric wire 77e is supported by the seat frame 17 through a fixture provided on the seat frame 17.

As described above, according to the eighth embodiment to which the present invention is applied, the body frame 10 includes the pair of left and right seat frames 17 that support the seat 13 for the occupant and the third cross frame 20 configured to connect the seat frames 17 to each other in the left-right direction, and the airbag control device 54i is disposed adjacent to the third cross frame 20 and behind the third cross frame 20.

According to such a configuration, the airbag control device 54i can be compactly disposed using space behind the third cross frame 20 configured to connect the seat frames 17 to each other in the left-right direction.

Further, the airbag control device 54i is fixed to the third cross frame 20. According to such a configuration, the airbag control device 54i can be fixed using the third cross frame 20 with a simple structure.

As a modification of the eighth embodiment, as shown by a virtual line in Fig. 21, an airbag control device 54j configured in the same manner as the airbag control device 54i may be disposed to be closer to one side of the left and right seat frames 17, and the airbag control device 54j may be fixed to the seat frame 17 through the stay 87 provided on the seat frame 17. In this case, the airbag control device 54j can be fixed using the seat frame 17 with a simple structure.

### [Ninth Embodiment]

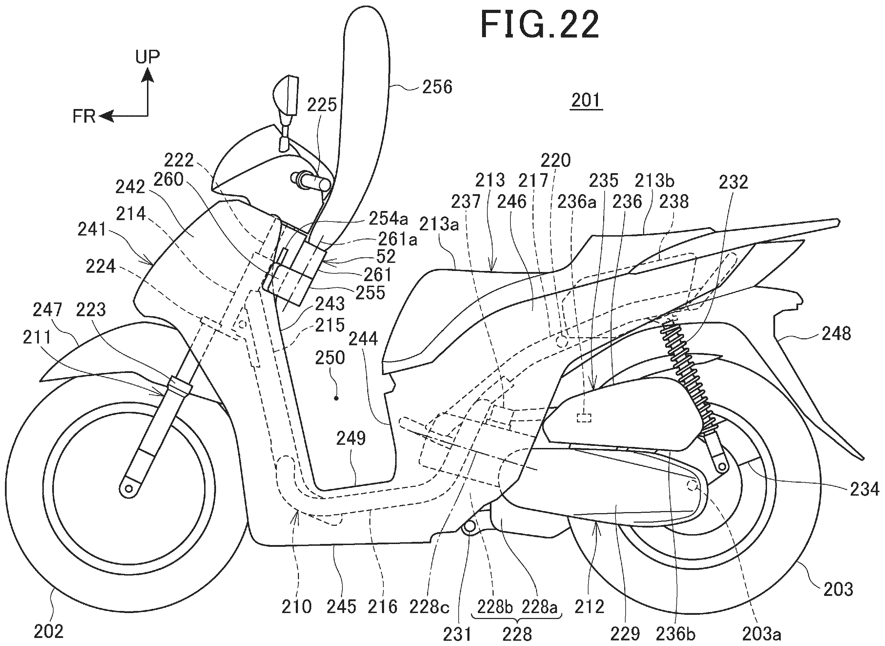

Fig. 22 is a left side view of a motorcycle 201 according to a ninth embodiment of the present invention. Fig. 22 shows a state in which an airbag 256 to be described below is inflated and deployed.

The motorcycle 201 is a scooter-type saddled vehicle including a body frame 210, a steering system 211 that steerably supports a front wheel 202, a power unit 212 (engine) that is supported by a rear part of the body frame 210, a rear wheel 203, and a seat 213 on which an occupant sits astride.

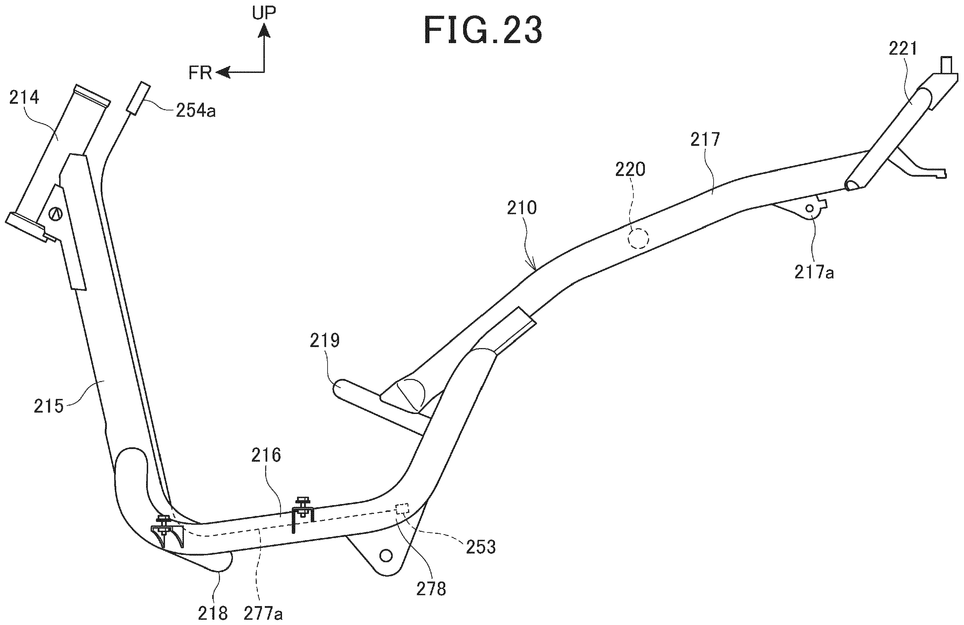

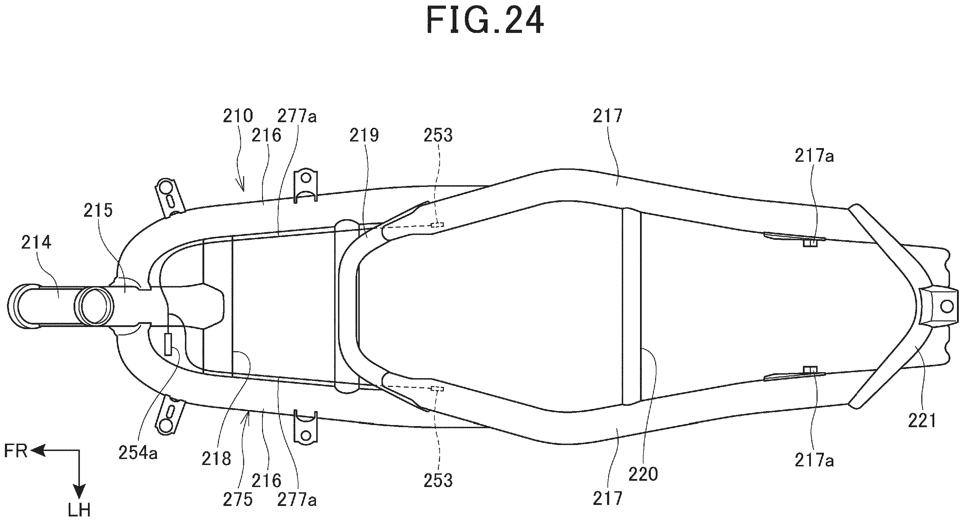

Fig. 23 is left side view of the body frame 210. Fig. 24 is a plan view of the body frame 210 as viewed from above. In Figs. 23 and 24, an airbag control device 254a, an acceleration sensor 253, and an electric wire 277a (all of which will be described below) are shown together with the body frame 210.

Referring to Figs. 22 to 24, the body frame 210 includes a head pipe 214 provided at a front end of the body frame 210, one down frame 215 extending rearward and downward from the head pipe 214, a pair of left and right lower frames 216 extending rearward from a lower part of the down frame 215, and a pair of left and right seat frames 217 extending rearward so as to rise rearward from rear ends of the lower frames 216.

The head pipe 214 is disposed at a center of a vehicle width.

The left and right lower frames 216 extend outward in a vehicle width direction from left and right side surfaces of the lower part of the down frame 215, respectively, and then bend and extend rearward. The lower end of the down frame 215 is located between the left and right lower frames 216.

In addition, the body frame 210 includes a first cross frame 218 configured to couple front parts of the left and right lower frames 216 to each other in the vehicle width direction, a second cross frame 219 configured to couple front parts of the left and right seat frames 217 to each other in the vehicle width direction, a third cross frame 220 (cross frame) configured to couple rear parts of the left and right seat frames 217 to each other in the vehicle width direction, and a fourth cross frame 221 configured to couple rear ends of the left and right seat frame 217 to each other in the vehicle width direction.

The lower end of the down frame 215 is connected to an intermediate part of the first cross frame 218 in the vehicle width direction.

The steering system 211 includes a steering shaft 222 pivotally supported by the head pipe 214, a pair of left and right front forks 223 disposed on both left and right sides of the front wheel 202 to support the front wheel 202, a bridge member 224 fixed to the lower end of the steering shaft 222 and configured to couple upper parts of the left and right front forks 223 to each other, and a handle 225 fixed to the upper end of the steering shaft 222.

In a side view of the vehicle, the head pipe 214 is inclined rearward in a vertical direction by a predetermined caster angle set for the motorcycle 201. The steering shaft 222 is pivotally supported in a state of being inserted into the head pipe 214 and is disposed to be inclined rearward as viewed from the side of the vehicle. The steering shaft 222 is located at the center of the vehicle width.

The power unit 212 is a unit swing-type engine in which an engine body 228 serving as an internal combustion engine is formed integrally with an arm portion 229 configured to support the rear wheel 203.

The engine body 228 includes a crank case 228a housing a crank shaft (not shown) and a cylinder portion 228b extending forward from the crank case 228a. A piston (not shown) reciprocates in the cylinder portion 228b.

The engine body 228 is a horizontal engine in which a cylinder axis 228c of the cylinder portion 228b extends substantially horizontally in a vehicle front-rear direction. Specifically, the cylinder portion 228b extends substantially in a horizontal direction toward the front of the vehicle so as to slightly rise forward as viewed from the side of the vehicle.

The arm portion 229 extends from one side (left side) of the crank case 228a in the vehicle width direction to one side (left side) of the rear wheel 203.

A sub-arm (not shown) is attached to the other side (right side) of the crank case 228a in the vehicle width direction to extend to the other side (right side) of the rear wheel 203. The rear wheel 203 is pivotally supported by a rear wheel axle 203a that is suspended between a rear end of the arm portion 229 and the sub-arm.

A belt-type continuously variable transmission (not shown), a centrifugal clutch mechanism (not shown), and a reduction mechanism (not shown) formed by a plurality of gears are provided in the hollow arm portion 229.

A driving force of the engine body 228 is transmitted to the rear wheel 203 through the belt-type continuously variable transmission, the clutch mechanism, and the reduction mechanism.

The power unit 212 is swingably supported by the body frame 210 through a link mechanism 231.

One end of the link mechanism 231 is coupled to a front lower part of the crank case 228a, and the other end of the link mechanism 231 is coupled to a rear part of the lower frame 216.

A pair of rear suspensions 232 are suspended between the rear end of the arm portion 229 and the rear part of the seat frame 217 and between the sub-arm and the rear part of the seat frame 217.

Suspension coupling portions 217a, to which an upper end of the rear suspension 232 is coupled, are provided at the rear parts of the left and right seat frames 217, respectively. The suspension coupling portions 217a are provided behind the third cross frame 220 and in front of the fourth cross frame 221.

An exhaust pipe (not shown) of the engine body 228 is pulled downward from an exhaust port on a lower surface of the cylinder portion 228b, and is connected to a muffler 234 disposed on the right side of the rear wheel 203 by extending rearward through the other side (right side) in the vehicle width direction.

The motorcycle 201 includes an intake device 235 that supplies intake air for combustion to the cylinder portion 228b of the engine body 228.

The intake device 235 includes an air cleaner box 236 that takes in outside air and purifies the outside air and a throttle body 237 that supplies the outside air purified by the air cleaner box 236 to the cylinder portion 228b as intake air.

The air cleaner box 236 includes an intake port 236a through which the outside air taken into the air cleaner box 236 passes.

The air cleaner box 236 is attached to the upper part of the arm portion 229 of the power unit 212 and is disposed on one side (left side) of the rear wheel 203. The air cleaner box 236 extends in the vehicle front-rear direction along the arm portion 229. The air cleaner box 236 swings integrally with the power unit 212. The intake port 236a is located above the arm portion 229 and below the seat frame 217.

The throttle body 237 is disposed in front of the air cleaner box 236 and above the cylinder portion 228b, and is connected to an intake port on the upper surface of the cylinder portion 228b.

The fuel tank 238 is disposed between rear parts of the left and right seat frames 217 and is supported by the seat frames 217. The fuel tank 238 is covered from above with the rear part of the seat 213. The seat 213 integrally includes a front seat 213a on which a rider sits and a rear seat 213b on which a fellow passenger sits.

The motorcycle 201 includes a body cover 241 that covers the vehicle body, for example, the body frame 210.

The body cover 241 includes a front cover 242 that covers upper parts of the head pipe 214 and the steering system 211 from a front and left and right sides and an inner cover 243 that is continuous with a rear edge of the front cover 242 and covers the upper parts of the head pipe 214 and the steering system 211 and the down frame 215 from a rear side.

Further, the body cover 241 includes a center cover 244 that covers a part of the vehicle body, which is located below a front end of the seat 213, from the front, an undercover 245 that covers the lower frame 216 from below, and a rear side cover 246 located below the seat 213 to cover the seat frame 217 and the fuel tank 238 from sides.

Step floors 249, on which the rider puts his/her feet, cover the left and right lower frames 216 from above. The step floor 249 extends from a lower edge of the inner cover 243 to a lower edge of the center cover 244.

The motorcycle 201 includes a front fender 247 and a rear fender 248.

As viewed from the side of the vehicle, a straddling space 250 recessed downward is defined by a rear surface of the inner cover 243, the step floor 249, the center cover 244, and a front surface of the front seat 213a. The occupant can straddle the motorcycle 201 through the straddling space 250 when getting on and off the motorcycle 201.

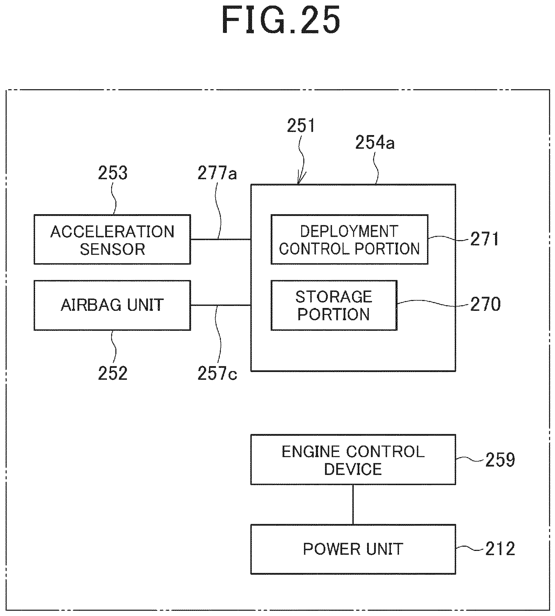

Fig. 25 is a block diagram showing a control configuration of the motorcycle 201.

The motorcycle 201 includes an engine control device 259 that controls an operation of the power unit 212 and an airbag device 251 that protects the occupant from an impact.

The airbag device 251 includes an airbag unit 252, an acceleration sensor 253 that detects an impact applied to the motorcycle 201, and an airbag control device 254a that controls an operation of the airbag unit 252 based on the detection result of the acceleration sensor 253.

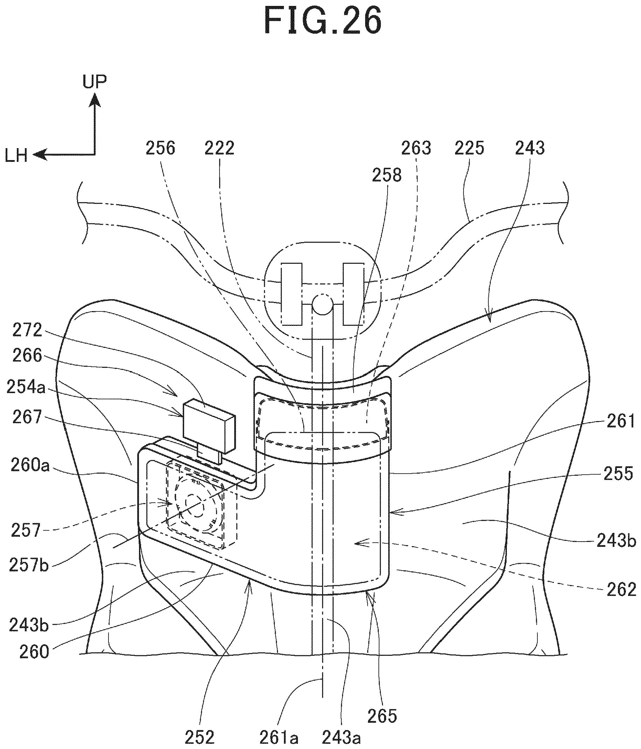

Fig. 26 is a view showing peripheral portions of the inner cover 243 as viewed from the rear.

Referring to Figs. 22 and 26, the airbag unit 252 is provided on the rear surface of the inner cover 243 and is located in front of the rider seated on the front seat 213a. Further, the airbag unit 252 is provided below the handle 225 on the rear side of the head pipe 214 and the steering shaft 222, and is located at a front part of the straddling space 250.

The upper part of the rear surface of the inner cover 243 is provided substantially parallel to the head pipe 214 and the steering shaft 222 as viewed from the side of the vehicle, and is inclined rearward along the head pipe 214.

Further, as shown in Figs. 22 and 26, a central portion 243a in the vehicle width direction located behind the steering shaft 222 is located at a rearmost position on the upper part of the rear surface of the inner cover 243, and side portions 243b located respectively at left and right sides of the central portion 243a are inclined to be located on a front side as approaching the outside in the vehicle width direction.

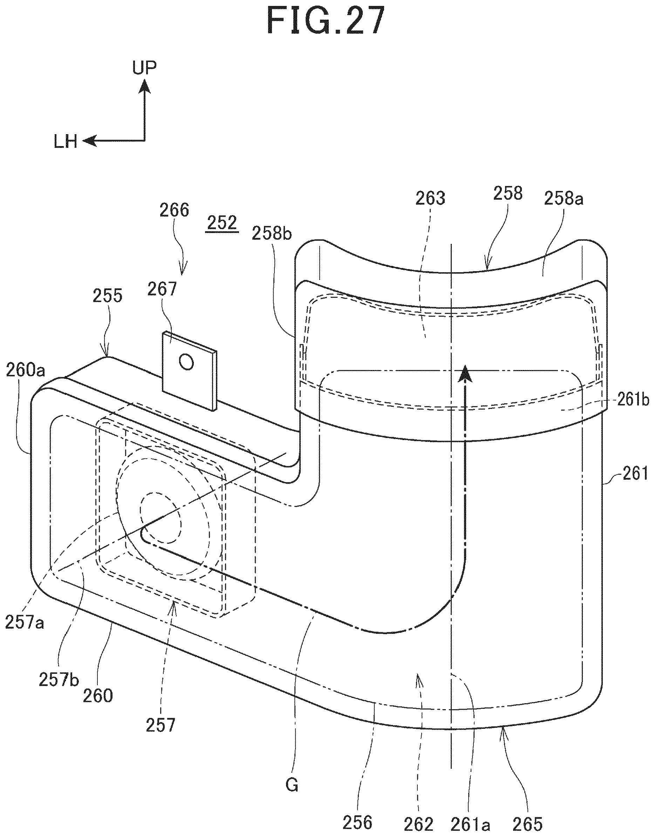

Fig. 27 is a front view of the airbag unit 252 as viewed from a rear side (rider side).

The airbag unit 252 includes a box-shaped retainer 255 provided in front of the occupant seated on the seat 213, an airbag 256 housed in the retainer 255, an inflator 257 that release gas into the airbag 256, and a lid member 258 attached to an upper part of the retainer 255.

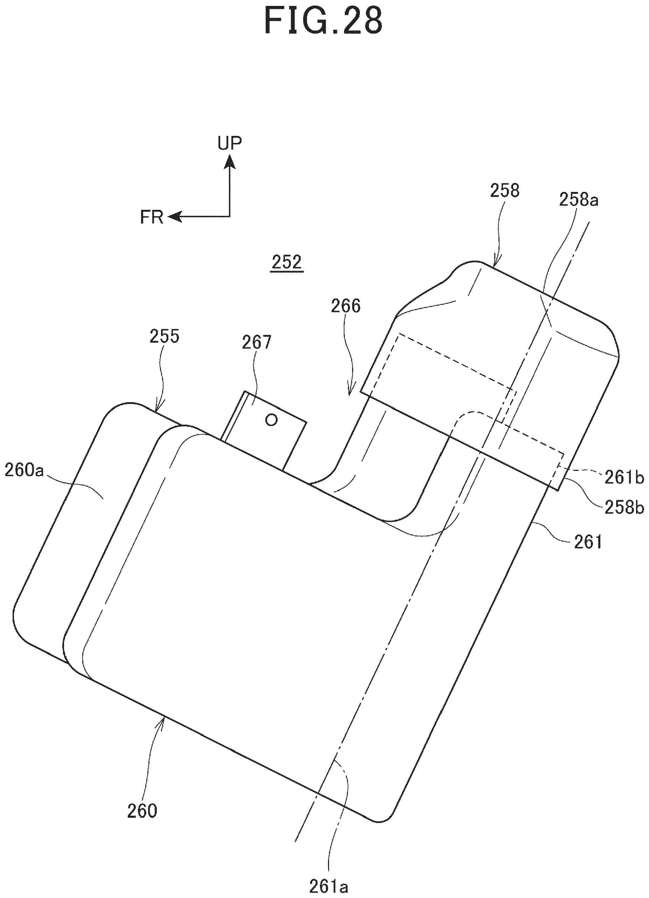

Fig. 28 is a left side view of the airbag unit 252.

Referring to Figs. 26 to 28, the retainer 255 is a box-shaped member formed in an inverted L shape as viewed from the occupant side (rear side). In the following description, an L-shape means an L-shape when the retainer 255 is viewed from the front or the rear. The retainer 255 has an inverted L shape as viewed from the rear, but it can be said that the retainer 255 is formed in an L-shape.

The retainer 255 is located in front of the front seat 213a, and faces the front surface of the front seat 213a.

The retainer 255 includes a left and right extending portion 260 extending in the left-right direction (vehicle width direction) and an upward extending portion 261 extending upward from the left and right extending portion 260.

The left and right extending portion 260 is a box-shaped portion extending in the vehicle width direction. An outer end 260a of the left and right extending portion 260 in the vehicle width direction is located outside in the vehicle width direction from the steering shaft 222 located at the center in the vehicle width. The left and right extending portion 260 extends from the outer end 260a toward the center of the vehicle width along a rear surface of the side portion 243b of the inner cover 243.

The upward extending portion 261 is a box-shaped portion extending in an up-down direction along the steering shaft 222, and is inclined rearward as viewed from the side of the vehicle. The upward extending portion 261 is located at the center of the vehicle width, and covers the central portion 243a of the inner cover 243 from the rear.

A center line 261a of the upward extending portion 261 extending in the up-down direction through a center of the upward extending portion 261 is provided behind the steering shaft 222 to be substantially parallel to the steering shaft 222, and is inclined rearward. The center line 261a is located at the center of the vehicle width.

An inner end of the left and right extending portion 260 in the vehicle width direction is connected to a lower outside surface of the upward extending portion 261. In other words, the upward extending portion 261 extends upward from the inner end of the left and right extending portion 260, and thus the retainer 255 is formed in an L-shape. An L-shaped airbag passage 262 is formed inside the retainer 255, the airbag passage being formed by an internal space of the left and right extending portion 260 and an internal space of the upward extending portion 261.

An upper surface opening 263 is formed on an upper surface of the upward extending portion 261, and thus the airbag passage 262 is exposed upward. The airbag 256 is deployed upward from the upper surface opening 263. An opening surface of the upper surface opening 263 is substantially orthogonal to the center line 261a of the upward extending portion 261. The upper surface opening 263 is closed by the lid member 258.

Referring to Figs. 24 to 27, the lid member 258 includes integrally a lid-upper surface 258a that covers the upper surface opening 263 from above and a lid-peripheral wall portion 258b that fits into a peripheral wall portion 261b of the upper end of the upward extending portion 261.

The lid member 258 is attached to the retainer 255 in such a manner that an inner peripheral surface of the lid-peripheral wall portion 258b is fitted into an outer peripheral surface of the peripheral wall portion 261b.

Referring to Figs. 26 and 27, the inflator 257 is provided in the airbag passage 262, and is located at an upstream end of a deployment path of the airbag 256 in the airbag passage 262.

Specifically, the inflator 257 is provided closer to the outer end 260a (Fig. 26) in the left and right extending portion 260, and is disposed to be offset in the left-right direction (left side) relative to the steering shaft 222 located at the center of the vehicle width. The inflator 257 is fixed to an inner surface of a front surface part of the left and right extending portion 260.

The inflator 257 includes a housing 257a formed in a cylindrical shape (tubular shape). Inside the housing 257a, a gas generating agent and an initiator for initiating a reaction for generating a gas in the gas generating agent are provided. The initiator includes an ignition device.

The inflator 257 is disposed such that an axis 257b of the housing 257a is directed in the front-rear direction of the vehicle. Since the axis 257b is directed in the front-rear direction of the vehicle in this way, even when the inflator 257 has a large diameter, a space occupied by the inflator 257 in the front-rear direction of the vehicle can be reduced, and the inflator 257 can be compactly provided in the front-rear direction.

As shown in Figs. 26 and 27, the airbag 256 is housed in the L-shaped airbag passage 262, and is provided from the left and right extending portion 260 to the upward extending portion 261. The airbag passage 262 is an airbag housing space.

The airbag 256 is configured in which the upstream end of the airbag 256 in the flow of gas is connected to the inflator 257 in the left and right extending portion 260.

Referring to Fig. 25, the acceleration sensor 253 and the airbag unit 252 are electrically connected to the airbag control device 254a.

The acceleration sensor 253 is connected to the airbag control device 254a by the electric wire 277a.

The airbag control device 254a determines, based on acceleration detected by the acceleration sensor 253, whether the airbag unit 252 is activated.

The airbag control device 254a is connected to the inflator 257 of the airbag unit 252 by wiring 257c (Fig. 25) .

When causing the airbag unit 252 to operate, the airbag control device 254a causes the inflator 257 to operate and release the gas into the airbag 256. The airbag 256 inflates due to a pressure of the gas, and deploys upward.

The airbag control device 254a is an ECU (Electronic Control Unit) including an arithmetic operation portion (not shown), a storage portion 270, and a deployment control portion 271. The arithmetic operation portion is a processor such as a CPU. The airbag control device 254a executes a program stored in the storage portion 270 to control an operation of the airbag unit 252.

The storage portion 270 includes a non-volatile storage device such as flash ROM or an EEPROM, and stores the program to be executed by the arithmetic operation portion and data to be processed by the arithmetic operation portion.

The deployment control portion 271 causes the inflator 257 to operate based on a detection result of the acceleration sensor 253, and controls deployment timing of the airbag 256. The deployment control portion 271 is formed by cooperation of software with hardware when the arithmetic operation portion executes the program.

The storage portion 270 stores an operation record of the deployment of the airbag 256 in the non-volatile storage device. The operation record of the deployment of the airbag 256 indicates, for example, the detection value of the acceleration sensor 253 and the deployment timing of the airbag 256. Therefore, a worker can acquire, for example, the operation record of the deployment of the airbag 256 at the time of collision of the motorcycle 201 from the storage portion 270.

The engine control device 259 is an ECU that electrically controls ignition and fuel supply of the power unit 212. The engine control device 259 and the airbag control device 254a are provided separately from each other. The engine control device 259 and the airbag control device 254a are not connected to each other, and operate independently of each other.

A flow of gas G released from the inflator 257 will be described below.

As shown in Fig. 27, the inflator 257 releases the gas G into the airbag 256 toward the rear of the vehicle along the axis 257b.

The gas G released from the inflator 257 into the airbag 256 is guided in its path by the left and right extending portion 260 and the upward extending portion 261, and flows in an L-shape in the airbag passage 262.

When the gas G flows from the left and right extending portion 260 to the upward extending portion 261, the flow of the gas in the left-right direction changes to an upward flow, and the gas flows upward in the upward extending portion 261. In other words, the left and right extending portion 260 and the upward extending portion 261 form a deflection portion 265 that deflects the overall flow of the gas G in the left-right direction toward the upward flow.

When the airbag 256 inflates upward due to the gas G flowing upward in the upward extending portion 261, the lid member 258 is pushed by the airbag 256 and is cleaved. The airbag 256 deploys upward from the upper surface opening 263 due to the gas G flowing upward.

As shown in Fig. 26, the airbag control device 254a is configured in which a circuit portion such as a CPU is housed in a box-shaped case 272. The engine control device 259 (Fig. 25) is housed in a case provided separately from the case 272 of the airbag control device 254a. For this reason, each of the airbag control device 254a and the engine control device 259 can be made smaller, and can be easily disposed at a desired location.

As shown in Fig. 26, at the rear of the inner cover 243, the airbag control device 254a is disposed above the left and right extending portion 260 and on the side of the upward extending portion 261 of the retainer 255. In other words, the airbag control device 254a is disposed in a space portion 266 sandwiched between the left and right extending portion 260 and the upward extending portion 261.

The retainer 255 includes a stay 267 extending upward from the left and right extending portion 260, and the airbag control device 254a is supported by the stay 267. The stay configured to support the airbag control device 254a may extend laterally from the upward extending portion 261.

Specifically, the airbag control device 254a is disposed inward in the vehicle width direction from the outer end 260a in the vehicle width direction of the left and right extending portion 260 and below the upper surface opening 263 located at the upper end of the upward extending portion 261. In this way, since the airbag control device 254a is disposed in the space portion 266 defined by the left and right extending portion 260 and the upward extending portion 261 of the L-shaped retainer, the airbag control device 254a can be compactly disposed.

The space portion 266 is located directly above the inflator 257. Therefore, the airbag control device 254a can be disposed near the inflator 257, and the airbag control device 254a can be connected to the inflator 257 with a short wiring.

As shown in Fig. 24, the airbag control device 254a is disposed behind the front ends of the head pipe 214 and the lower frame 216 as viewed from the top of the vehicle. Further, the airbag control device 254a is disposed between the left and right lower frames 216 in the vehicle width direction as viewed from the top of the vehicle.

The body frame 210 includes a frame-shaped frame portion 275 that is formed by the head pipe 214, the down frame 215, the left and right lower frames 216, the left and right seat frames 217, and the fourth cross frame 221 and is long in the front-rear direction as viewed from the top of the vehicle.

The airbag control device 254a is disposed inside a region surrounded by the frame-shaped frame portion 275 as viewed from the top of the vehicle. Thus, even when a large impact acts on the motorcycle 201 due to a collision, the airbag control device 254a can be effectively protected by the frame-shaped frame portion 275. Therefore, the airbag control device 254a can appropriately deploy the airbag 256 at the time of collision of the motorcycle 201, and the worker can acquire the operation record of the airbag 256 from the storage portion 270 of the airbag control device 254a after the collision.

As shown in Fig. 22, the airbag control device 254a is disposed above the lower end 236b of the air cleaner box 236. The lower end 236b of the air cleaner box 236 is a lower end of the intake device 235.

In a case where the motorcycle 201 runs on a puddle, when a water depth of the puddle is deeper than a height of the lower end 236b of the air cleaner box 236, water may enter the air cleaner box 236, so that the motorcycle 201 does not run. In other words, since the motorcycle 201 is configured in which the airbag control device 254a is located higher than the height of the lower end 236b of the air cleaner box 236, the airbag control device 254a can be prevented from being immersed in the puddle during running of the motorcycle 201.

Further, the airbag control device 254a is disposed above the lower end 236b of the air cleaner box 236. When the water depth of the puddle is deeper than the height of the lower end 236b of the air cleaner box 236, there is a high possibility that water will enter the air cleaner box 236 from the lower end 236b, so that the motorcycle 201 does not run. In other words, since the motorcycle 201 is configured in which the airbag control device 254a is located higher than the height of the lower end 236b, the airbag control device 254a can be prevented from being immersed in the puddle during running of the motorcycle 201.

As shown in Figs. 23 and 24, the pair of acceleration sensors 253 are provided at left and right rear sides of the left and right lower frames 216.

Specifically, the acceleration sensor 253 is disposed at a connection portion 278 to which the rear end of the lower frame 216 and the lower end of the seat frame 217 are connected. The connection portion 278 is a bent portion in which a part extending rearward in the body frame 210 is bent rearward and upward.

The acceleration sensor 253 is fixed inside surfaces of the pair of left and right connection portions 278 in the vehicle width direction. In other words, the acceleration sensor 253 is covered with the connection portions 278 from the outside in the vehicle width direction.

The acceleration sensor 253 may be disposed at a position on the inside surface of the lower frame 216 in front of the connection portion 278. For example, the acceleration sensor 253 may be disposed on the inside surface of the front end of the lower frame 216.

The electric wire 277a is disposed along the body frame 210 to connect the acceleration sensor 253 and the airbag control device 254a.

Specifically, the electric wire 277a extends downward along the head pipe 214 and the rear surface of the down frame 215 from the airbag control device 254a disposed on the rear side of the head pipe 214.

The pair of electric wires 277a extending downward along the rear surface of the down frame 215 are bent rearward at the lower end of the down frame 215, extend rearward along the inside surfaces in the vehicle width direction of the left and right lower frames 216, and are connected to the left and right acceleration sensors 253, respectively. The electric wire 277a is supported by the lower frame 216 through a fixture provided on the lower frame 216.

In this way, the electric wire 277a is covered from the front by the down frame 215 and is covered from the outside in the vehicle width direction by the lower frame 216 at the same time. For this reason, the down frame 215 and the lower frame 216 can protect the electric wire 277a from the impact applied from the outside.

In addition, since the acceleration sensor 253 is covered with the connection portion 278 from the outside in the vehicle width direction, the connection portion 278 can protect the acceleration sensor 253 from the impact applied from the outside in the vehicle width direction. The connection portion 278 is a portion where the lower frame 216 and the seat frame 217 are connected to each other and has high rigidity, thereby capable of effectively protect the acceleration sensor 253.

Further, the acceleration sensor 253 is provided on the rear end side of the lower frame 216 in front of the power unit 212, and thus is close to the position of the center of gravity of the motorcycle 201 in the vehicle front-rear direction. Therefore, the acceleration sensor 253 can satisfactorily detect the acceleration when the motorcycle 201 collides.

As described above, according to the ninth embodiment to which the present invention is applied, the motorcycle 201 including the power unit 212, the body frame 210, the retainer 255, the inflator 257, and the airbag 256 that is housed in the retainer 255, inflates by the gas released from the inflator 257, and deploys to the outside of the retainer 255 includes: the airbag control device 254a that is provided separately from the engine control device 259 configured to control the power unit 212 and controls the deployment timing of the airbag 256; and the intake device 235 that supplies the taken-in outside air to the power unit 212 as intake air, the airbag control device 254a being disposed above the lower end 236b of the intake device 235 and being disposed inside the region surrounded by the body frame 210 as viewed from the top of the vehicle.

According to such a configuration, since the airbag control device 254a is disposed inside the region surrounded by the body frame 210 as viewed from the top of the vehicle, the airbag control device 254a is effectively protected from the impact by the body frame 210. Further, the airbag control device 254a is disposed above the lower end 236b of the intake device 235, and thus is hardly affected by water.

Further, the retainer 255 includes the left and right extending portion 260 extending to the left and right and the upward extending portion 261 extending upward from the end of the left and right extending portion 260 and is provided in the L-shape, and the airbag control device 254a is disposed above the left and right extending portion 260 and on the side of the upward extending portion 261.

According to such a configuration, the airbag control device 254a can be compactly disposed using the space above the left and right extending portion 260 and on the side of the upward extending portion 261 in the L-shaped retainer 255.

In addition, the inflator 257 is provided in the retainer 255, and the airbag control device 254a is connected to the inflator 257 and is fixed to the retainer 255.

According to such a configuration, since the airbag control device 254a can be firmly fixed to the retainer 255, the airbag control device 254a can be satisfactorily connected to the inflator 257, and the airbag 256 can appropriately deploy.

Further, the power unit 212 is a unit swing engine that is swingably supported by the body frame 210 and supports the rear wheel 203, and the intake device 235 is fixed to the unit swing engine.

According to such a configuration, in the motorcycle 201 in which the intake device 235 is fixed to the unit swing engine, it is possible to effectively prevent the influence of water on the airbag control device 254a.

The airbag control device 254a includes the storage portion 270 that holds the operation record of the airbag 256 even after the airbag 256 deploys.

According to such a configuration, since the airbag control device 254a is disposed inside the region surrounded by the body frame 210 and protected, the operation record of the airbag 256 can be acquired from the storage portion 270 even after the airbag 256 deploys.

Further, the airbag control device 254a controls the deployment timing of the airbag 256 based on the detection value of the acceleration sensor 253, and the electric wire 277a configured to connect the acceleration sensor 253 and the airbag control device 254a to each other is arranged along the inside surface of the body frame 210 in the vehicle width direction.

According to such a configuration, the electric wire 277a configured to connect the acceleration sensor 253 and the airbag control device 254a to each other can be effectively protected by the body frame 210.

Further, the body frame 210 includes the down frame 215 extending downward from the head pipe 214 located at the front end of the body frame 210, the lower frame 216 extending rearward from the down frame 215, and the seat frame 217 extending rearward and upward from the rear end of the lower frame 216, the power unit 212 is disposed behind the seat frame 217, and the acceleration sensor 253 is disposed on the inside surface of the connection portion 278 between the lower frame 216 and the seat frame 217 in the vehicle width direction.

According to such a configuration, the acceleration sensor 253 can be disposed near the position of the center of gravity of the motorcycle 201 and can satisfactorily detect the acceleration. In addition, the acceleration sensor 253 can be effectively protected by the connection portion 278 between the lower frame 216 and the seat frame 217.

### [Tenth Embodiment]

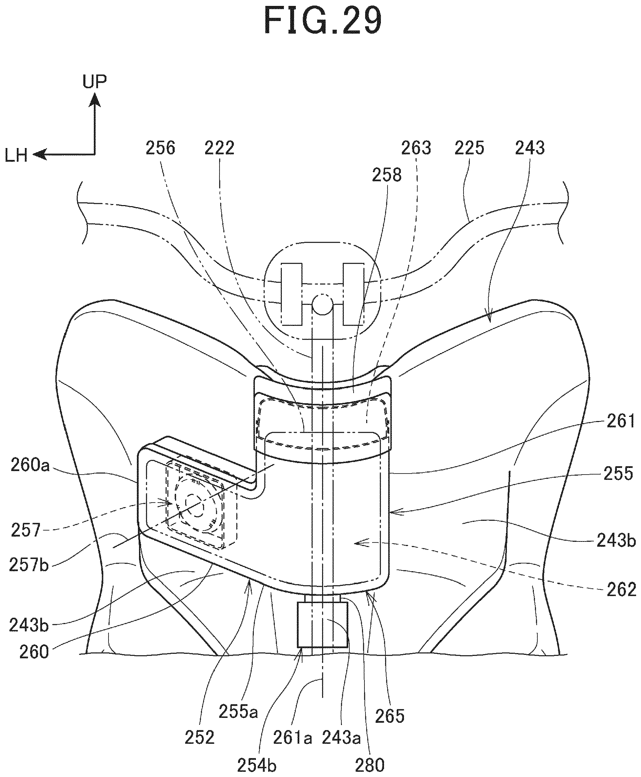

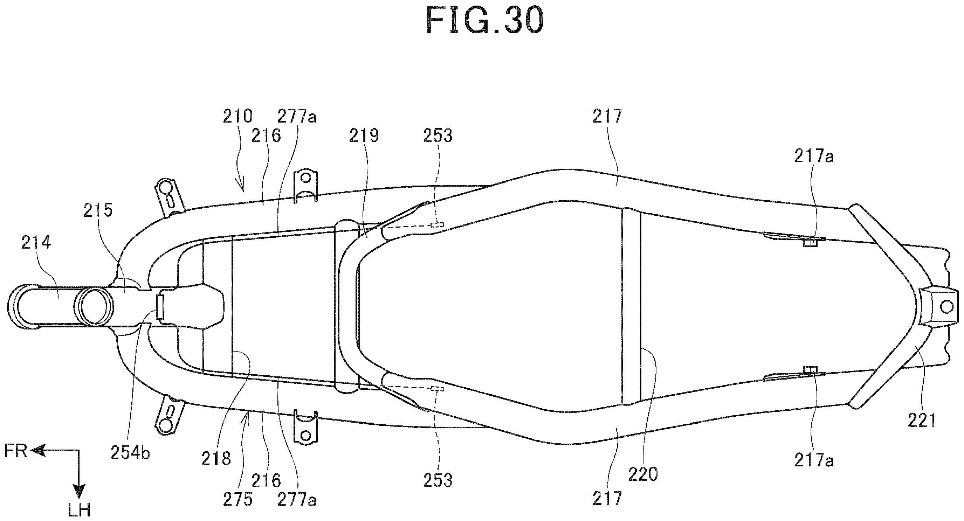

A tenth embodiment to which the present invention is applied will be described below with reference to Figs. 29 and 30. In the tenth embodiment, the same components as those in the ninth embodiment are denoted by the same reference numerals and will not be described.

The tenth embodiment is different from the ninth embodiment in terms of a position where an airbag control device 254b is disposed.

Fig. 29 is a view of a peripheral portion of an inner cover 243 according to the tenth embodiment as viewed from the rear. Fig. 30 is a plan view of the body frame 210 and the airbag control device 254b as viewed from above. The airbag control device 254b is configured in the same manner as the airbag control device 254a of the ninth embodiment, and is connected to an inflator 257.

The airbag control device 254b is disposed below the retainer 255 to be adjacent to a lower surface 255a of the retainer 255, and is located behind the inner cover 243.

The retainer 255 includes a stay 280 extending downward from the retainer 255, and the airbag control device 254b is supported by the stay 280.

Specifically, the airbag control device 254b is located at the center of the vehicle width, and overlaps the head pipe 214 from the rear.

As shown in Fig. 30, the airbag control device 254b is disposed behind the front end of the lower frame 216 and the head pipe 214 as viewed from the top of the vehicle. Further, the airbag control device 254b is disposed between the left and right lower frames 216 in the vehicle width direction as viewed from the top of the vehicle.

In other words, the airbag control device 254b is disposed inside a region surrounded by the frame-shaped frame portion 275 as viewed from the top of the vehicle. Therefore, the airbag control device 254b can be protected from an impact by the frame-shaped frame portion 275.

Referring to Figs. 22 and 29, the airbag control device 254b (not shown in Fig. 22) is disposed above the intake port 236a and the lower end 236b of the air cleaner box 236. Therefore, the airbag control device 254b can be prevented from being immersed in the puddle during running of the motorcycle 201.

The electric wires 277a extend along the rear surface of the down frame 215 and the inside surfaces of the left and right lower frames 216 in the vehicle width direction from the airbag control device 254b disposed on the rear side of the head pipe 214, and are connected to the left and right acceleration sensors 253, respectively.

As described above, according to the tenth embodiment to which the present invention is applied, the airbag control device 254b is disposed below the retainer 255 to be adjacent to the lower surface 255a of the retainer 255. According to such a configuration, the airbag control device 254b can be compactly disposed below the retainer 255 using the space adjacent to the lower surface 255a of the retainer 255.

Further, since the airbag control device 254b can be fixed to the retainer 255, the airbag control device 254b can be satisfactorily connected to the inflator 257, and the airbag 256 can appropriately deploy.

### [Eleventh Embodiment]

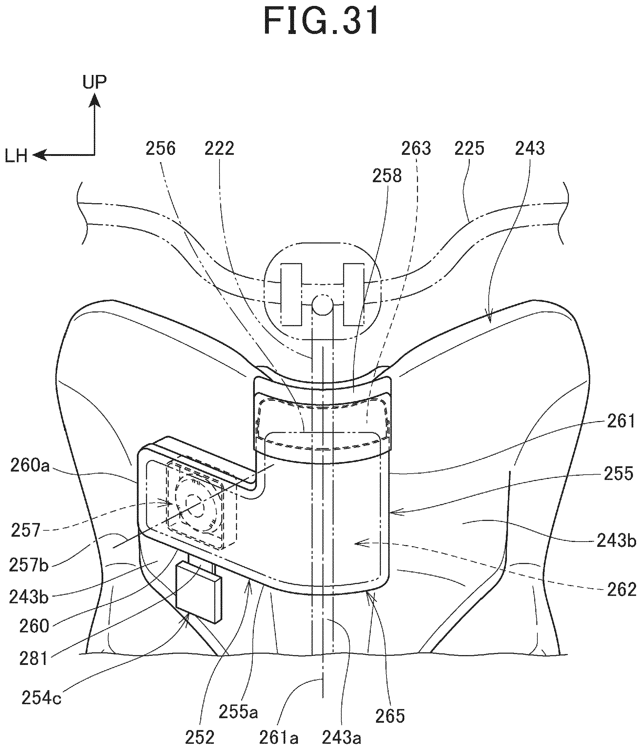

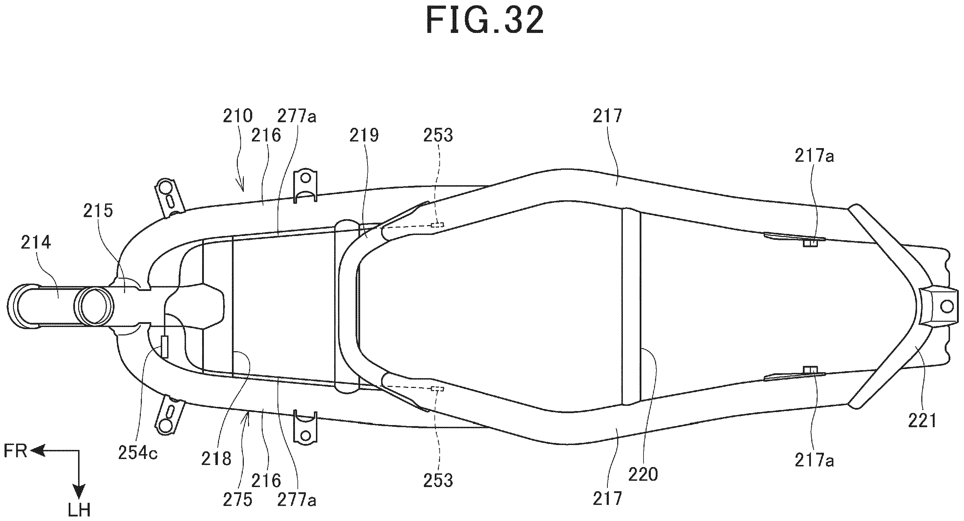

An eleventh embodiment to which the present invention is applied will be described below with reference to Figs. 31 and 32. In the eleventh embodiment, the same components as those in the ninth embodiment are denoted by the same reference numerals and will not be described.

The eleventh embodiment is different from the ninth embodiment in terms of a position where an airbag control device 254c is disposed.

Fig. 31 is a view of a peripheral portion of an inner cover 243 according to the eleventh embodiment as viewed from the rear. Fig. 32 is a plan view of the body frame 210 and the airbag control device 254c as viewed from above. The airbag control device 254c is configured in the same manner as the airbag control device 254a of the ninth embodiment, and is connected to an inflator 257.

The airbag control device 254c is disposed below the retainer 255 to be adjacent to a lower surface 255a of the retainer 255, and is located behind the inner cover 243.

The retainer 255 includes a stay 281 extending downward from the retainer 255, and the airbag control device 254c is supported by the stay 281.

Specifically, the airbag control device 254c is disposed at the center of the vehicle width in the vehicle width direction to be offset toward the inflator 257. At least a part of the airbag control device 254c is provided at the same position as the inflator 257 in the vehicle width direction. Therefore, the airbag control device 254c can be disposed near the inflator 257, and the airbag control device 254c can be connected to the inflator 257 with a short wiring.

As shown in Fig. 32, the airbag control device 254c is disposed behind the front end of the lower frame 216 and the head pipe 214 as viewed from the top of the vehicle. Further, the airbag control device 254c is disposed between the left and right lower frames 216 in the vehicle width direction as viewed from the top of the vehicle.

In other words, the airbag control device 254c is disposed inside a region surrounded by the frame-shaped frame portion 275 as viewed from the top of the vehicle. Therefore, the airbag control device 254c can be protected from an impact by the frame-shaped frame portion 275.

Referring to Figs. 22 and 31, the airbag control device 254c (not shown in Fig. 22) is disposed above the intake port 236a and the lower end 236b of the air cleaner box 236. Therefore, the airbag control device 254c can be prevented from being immersed in the puddle during running of the motorcycle 201.

The electric wires 277a extend along the rear surface of the down frame 215 and the inside surfaces of the left and right lower frames 216 in the vehicle width direction from the airbag control device 254c disposed on the rear side of the head pipe 214, and are connected to the left and right acceleration sensors 253, respectively.

As described above, according to the eleventh embodiment to which the present invention is applied, the airbag control device 254c is disposed below the retainer 255 to be adjacent to the lower surface 255a of the retainer 255. According to such a configuration, the airbag control device 254c can be compactly disposed below the retainer 255 using the space adjacent to the lower surface 255a of the retainer 255.

Further, since the airbag control device 254c can be fixed to the retainer 255, the airbag control device 254c can be satisfactorily connected to the inflator 257, and the airbag 256 can appropriately deploy.

### [Twelfth Embodiment]

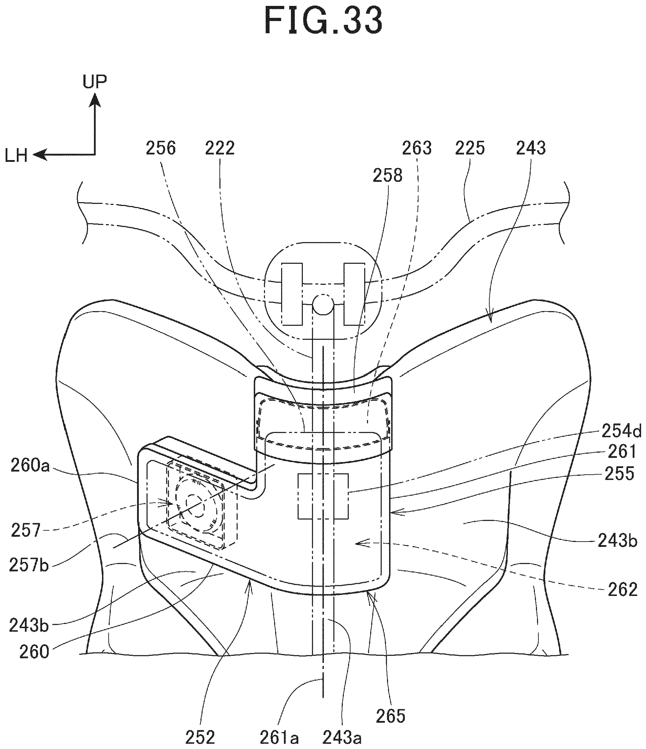

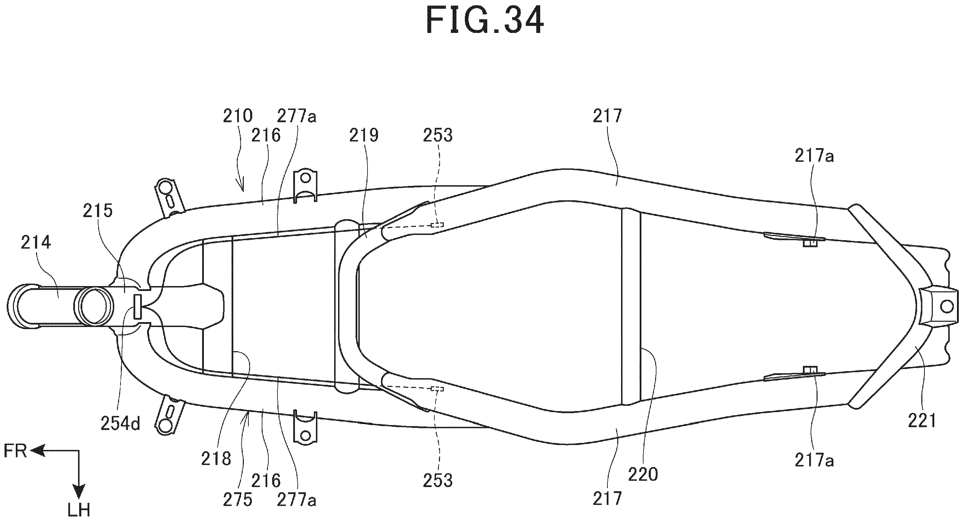

A twelfth embodiment to which the present invention is applied will be described below with reference to Figs. 33 and 34. In the twelfth embodiment, the same components as those in the ninth embodiment are denoted by the same reference numerals and will not be described.

The twelfth embodiment is different from the ninth embodiment in terms of a position where an airbag control device 254d is disposed.

Fig. 33 is a view of a peripheral portion of an inner cover 243 according to the twelfth embodiment as viewed from the rear. Fig. 34 is a plan view of the body frame 210 and the airbag control device 254d as viewed from above. The airbag control device 254d is configured in the same manner as the airbag control device 254a of the ninth embodiment, and is connected to an inflator 257.

The airbag control device 254d is disposed at the center of the vehicle width and is disposed between the head pipe 214 and the retainer 255 in the vehicle front-rear direction. Specifically, the airbag control device 254d is disposed in front of the retainer 255 between the inner cover 243 and the head pipe 214. The airbag control device 254d may be disposed between the retainer 255 and the steering shaft 222.

As shown in Fig. 34, the airbag control device 254d is disposed behind the head pipe 214 as viewed from the top of the vehicle. Further, the airbag control device 254d is disposed between the left and right lower frames 216 in the vehicle width direction as viewed from the top of the vehicle.

In other words, the airbag control device 254d is disposed inside a region surrounded by the frame-shaped frame portion 275 as viewed from the top of the vehicle. Therefore, the airbag control device 254d can be protected from an impact by the frame-shaped frame portion 275.

Referring to Figs. 22 and 33, the airbag control device 254d (not shown in Fig. 22) is disposed above the intake port 236a and the lower end 236b of the air cleaner box 236. Therefore, the airbag control device 254d can be prevented from being immersed in the puddle during running of the motorcycle 201.

The electric wires 277a extend along the rear surface of the down frame 215 and the inside surfaces of the left and right lower frames 216 in the vehicle width direction from the airbag control device 254d disposed on the rear side of the head pipe 214, and are connected to the left and right acceleration sensors 253, respectively.

As described above, according to the twelfth embodiment to which the present invention is applied, the retainer 255 is disposed behind the head pipe 214 located at the front end of the body frame 210, and the airbag control device 254d is disposed between the head pipe 214 and the retainer 255.

According to such a configuration, the airbag control device 254d can be compactly disposed using a space between the head pipe 214 and the retainer 255.

### [Thirteenth Embodiment]

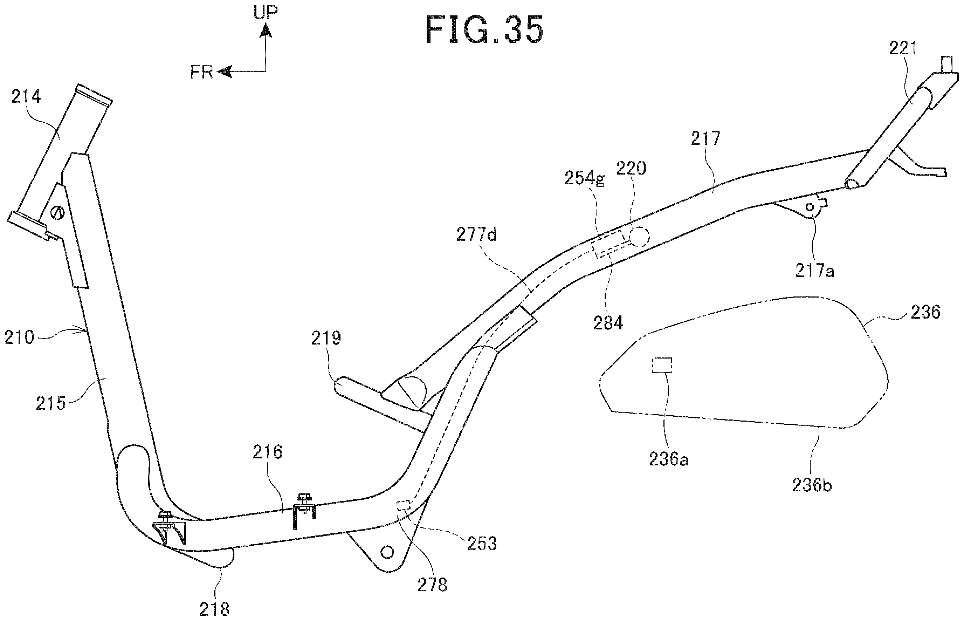

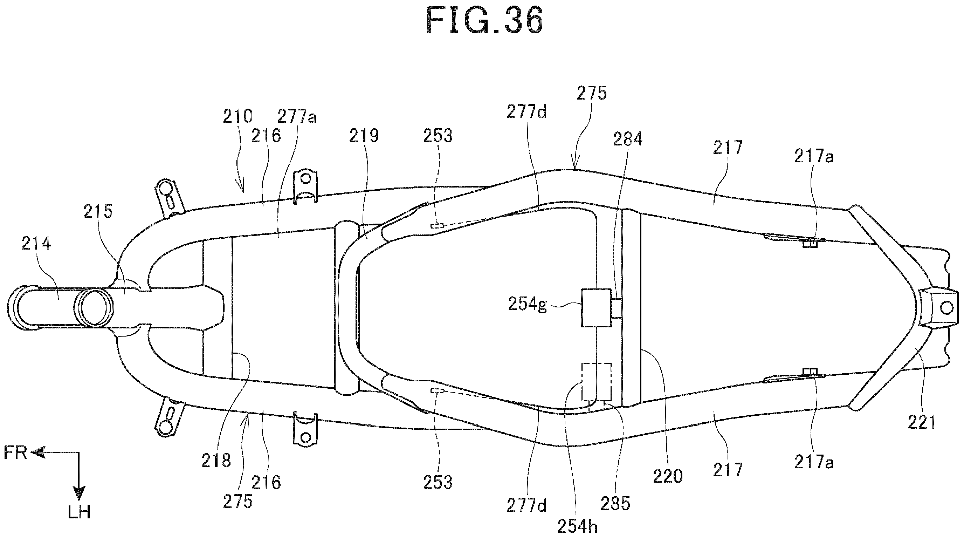

A thirteenth embodiment to which the present invention is applied will be described below with reference to Figs. 35 and 36. In the thirteenth embodiment, the same components as those in the ninth embodiment are denoted by the same reference numerals and will not be described.

The thirteenth embodiment is different from the ninth embodiment in terms of a position where an airbag control device 254g is disposed.

Fig. 35 is a left side view of a body frame 210 according to the thirteenth embodiment. Fig. 36 is a plan view of the body frame 210 as viewed from above. The airbag control device 254g is configured in the same manner as the airbag control device 254a of the ninth embodiment, and is connected to an inflator 257.

As shown in Figs. 35 and 36, the airbag control device 254g is disposed adjacent to a third cross frame 220 configured to connect left and right seat frames 217 to each other and in front of the third cross frame 220.

The third cross frame 220 is provided behind a front seat 213a and in front of a suspension coupling portion 217a.

The body frame 210 includes a plate-shaped stay 284 extending forward from the third cross frame 220. The stay 284 is provided at the center of the vehicle width.

The airbag control device 254g is fixed to the third cross frame 220 through the stay 284.

As shown in Fig. 36, the airbag control device 254g is located in front of the third cross frame 220 and is located between the left and right seat frames 217 as viewed from the top of the vehicle. In other words, the airbag control device 254g is disposed inside a region surrounded by a frame-shaped frame portion 275 as viewed from the top of the vehicle. Therefore, the airbag control device 254g can be protected from an impact by the frame-shaped frame portion 275.

Referring to Figs. 22 and 35, the airbag control device 254g is disposed above the intake port 236a and the lower end 236b of the air cleaner box 236. Therefore, the airbag control device 254g can be prevented from being immersed in the puddle during running of the motorcycle 201.

Electric wires 277d configured to connect the airbag control device 254g with an acceleration sensor 253 extend outward from the airbag control device 254g in the vehicle width direction, extend forward along inside surfaces of the left and right seat frames 217 in the vehicle width direction, and are connected to the left and right acceleration sensors 253, respectively. Therefore, the electric wire 277d can be covered from the outside with the seat frame 217, and the electric wire 277d can be effectively protected. The electric wire 277d is supported by the seat frame 217 through a fixture provided on the seat frame 217.

The acceleration sensor 253 may be disposed on the inside surface of the seat frame 217 at a position behind the connection portion 278 and in front of the airbag control device 254g.

As described above, according to the thirteenth embodiment to which the present invention is applied, the body frame 210 includes the pair of left and right seat frames 217 that support the seat 213 for the occupant and the third cross frame 220 configured to connect the seat frames 217 to each other in the left-right direction, and the airbag control device 254g is disposed adjacent to the third cross frame 220 and in front of the third cross frame 220.

According to such a configuration, the airbag control device 254g can be compactly disposed using space in front of the third cross frame 220 configured to connect the seat frames 217 to each other in the left-right direction.

Further, the airbag control device 254g is fixed to the third cross frame 220. According to such a configuration, the airbag control device 254g can be fixed using the third cross frame 220 with a simple structure.

As a modification of the thirteenth embodiment, as shown by a virtual line in Fig. 36, an airbag control device 254h configured in the same manner as the airbag control device 254g may be disposed to be closer to one side of the left and right seat frames 217, and the airbag control device 254h may be fixed to the seat frame 217 through the stay 285 provided on the seat frame 217. In this case, the airbag control device 254h can be fixed using the seat frame 217 with a simple structure.

### [Fourteenth Embodiment]

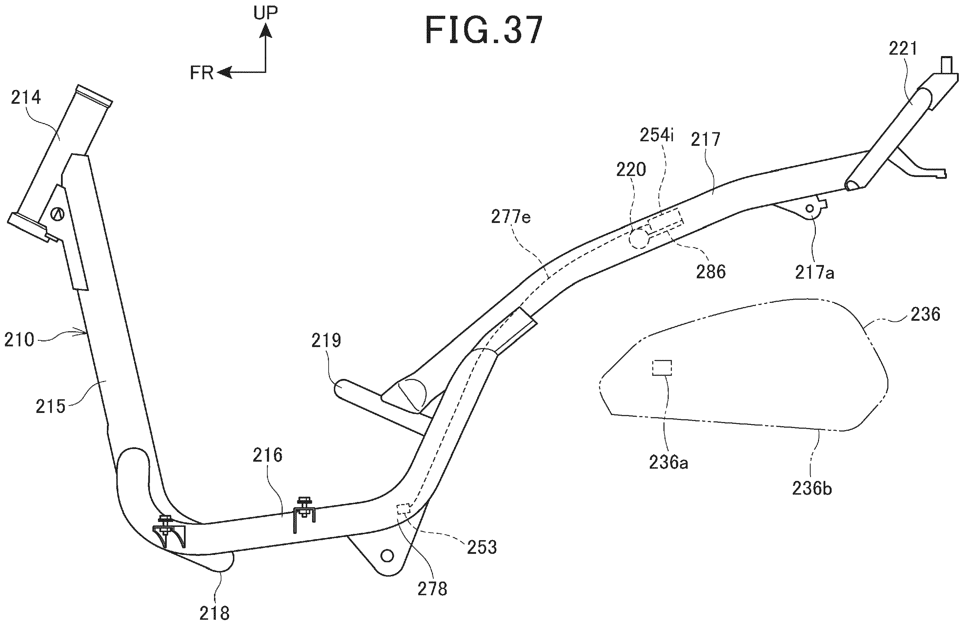

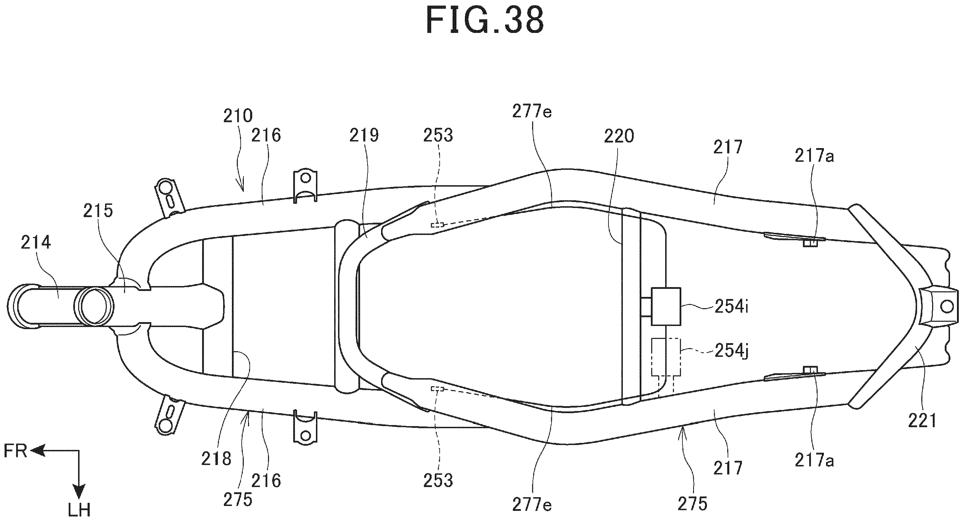

A fourteenth embodiment to which the present invention is applied will be described below with reference to Figs. 37 and 38. In the fourteenth embodiment, the same components as those in the ninth embodiment are denoted by the same reference numerals and will not be described.

The fourteenth embodiment is different from the ninth embodiment in terms of a position where an airbag control device 254i is disposed.

Fig. 37 is a left side view of a body frame 210 according to the fourteenth embodiment. Fig. 38 is a plan view of the body frame 210 as viewed from above. The airbag control device 254i is configured in the same manner as the airbag control device 254a of the ninth embodiment, and is connected to an inflator 257.

As shown in Figs. 37 and 38, the airbag control device 254i is disposed adjacent to a third cross frame 220 configured to connect left and right seat frames 217 to each other and behind the third cross frame 220.

The third cross frame 220 is provided behind a front seat 213a and in front of a suspension coupling portion 217a.

The body frame 210 includes a plate-shaped stay 286 extending rearward from the third cross frame 220. The stay 286 is provided at the center of the vehicle width.

The airbag control device 254i is fixed to the third cross frame 220 through the stay 286.

As shown in Fig. 38, the airbag control device 254i is located behind the third cross frame 220 and in front of a fourth cross frame 221, and is located between the left and right seat frames 217 as viewed from the top of the vehicle. In other words, the airbag control device 254i is disposed inside a region surrounded by a frame-shaped frame portion 275 as viewed from the top of the vehicle. Therefore, the airbag control device 254i can be protected from an impact by the frame-shaped frame portion 275.

Referring to Figs. 22 and 37, the airbag control device 254i is disposed above the intake port 236a and the lower end 236b of the air cleaner box 236. Therefore, the airbag control device 254i can be prevented from being immersed in the puddle during running of the motorcycle 201.

Electric wires 277e configured to connect the airbag control device 254i with an acceleration sensor 253 extend outward from the airbag control device 254i in the vehicle width direction, extend forward along inside surfaces of the left and right seat frames 217 in the vehicle width direction, and are connected to the left and right acceleration sensors 253, respectively. The electric wire 277e is supported by the seat frame 217 through a fixture provided on the seat frame 217.

As described above, according to the fourteenth embodiment to which the present invention is applied, the body frame 210 includes the pair of left and right seat frames 217 that support the seat 213 for the occupant and the third cross frame 220 configured to connect the seat frames 217 to each other in the left-right direction, and the airbag control device 254i is disposed adjacent to the third cross frame 220 and behind the third cross frame 220.

According to such a configuration, the airbag control device 254i can be compactly disposed using space behind the third cross frame 220 configured to connect the seat frames 217 to each other in the left-right direction.

Further, the airbag control device 254i is fixed to the third cross frame 220. According to such a configuration, the airbag control device 254i can be fixed using the third cross frame 220 with a simple structure.

As a modification of the fourteenth embodiment, as shown by a virtual line in Fig. 37, an airbag control device 254j configured in the same manner as the airbag control device 254i may be disposed to be closer to one side of the left and right seat frames 217, and the airbag control device 254j may be fixed to the seat frame 217 through the stay 287 provided on the seat frame 217. In this case, the airbag control device 254j can be fixed using the seat frame 217 with a simple structure.

### [Fifteenth Embodiment]

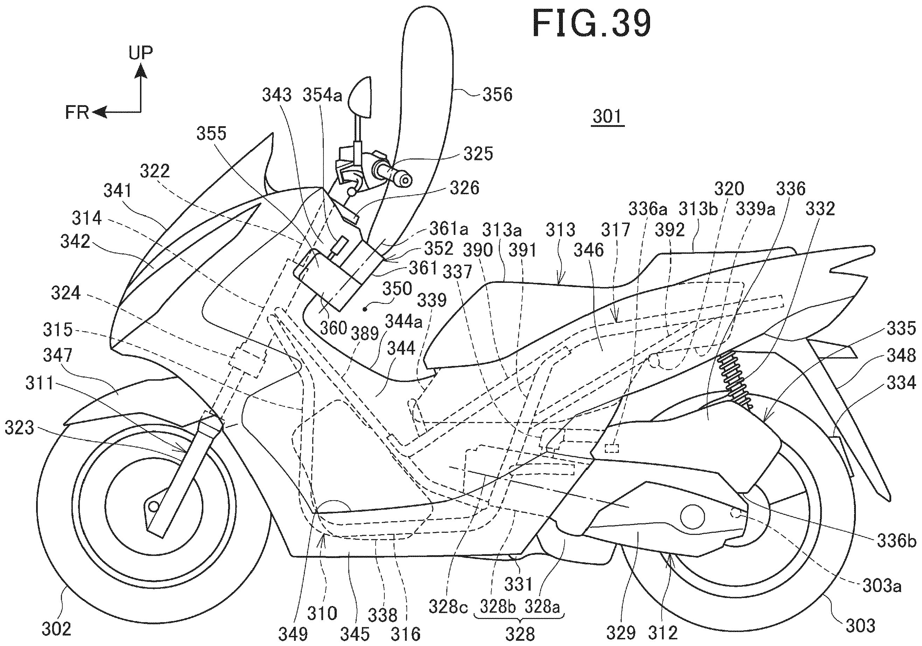

Fig. 39 is a left side view of a motorcycle 301 according to a fifteenth embodiment of the present invention. Fig. 39 shows a state in which an airbag 356 to be described below is inflated and deployed.

The motorcycle 301 is a scooter-type saddled vehicle including a body frame 310, a steering system 311 that steerably supports a front wheel 302, a power unit 312 (engine) that is supported by a rear part of the body frame 310, a rear wheel 303, and a seat 313 on which an occupant sits astride.

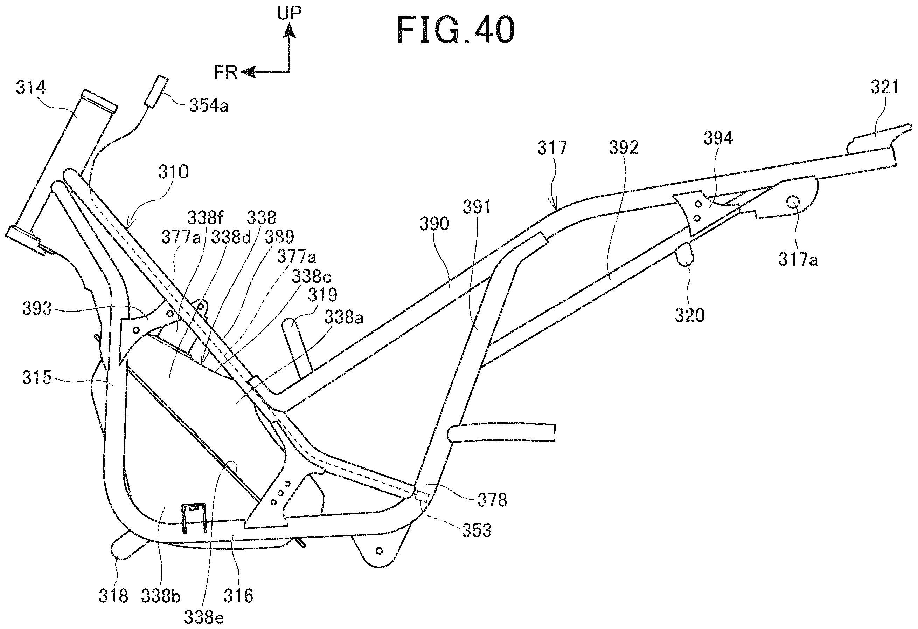

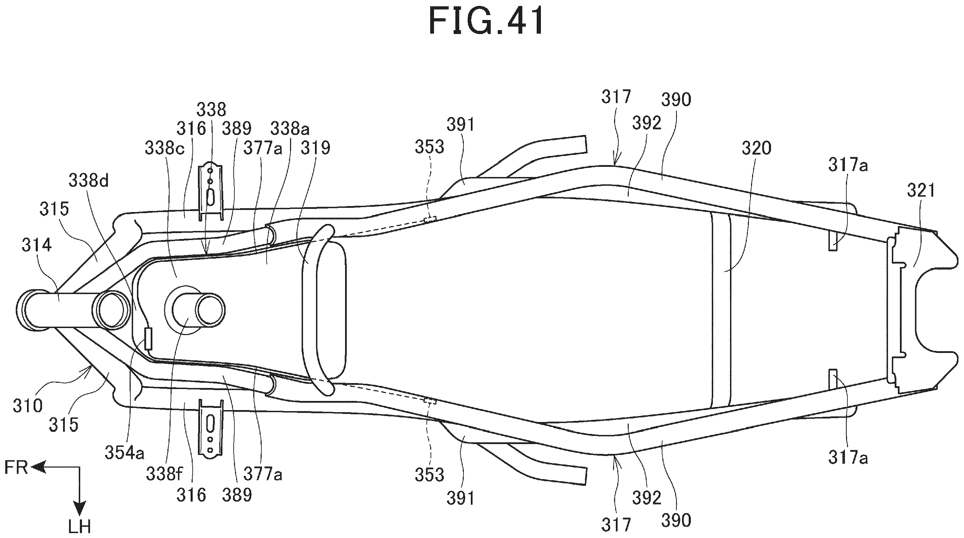

Fig. 40 is left side view of the body frame 310. Fig. 41 is a plan view of the body frame 310 as viewed from above. In Fig. 40, a fuel tank 338 (which will be described below) is shown together with the body frame 310. In Figs. 40 and 41, an airbag control device 354a, an acceleration sensor 353, and an electric wire 377a (all of which will be described below) are shown together with the body frame 310.

Referring to Figs. 39 to 41, the body frame 310 includes a head pipe 314 provided at a front end of the body frame 310, a pair of left and right upper frames 389 (frames) extending rearward and downward from the head pipe 314, a pair of left and right down frames 315 extending downward from the head pipe 314, and a pair of left and right lower frames 316 extending rearward from a lower part of the down frame 315.

The head pipe 314 is disposed at a center of a vehicle width. The upper frame 389 extends to descend downward above the lower frame 316, and a lower end of the upper frame 389 is joined to a rear end of the lower frame 316. As viewed from the top of the vehicle, the upper frame 389 extends in the front-rear direction inside the vehicle width direction with respect to the lower frame 316.

Further, the body frame 310 includes a pair of left and right seat frames 317 extending rearward so as to rise rearward from the rear parts of the left and right upper frames 389 and the rear ends of the left and right lower frames 316.

Specifically, the seat frame 317 includes an upper seat frame 390 extending rearward and upward from the rear part of the upper frame 389, a lower sear frame 391 extending rearward and upward from the rear end of the lower frame 316 and connected to an intermediate part in the front-rear direction of the upper seat frame 390, and a subframe 392 extending rearward and upward from an intermediate part in the up-down direction of the lower seat frame 391 and connected to the rear part of the upper seat frame 390.

In addition, the body frame 310 includes a first cross frame 318 configured to couple front parts of the left and right lower frames 316 to each other in the vehicle width direction, a second cross frame 319 configured to couple front ends of the left and right upper seat frames 390 to each other in the vehicle width direction, a third cross frame 320 (cross frame) configured to couple rear parts of the left and right subframes 392 to each other in the vehicle width direction, and a fourth cross frame 321 configured to couple rear ends of the left and right upper seat frames 390 to each other in the vehicle width direction.

Further, the body frame 310 includes a first gusset 393 that connects an upper part of the upper frame 389 and an upper part of the down frame 315 in the front-rear direction and a second gusset 394 that connects a rear part of the upper seat frame 390 and a rear part of the subframe 392 in the up-down direction.

The steering system 311 includes a steering shaft 322 pivotally supported by the head pipe 314, a pair of left and right front forks 323 disposed on both left and right sides of the front wheel 302 to support the front wheel 302, a bridge member 324 fixed to the lower end of the steering shaft 322 and configured to couple upper parts of the left and right front forks 323 to each other, and a handle 325 fixed to the upper end of the steering shaft 322. The handle 325 is connected to the steering shaft 322 through a handle post 326 fixed to the upper end of the steering shaft 322.

In a side view of the vehicle, the head pipe 314 is inclined rearward in a vertical direction by a predetermined caster angle set for the motorcycle 301. The steering shaft 322 is pivotally supported in a state of being inserted into the head pipe 314 and is disposed to be inclined rearward as viewed from the side of the vehicle. The steering shaft 322 is located at the center of the vehicle width.

The power unit 312 is a unit swing-type engine in which an engine body 328 serving as an internal combustion engine is formed integrally with an arm portion 329 configured to support the rear wheel 303.

The engine body 328 includes a crank case 328a housing a crank shaft (not shown) and a cylinder portion 328b extending forward from the crank case 328a. A piston (not shown) reciprocates in the cylinder portion 328b.

The engine body 328 is a horizontal engine in which a cylinder axis 328c of the cylinder portion 328b extends substantially horizontally in a vehicle front-rear direction. Specifically, the cylinder portion 328b extends substantially in a horizontal direction toward the front of the vehicle so as to slightly rise forward as viewed from the side of the vehicle.

The arm portion 329 extends from one side (left side) of the crank case 328a in the vehicle width direction to one side (left side) of the rear wheel 303.

A sub-arm (not shown) is attached to the other side (right side) of the crank case 328a in the vehicle width direction to extend to the other side (right side) of the rear wheel 303. The rear wheel 303 is pivotally supported by a rear wheel axle 303a that is suspended between a rear end of the arm portion 329 and the sub-arm.

A belt-type continuously variable transmission (not shown), a centrifugal clutch mechanism (not shown), and a reduction mechanism (not shown) formed by a plurality of gears are provided in the hollow arm portion 329.

A driving force of the engine body 328 is transmitted to the rear wheel 303 through the belt-type continuously variable transmission, the clutch mechanism, and the reduction mechanism.

The power unit 312 is swingably supported by the body frame 310 through a link mechanism 331.

One end of the link mechanism 331 is coupled to a front lower part of the crank case 328a, and the other end of the link mechanism 331 is coupled to a rear part of the lower frame 316.

A pair of rear suspensions 332 are suspended between the rear end of the arm portion 329 and the rear part of the seat frame 317 and between the sub-arm and the rear part of the seat frame 317.

Suspension coupling portions 317a, to which an upper end of the rear suspension 332 is coupled, are provided at the rear ends of the left and right upper seat frames 390, respectively.

An exhaust pipe (not shown) of the engine body 328 is pulled downward from an exhaust port on a lower surface of the cylinder portion 328b, and is connected to a muffler 334 disposed on the right side of the rear wheel 303 by extending rearward through the other side (right side) in the vehicle width direction.

The motorcycle 301 includes an intake device 335 that supplies intake air for combustion to the cylinder portion 328b of the engine body 328.

The intake device 335 includes an air cleaner box 336 that takes in outside air and purifies the outside air and a throttle body 337 that supplies the outside air purified by the air cleaner box 336 to the cylinder portion 328b as intake air.

The air cleaner box 336 includes an intake port 336a through which the outside air taken into the air cleaner box 336 passes.

The air cleaner box 336 is attached to the upper part of the arm portion 329 of the power unit 312 and is disposed on one side (left side) of the rear wheel 303. The air cleaner box 336 extends in the vehicle front-rear direction along the arm portion 329. The air cleaner box 336 swings integrally with the power unit 312. The intake port 336a is located above the arm portion 329 and below the seat frame 317.

The throttle body 337 is disposed in front of the air cleaner box 336 and above the cylinder portion 328b, and is connected to an intake port on the upper surface of the cylinder portion 328b.

The fuel tank 338 is disposed behind the down frame 315 and above the lower frame 316 as viewed from the side of the vehicle, and is fixed to the down frame 315 and the lower frame 316. The fuel tank 338 is disposed below the upper frame 389 as viewed from the side of the vehicle.

The fuel tank 338 is disposed in front of the seat frame 317. A lower end of the fuel tank 338 is located between the left and right lower frames 316.

The fuel tank 338 is formed into a hollow tank shape in which an upper half body 338a and a lower half body 338b divided into upper and lower parts join to each other.

The upper half body 338a includes an upper surface 338c and a peripheral surface 338d extending downward from a peripheral edge of the upper surface 338c. The upper half body 338a is configured in which a flange 338e extending outward from a lower edge of the peripheral surface 338d joins to a flange of an upper edge of the lower half body 338b.

The upper surface 338c of the fuel tank 338 is inclined so as to descend rearward as a whole as viewed from the side of the vehicle. The upper surface 338c and the flange 338e are substantially parallel to each other.

The fuel tank 338 includes a tubular oil filler port 338f that is erected upward from the upper surface 338c. The oil filler port 338f is disposed at the center of the vehicle width at the front end of the upper surface 338c. The oil filler port 338f is provided to be substantially orthogonal to the upper surface 338c that descends rearward, and is inclined so as to rise rearward as viewed from the side of the vehicle.

A housing box 339 capable of housing an article such as a helmet is provided between the left and right seat frames 317. The housing box 339 is supported by the seat frame 317 and is located above the power unit 312.

The seat 313 covers an opening on an upper surface of the housing box 339 in an openable/closable manner. The seat 313 is supported by the left and right seat frames 317 through the housing box 339.

The seat 313 integrally includes a front seat 313a on which a rider sits and a rear seat 313b on which a fellow passenger sits.

The motorcycle 301 includes a body cover 341 that covers the vehicle body, for example, the body frame 310.

The body cover 341 includes a front cover 342 that covers upper parts of the head pipe 314 and the steering system 311 from a front and left and right sides and an inner cover 343 that is continuous with a rear edge of the front cover 342 and covers the upper parts of the head pipe 314 and the steering system 311 from a rear side.

In addition, the body cover 341 includes a center cover 344 that covers a part of the vehicle body located at a front lower side of the front seat 313a, from above and the left and right side, an undercover 345 that covers the lower frame 316 from below, and a rear side cover 346 located below the seat 313 to cover the seat frame 317 and the housing box 339 from sides.

The motorcycle 301 includes a front fender 347 and a rear fender 348.

A front part of the center cover 344 is continuous with a lower part of the inner cover 343. An upper edge 344a of the center cover 344 is located below the front seat 313a.

Step floors 349, on which the rider puts his/her feet, are provided on outer sides of left and right lower edges of the center cover 344, respectively.

As viewed from the side of the vehicle, a straddling space 350 recessed downward is defined by a rear surface of the inner cover 343, the upper edge 344a of the center cover 344, and a front surface of the front seat 313a. The occupant can straddle the motorcycle 301 through the straddling space 350 when getting on and off the motorcycle 301.

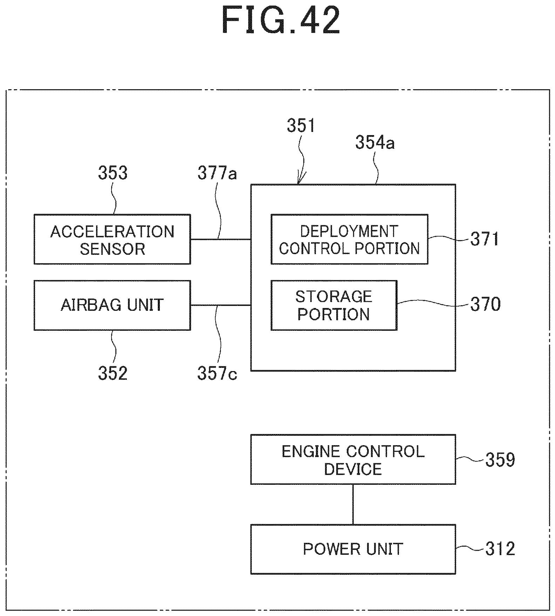

Fig. 42 is a block diagram showing a control configuration of the motorcycle 301.

The motorcycle 301 includes an engine control device 359 that controls an operation of the power unit 312 and an airbag device 351 that protects the occupant from an impact.

The airbag device 351 includes an airbag unit 352, an acceleration sensor 353 that detects an impact applied to the motorcycle 301, and an airbag control device 354a that controls an operation of the airbag unit 352 based on the detection result of the acceleration sensor 353.

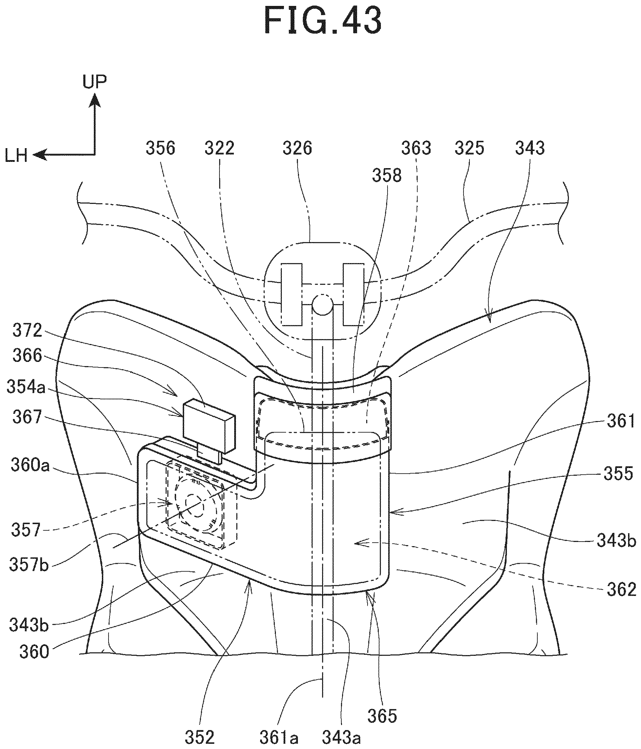

Fig. 43 is a view showing peripheral portions of the inner cover 343 as viewed from the rear side.

Referring to Figs. 39 and 43, the airbag unit 352 is provided on the rear surface of the inner cover 343 and is located in front of the rider seated on the front seat 313a. Further, the airbag unit 352 is provided below the handle 325 on a rear side of the steering shaft 322, and is located at a front part of the straddling space 350.

The rear surface of the inner cover 343 is provided substantially parallel to the head pipe 314 and the steering shaft 322 as viewed from the side of the vehicle, and is inclined rearward along the steering shaft 322.

Further, as shown in Figs. 39 and 43, a central portion 343a in the vehicle width direction located behind the steering shaft 322 is located at a rearmost position on an upper part of the rear surface of the inner cover 343, and side portions 343b located respectively at left and right sides of the central portion 343a are inclined to be located on a front side as approaching the outside in the vehicle width direction.

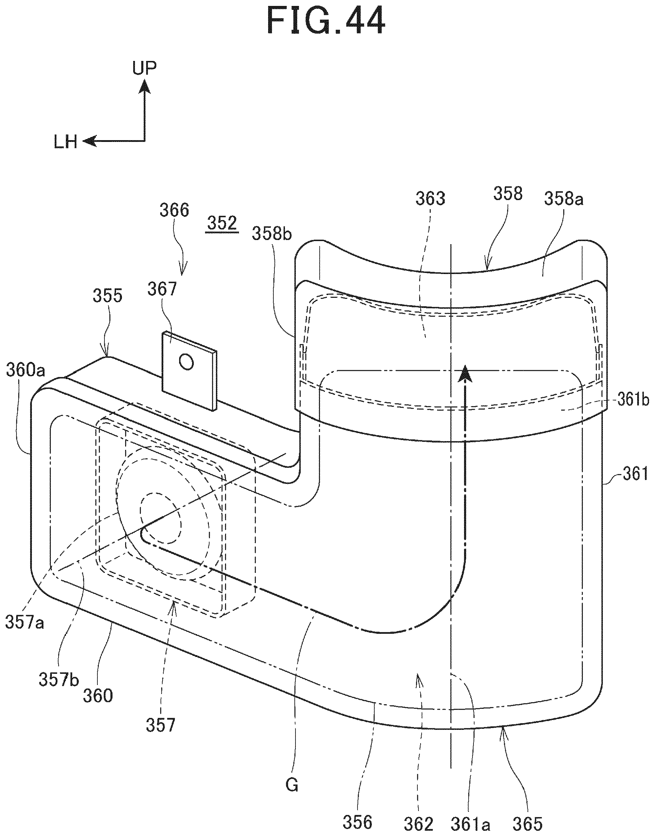

Fig. 44 is a front view of the airbag unit 352 as viewed from a rear side (rider side).

The airbag unit 352 includes a box-shaped retainer 355 provided in front of the occupant seated on the seat 313, an airbag 356 housed in the retainer 355, an inflator 357 that release gas into the airbag 356, and a lid member 358 attached to an upper part of the retainer 355.

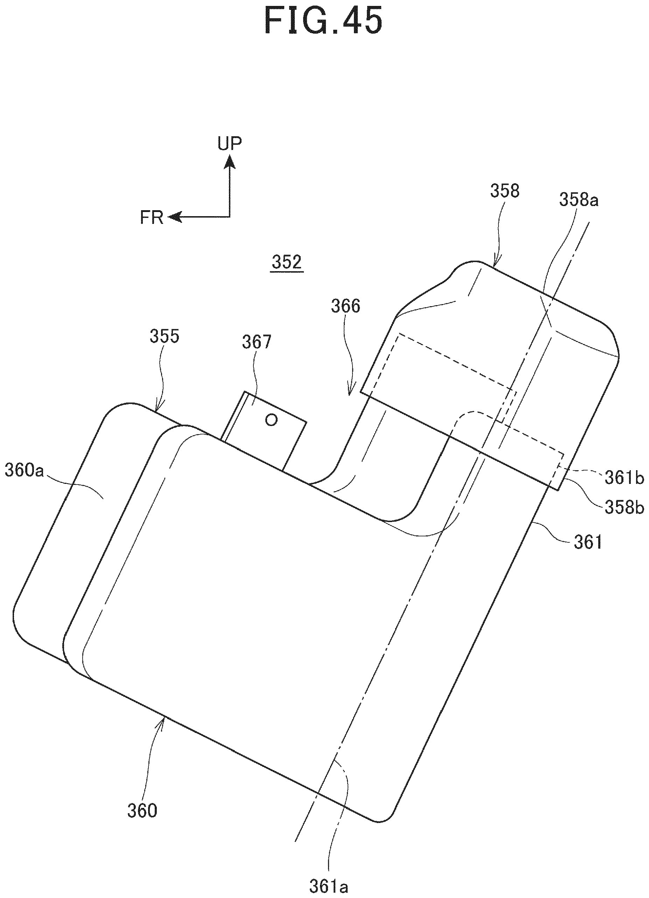

Fig. 45 is a left side view of the airbag unit 352.

Referring to Figs. 43 to 45, the retainer 355 is a box-shaped member formed in an inverted L shape as viewed from the occupant side (rear side). In the following description, an L-shape means an L-shape when the retainer 355 is viewed from the front or the rear. The retainer 355 has an inverted L shape as viewed from the rear, but it can be said that the retainer is formed in an L-shape.

The retainer 355 is located in front of the front seat 313a, and faces the front surface of the front seat 313a.

The retainer 355 includes a left and right extending portion 360 extending in the left-right direction (vehicle width direction) and an upward extending portion 361 extending upward from the left and right extending portion 360.

The left and right extending portion 360 is a box-shaped portion extending in the vehicle width direction. An outer end 360a of the left and right extending portion 360 in the vehicle width direction is located outside in the vehicle width direction from the steering shaft 322 located at the center in the vehicle width. The left and right extending portion 360 extends from the outer end 360a toward the center of the vehicle width along a rear surface of the side portion 343b of the inner cover 343.

The upward extending portion 361 is a box-shaped portion extending in an up-down direction along the steering shaft 322, and is inclined rearward as viewed from the side of the vehicle. The upward extending portion 361 is located at the center of the vehicle width, and covers the central portion 343a of the inner cover 343 from the rear.

A center line 361a of the upward extending portion 361 extending in the up-down direction through a center of the upward extending portion 361 is provided behind the steering shaft 322 to be substantially parallel to the steering shaft 322, and is inclined rearward. The center line 361a is located at the center of the vehicle width.

An inner end of the left and right extending portion 360 in the vehicle width direction is connected to a lower outside surface of the upward extending portion 361. In other words, the upward extending portion 361 extends upward from the inner end of the left and right extending portion 360, and thus the retainer 355 is formed in an L-shape. An L-shaped airbag passage 362 is formed inside the retainer 355, the airbag passage being formed by an internal space of the left and right extending portion 360 and an internal space of the upward extending portion 361.

An upper surface opening 363 is formed on an upper surface of the upward extending portion 361, and thus the airbag passage 362 is exposed upward. The airbag 356 is deployed upward from the upper surface opening 363. An opening surface of the upper surface opening 363 is substantially orthogonal to the center line 361a of the upward extending portion 361. The upper surface opening 363 is closed by the lid member 358.

Referring to Figs. 41 to 44, the lid member 358 includes integrally a lid-upper surface 358a that covers the upper surface opening 363 from above and a lid-peripheral wall portion 358b that fits into a peripheral wall portion 361b of the upper end of the upward extending portion 361.

The lid member 358 is attached to the retainer 355 in such a manner that an inner peripheral surface of the lid-peripheral wall portion 358b is fitted into an outer peripheral surface of the peripheral wall portion 361b.

Referring to Figs. 43 and 44, the inflator 357 is provided in the airbag passage 362, and is located at an upstream end of a deployment path of the airbag 356 in the airbag passage 362.

Specifically, the inflator 357 is provided closer to the outer end 360a (Fig. 43) in the left and right extending portion 360, and is disposed to be offset in the left-right direction (left side) relative to the steering shaft 322 located at the center of the vehicle width. The inflator 357 is fixed to an inner surface of a front surface part of the left and right extending portion 360.

The inflator 357 includes a housing 357a formed in a cylindrical shape (tubular shape). Inside the housing 357a, a gas generating agent and an initiator for initiating a reaction for generating a gas in the gas generating agent are provided. The initiator includes an ignition device.

The inflator 357 is disposed such that an axis 357b of the housing 357a is directed in the front-rear direction of the vehicle. Since the axis 357b is directed in the front-rear direction of the vehicle in this way, even when the inflator 357 has a large diameter, a space occupied by the inflator 357 in the front-rear direction of the vehicle can be reduced, and the inflator 357 can be compactly provided in the front-rear direction.

As shown in Figs. 43 and 44, the airbag 356 is housed in the L-shaped airbag passage 362, and is provided from the left and right extending portion 360 to the upward extending portion 361. The airbag passage 362 is an airbag housing space.

The airbag 356 is configured in which the upstream end of the airbag 356 in the flow of gas is connected to the inflator 357 in the left and right extending portion 360.

Referring to Fig. 42, the acceleration sensor 353 and the airbag unit 352 are electrically connected to the airbag control device 354a.

The acceleration sensor 353 is connected to the airbag control device 354a by the electric wire 377a.

The airbag control device 354a determines, based on acceleration detected by the acceleration sensor 353, whether the airbag unit 352 is activated.

The airbag control device 354a is connected to the inflator 357 of the airbag unit 352 by wiring 357c (Fig. 42) .

When causing the airbag unit 352 to operate, the airbag control device 354a causes the inflator 357 to operate and release the gas into the airbag 356. The airbag 356 inflates due to a pressure of the gas, and deploys upward.

The airbag control device 354a is an ECU (Electronic Control Unit) including an arithmetic operation portion (not shown), a storage portion 370, and a deployment control portion 371. The arithmetic operation portion is a processor such as a CPU. The airbag control device 354a executes a program stored in the storage portion 370 to control an operation of the airbag unit 352.

The storage portion 370 includes a non-volatile storage device such as flash ROM or an EEPROM, and stores the program to be executed by the arithmetic operation portion and data to be processed by the arithmetic operation portion.

The deployment control portion 371 causes the inflator 357 to operate based on a detection result of the acceleration sensor 353, and controls deployment timing of the airbag 356. The deployment control portion 371 is formed by cooperation of software with hardware when the arithmetic operation portion executes the program.

The storage portion 370 stores an operation record of the deployment of the airbag 356 in the non-volatile storage device. The operation record of the deployment of the airbag 356 indicates, for example, the detection value of the acceleration sensor 353 and the deployment timing of the airbag 356. Therefore, a worker can acquire, for example, the operation record of the deployment of the airbag 356 at the time of collision of the motorcycle 301 from the storage portion 370.

The engine control device 359 is an ECU that electrically controls ignition and fuel supply of the power unit 312. The engine control device 359 and the airbag control device 354a are provided separately from each other. The engine control device 359 and the airbag control device 354a are not connected to each other, and operate independently of each other.

A flow of gas G released from the inflator 357 will be described below.

As shown in Fig. 44, the inflator 357 releases the gas G into the airbag 356 toward the rear of the vehicle along the axis 357b.

The gas G released from the inflator 357 into the airbag 356 is guided in its path by the left and right extending portion 360 and the upward extending portion 361, and flows in an L-shape in the airbag passage 362.

When the gas G flows from the left and right extending portion 360 to the upward extending portion 361, the flow of the gas in the left-right direction changes to an upward flow, and the gas flows upward in the upward extending portion 361. In other words, the left and right extending portion 360 and the upward extending portion 361 forms a deflection portion 365 that deflects the overall flow of the gas G in the left-right direction toward the upward flow.

When the airbag 356 inflates upward due to the gas G flowing upward in the upward extending portion 361, the lid member 358 is pushed by the airbag 356 and is cleaved. The airbag 356 deploys upward from the upper surface opening 363 due to the gas G flowing upward.

As shown in Fig. 43, the airbag control device 354a is configured in which a circuit portion such as a CPU is housed in a box-shaped case 372. The engine control device 359 (Fig. 42) is housed in a case provided separately from the case 372 of the airbag control device 354a. For this reason, each of the airbag control device 354a and the engine control device 359 can be made smaller, and can be easily disposed at a desired location.

As shown in Fig. 43, at the rear of the inner cover 343, the airbag control device 354a is disposed above the left and right extending portion 360 and on the side of the upward extending portion 361 of the retainer 355. In other words, the airbag control device 354a is disposed in a space portion 366 sandwiched between the left and right extending portion 360 and the upward extending portion 361.

The retainer 355 includes a stay 367 extending upward from the left and right extending portion 360, and the airbag control device 354a is supported by the stay 367. The stay configured to support the airbag control device 354a may extend laterally from the upward extending portion 361.

Specifically, the airbag control device 354a is disposed inward in the vehicle width direction from the outer end 360a in the vehicle width direction of the left and right extending portion 360 and below the upper surface opening 363 located at the upper end of the upward extending portion 361. In this way, since the airbag control device 354a is disposed in the space portion 366 defined by the left and right extending portion 360 and the upward extending portion 361 of the L-shaped retainer, the airbag control device 354a can be compactly disposed.

The space portion 366 is located directly above the inflator 357. Therefore, the airbag control device 354a can be disposed near the inflator 357, and the airbag control device 354a can be connected to the inflator 357 with a short wiring.

As shown in Fig. 41, the airbag control device 354a is disposed behind the front ends of the head pipe 314 and the down frame 315 as viewed from the top of the vehicle. Further, the airbag control device 354a is disposed between the left and right lower frames 316 in the vehicle width direction and the left and right upper frames 389 as viewed from the top of the vehicle.

The body frame 310 includes a frame-shaped frame portion 375 that is formed by the head pipe 314, the left and right down frames 315, the left and right lower frames 316, the left and right seat frames 317, and the fourth cross frame 321 and is long in the front-rear direction as viewed from the top of the vehicle.

The airbag control device 354a is disposed inside a region surrounded by the frame-shaped frame portion 375 as viewed from the top of the vehicle. Thus, even when a large impact acts on the motorcycle 301 due to a collision, the airbag control device 354a can be effectively protected by the frame-shaped frame portion 375. Therefore, the airbag control device 354a can appropriately deploy the airbag 356 at the time of collision of the motorcycle 301, and the worker can acquire the operation record of the airbag 356 from the storage portion 370 of the airbag control device 354a after the collision.

As shown in Fig. 39, the airbag control device 354a is disposed above the lower end 336b of the air cleaner box 336. The lower end 336b of the air cleaner box 336 is a lower end of the intake device 335, and is located below the intake port 336a.

In a case where the motorcycle 301 runs on a puddle, when a water depth of the puddle is deeper than a height of the lower end 336b of the air cleaner box 336, water may enter the air cleaner box 336, so that the motorcycle 301 does not run. In other words, since the motorcycle 301 is configured in which the airbag control device 354a is located higher than the height of the lower end 336b of the air cleaner box 336, the airbag control device 354a can be prevented from being immersed in the puddle during running of the motorcycle 301.

Further, the airbag control device 354a is disposed above the intake port 336a of the air cleaner box 336. When the water depth of the puddle is deeper than the height of the intake port 336a of the air cleaner box 336, there is a high possibility that water will enter the air cleaner box 336 from the intake port 336a, so that the motorcycle 301 does not run. In other words, since the motorcycle 301 is configured in which the airbag control device 354a is located higher than the height of the intake port 336a, the airbag control device 354a can be prevented from being immersed in the puddle during running of the motorcycle 301.

As shown in Figs. 40 and 41, the pair of acceleration sensors 353 are provided at left and right rear ends of the left and right lower frames 316.

Specifically, the acceleration sensor 353 is disposed at a connection portion 378 to which the rear end of the lower frame 316 and the lower end of the lower seat frame 391 are connected. The connection portion 378 is a bent portion in which a part extending rearward in the body frame 310 is bent rearward and upward.

The acceleration sensor 353 is fixed inside surfaces of the pair of left and right connection portions 378 in the vehicle width direction. In other words, the acceleration sensor 353 is covered with the connection portions 378 from the outside in the vehicle width direction.

The acceleration sensor 353 may be disposed at a position on the inside surface of the upper frame 389 in front of the connection portion 378.

The electric wire 377a is disposed along the body frame 310 to connect the acceleration sensor 353 and the airbag control device 354a.

Specifically, the electric wire 377a extends downward along the rear surface of the head pipe 314 from the airbag control device 354a disposed on the rear side of the head pipe 314.

The pair of electric wires 377a extending downward along the rear surface of the head pipe 314 extend rearward and downward along the inside surfaces in the vehicle width direction of the left and right upper frames 389 and are connected to the left and right acceleration sensors 353, respectively. The electric wire 377a is supported by the upper frame 389 through a fixture provided on the upper frame 389.

In this way, the electric wire 377a is covered from the outside in the vehicle width direction with the upper frame 389. For this reason, the upper frame 389 can protect the electric wire 377a from the impact applied from the outside.

In addition, since the acceleration sensor 353 is covered with the connection portion 378 from the outside in the vehicle width direction, the connection portion 378 can protect the acceleration sensor 353 from the impact applied from the outside in the vehicle width direction. The connection portion 378 is a portion where the lower frame 316 and the lower seat frame 391 are connected to each other and has high rigidity, thereby capable of effectively protect the acceleration sensor 353.

Further, the acceleration sensor 353 is provided on the rear end side of the lower frame 316 in front of the power unit 312, and thus is close to the position of the center of gravity of the motorcycle 301 in the vehicle front-rear direction. Therefore, the acceleration sensor 353 can satisfactorily detect the acceleration when the motorcycle 301 collides.

As described above, according to the fifteenth embodiment to which the present invention is applied, the motorcycle 301 including the power unit 312, the body frame 310, the retainer 355, the inflator 357, and the airbag 356 that is housed in the retainer 355, inflates by the gas released from the inflator 357, and deploys to the outside of the retainer 355 includes: the airbag control device 354a that is provided separately from the engine control device 359 configured to control the power unit 312 and controls the deployment timing of the airbag 356; and the intake device 335 that supplies the taken-in outside air to the power unit 312 as intake air, the airbag control device 354a being disposed above the lower end 336b of the intake device 335 and being disposed inside the region surrounded by the body frame 310 as viewed from the top of the vehicle.

According to such a configuration, since the airbag control device 354a is disposed inside the region surrounded by the body frame 310 as viewed from the top of the vehicle, the airbag control device 354a is effectively protected from the impact by the body frame 310. Further, the airbag control device 354a is disposed above the lower end 336b of the intake device 335, and thus is hardly affected by water.

Further, the retainer 355 includes the left and right extending portion 360 extending to the left and right and the upward extending portion 361 extending upward from the end of the left and right extending portion 360 and is provided in the L-shape, and the airbag control device 354a is disposed above the left and right extending portion 360 and on the side of the upward extending portion 361.

According to such a configuration, the airbag control device 354a can be compactly disposed using the space above the left and right extending portion 360 and on the side of the upward extending portion 361 in the L-shaped retainer 355.

In addition, the inflator 357 is provided in the retainer 355, and the airbag control device 354a is connected to the inflator 357 and is fixed to the retainer 355.

According to such a configuration, since the airbag control device 354a can be firmly fixed to the retainer 355, the airbag control device 354a can be satisfactorily connected to the inflator 357, and the airbag 356 can appropriately deploy.

Further, the power unit 312 is a unit swing engine that is swingably supported by the body frame 310 and supports the rear wheel 303, and the intake device 335 is fixed to the unit swing engine.

According to such a configuration, in the motorcycle 301 in which the intake device 335 is fixed to the unit swing engine, it is possible to effectively prevent the influence of water on the airbag control device 354a.

The airbag control device 354a includes the storage portion 370 that holds the operation record of the airbag 356 even after the airbag 356 deploys.

According to such a configuration, since the airbag control device 354a is disposed inside the region surrounded by the body frame 310 and protected, the operation record of the airbag 356 can be acquired from the storage portion 370 even after the airbag 356 deploys.

Further, the airbag control device 354a controls the deployment timing of the airbag 356 based on the detection value of the acceleration sensor 353, and the electric wire 377a configured to connect the acceleration sensor 353 and the airbag control device 354a to each other is arranged along the inside surface of the body frame 310 in the vehicle width direction.

According to such a configuration, the electric wire 377a configured to connect the acceleration sensor 353 and the airbag control device 354a to each other can be effectively protected by the body frame 310.

Further, the body frame 310 includes the down frame 315 extending downward from the head pipe 314 located at the front end of the body frame 310, the lower frame 316 extending rearward from the down frame 315, and the seat frame 317 extending rearward and upward from the rear end of the lower frame 316, the power unit 312 is disposed behind the seat frame 317, and the acceleration sensor 353 is disposed on the inside surface of the connection portion 378 between the lower frame 316 and the seat frame 317 in the vehicle width direction.

According to such a configuration, the acceleration sensor 353 can be disposed near the position of the center of gravity of the motorcycle 301 and can satisfactorily detect the acceleration. In addition, the acceleration sensor 353 can be effectively protected by the connection portion 378 between the lower frame 316 and the seat frame 317.

### [Sixteenth Embodiment]

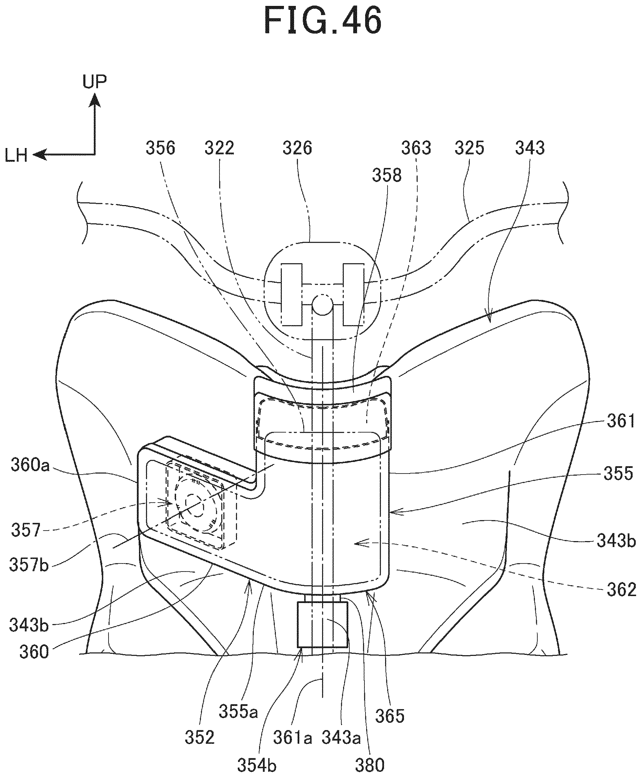

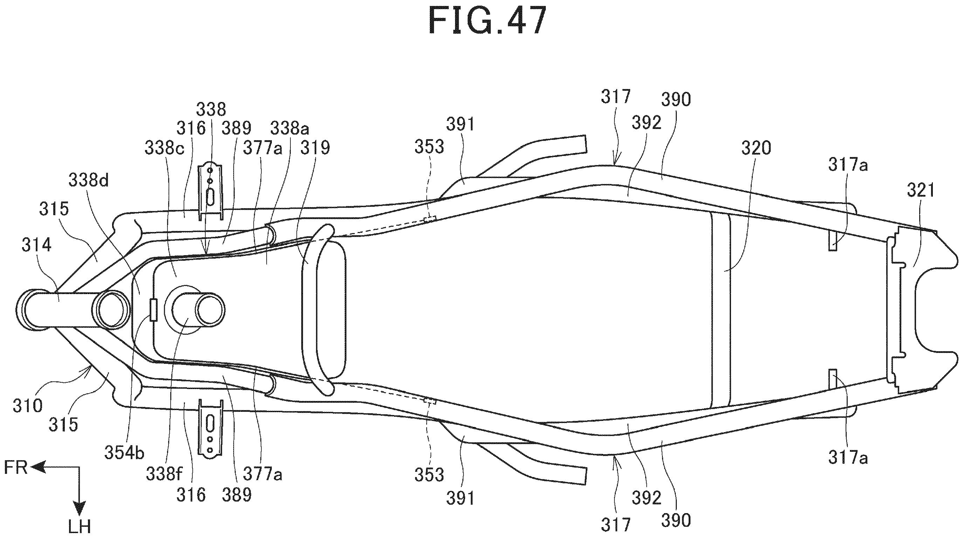

A sixteenth embodiment to which the present invention is applied will be described below with reference to Figs. 46 and 47. In the sixteenth embodiment, the same components as those in the fifteenth embodiment are denoted by the same reference numerals and will not be described.

The sixteenth embodiment is different from the fifteenth embodiment in terms of a position where an airbag control device 354b is disposed.

Fig. 46 is a view of a peripheral portion of an inner cover 343 according to the sixteenth embodiment as viewed from the rear. Fig. 47 is a plan view of the body frame 310 and the airbag control device 354b as viewed from above. The airbag control device 354b is configured in the same manner as the airbag control device 354a of the fifteenth embodiment, and is connected to an inflator 357.

The airbag control device 354b is disposed below the retainer 355 to be adjacent to a lower surface 355a of the retainer 355, and is located behind the inner cover 343.

The retainer 355 includes a stay 380 extending downward from the retainer 355, and the airbag control device 354b is supported by the stay 380.

Specifically, the airbag control device 354b is located at the center of the vehicle width, and overlaps the head pipe 314 from the rear.

As shown in Fig. 47, the airbag control device 354b is disposed behind the front end of the lower frame 316 and the head pipe 314 as viewed from the top of the vehicle. Further, the airbag control device 354b is disposed between the left and right lower frames 316 in the vehicle width direction as viewed from the top of the vehicle.

In other words, the airbag control device 354b is disposed inside a region surrounded by the frame-shaped frame portion 375 as viewed from the top of the vehicle. Therefore, the airbag control device 354b can be protected from an impact by the frame-shaped frame portion 375.

Referring to Figs. 39 and 46, the airbag control device 354b (not shown in Fig. 39) is disposed above the intake port 336a and the lower end 336b of the air cleaner box 336. Therefore, the airbag control device 354b can be prevented from being immersed in the puddle during running of the motorcycle 301.

The electric wires 377a extend along the rear surface of the down frame 315 and the inside surfaces of the left and right lower frames 316 in the vehicle width direction from the airbag control device 354b disposed on the rear side of the head pipe 314, and are connected to the left and right acceleration sensors 353, respectively.

As described above, according to the sixteenth embodiment to which the present invention is applied, the airbag control device 354b is disposed below the retainer 355 to be adjacent to the lower surface 355a of the retainer 355. According to such a configuration, the airbag control device 354b can be compactly disposed below the retainer 355 using the space adjacent to the lower surface 355a of the retainer 355.

Further, since the airbag control device 354b can be fixed to the retainer 355, the airbag control device 354b can be satisfactorily connected to the inflator 357, and the airbag 356 can appropriately deploy.

### [Seventeenth Embodiment]

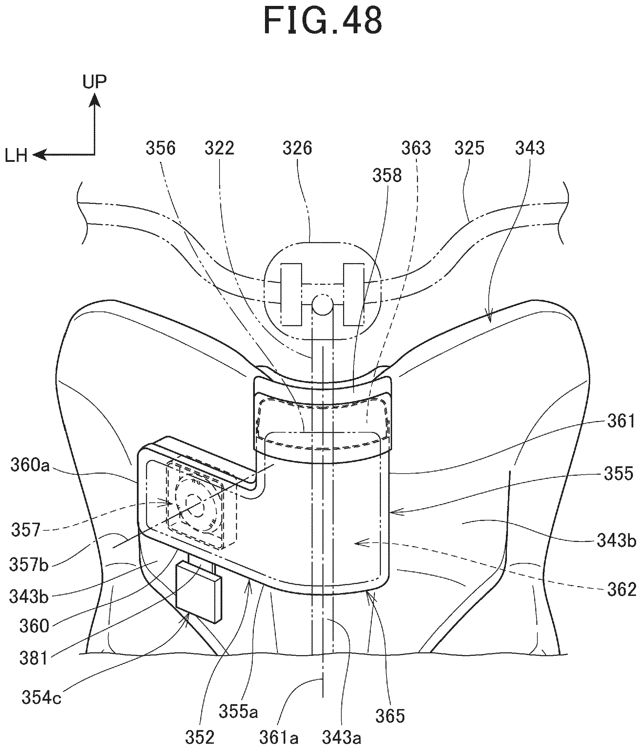

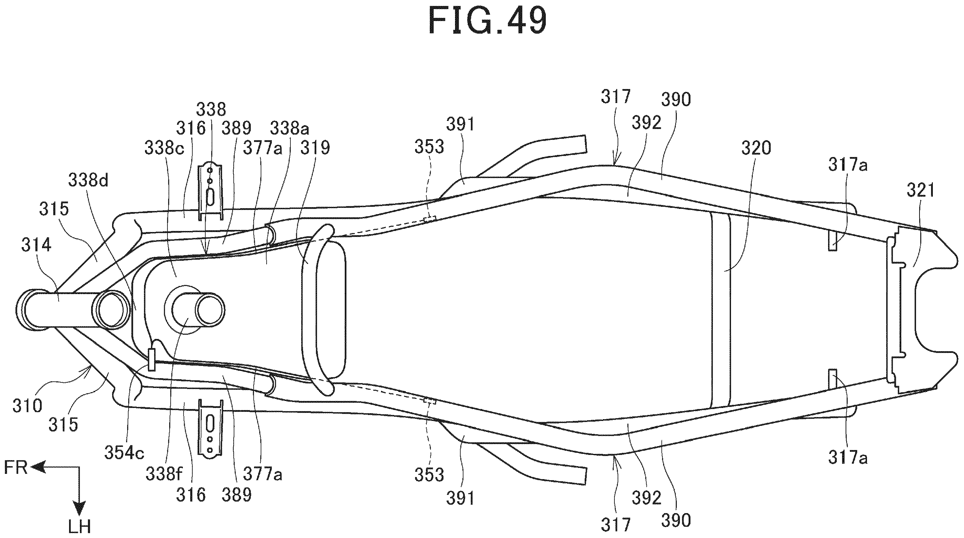

A seventeenth embodiment to which the present invention is applied will be described below with reference to Figs. 48 and 49. In the seventeenth embodiment, the same components as those in the fifteenth embodiment are denoted by the same reference numerals and will not be described.

The seventeenth embodiment is different from the fifteenth embodiment in terms of a position where an airbag control device 354c is disposed.

Fig. 48 is a view of a peripheral portion of an inner cover 343 according to the seventeenth embodiment as viewed from the rear. Fig. 49 is a plan view of the body frame 310 and the airbag control device 354c as viewed from above. The airbag control device 354c is configured in the same manner as the airbag control device 354a of the fifteenth embodiment, and is connected to an inflator 357.

The airbag control device 354c is disposed below the retainer 355 to be adjacent to a lower surface 355a of the retainer 355, and is located behind the inner cover 343.

The retainer 355 includes a stay 381 extending downward from the retainer 355, and the airbag control device 354c is supported by the stay 381.

Specifically, the airbag control device 354c is disposed at the center of the vehicle width in the vehicle width direction to be offset toward the inflator 357. At least a part of the airbag control device 354c is provided at the same position as the inflator 357 in the vehicle width direction. Therefore, the airbag control device 354c can be disposed near the inflator 357, and the airbag control device 354c can be connected to the inflator 357 with a short wiring.

As shown in Fig. 49, the airbag control device 354c is disposed behind the front end of the lower frame 316 and the head pipe 314 as viewed from the top of the vehicle. Further, the airbag control device 354c is disposed between the left and right lower frames 316 in the vehicle width direction as viewed from the top of the vehicle.

In other words, the airbag control device 354c is disposed inside a region surrounded by the frame-shaped frame portion 375 as viewed from the top of the vehicle. Therefore, the airbag control device 354c can be protected from an impact by the frame-shaped frame portion 375.

Referring to Figs. 39 and 48, the airbag control device 354c (not shown in Fig. 39) is disposed above the intake port 336a and the lower end 336b of the air cleaner box 336. Therefore, the airbag control device 354c can be prevented from being immersed in the puddle during running of the motorcycle 301.

The electric wires 377a extend along the rear surface of the down frame 315 and the inside surfaces of the left and right lower frames 316 in the vehicle width direction from the airbag control device 354c disposed on the rear side of the head pipe 314, and are connected to the left and right acceleration sensors 353, respectively.

As described above, according to the seventeenth embodiment to which the present invention is applied, the airbag control device 354c is disposed below the retainer 355 to be adjacent to the lower surface 355a of the retainer 355. According to such a configuration, the airbag control device 354c can be compactly disposed below the retainer 355 using the space adjacent to the lower surface 355a of the retainer 355.

Further, since the airbag control device 354c can be fixed to the retainer 355, the airbag control device 354c can be satisfactorily connected to the inflator 357, and the airbag 356 can appropriately deploy.

### [Eighteenth Embodiment]

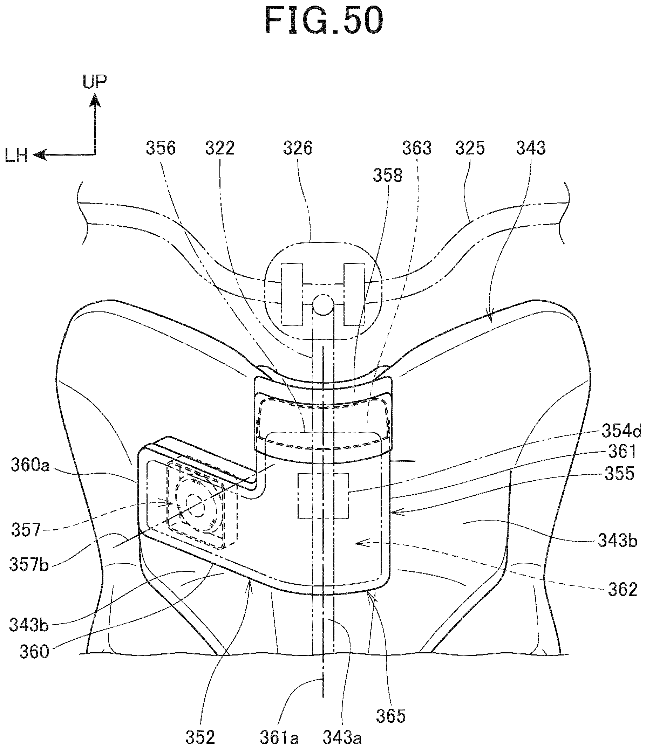

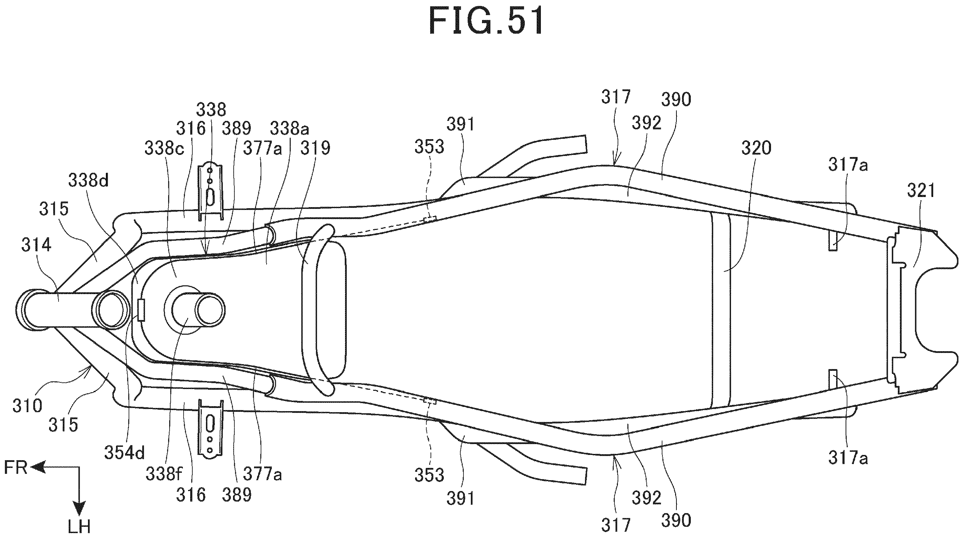

An eighteenth embodiment to which the present invention is applied will be described below with reference to Figs. 50 and 51. In the eighteenth embodiment, the same components as those in the fifteenth embodiment are denoted by the same reference numerals and will not be described.

The eighteenth embodiment is different from the fifteenth embodiment in terms of a position where an airbag control device 354d is disposed.

Fig. 50 is a view of a peripheral portion of an inner cover 343 according to the eighteenth embodiment as viewed from the rear. Fig. 51 is a plan view of the body frame 310 and the airbag control device 354d as viewed from above. The airbag control device 354d is configured in the same manner as the airbag control device 354a of the fifteenth embodiment, and is connected to an inflator 357.

The airbag control device 354d is disposed at the center of the vehicle width and is disposed between the head pipe 314 and the retainer 355 in the vehicle front-rear direction. Specifically, the airbag control device 354d is disposed in front of the retainer 355 between the inner cover 343 and the head pipe 314. The airbag control device 354d may be disposed between the retainer 355 and the steering shaft 322.

As shown in Fig. 51, the airbag control device 354d is disposed behind the head pipe 314 as viewed from the top of the vehicle. Further, the airbag control device 354d is disposed between the left and right lower frames 316 in the vehicle width direction as viewed from the top of the vehicle.

In other words, the airbag control device 354d is disposed inside a region surrounded by the frame-shaped frame portion 375 as viewed from the top of the vehicle. Therefore, the airbag control device 354d can be protected from an impact by the frame-shaped frame portion 375.

Referring to Figs. 39 and 50, the airbag control device 354d (not shown in Fig. 39) is disposed above the intake port 336a and the lower end 336b of the air cleaner box 336. Therefore, the airbag control device 354d can be prevented from being immersed in the puddle during running of the motorcycle 301.

The electric wires 377a extend along the rear surface of the down frame 315 and the inside surfaces of the left and right lower frames 316 in the vehicle width direction from the airbag control device 354d disposed on the rear side of the head pipe 314, and are connected to the left and right acceleration sensors 353, respectively.

As described above, according to the eighteenth embodiment to which the present invention is applied, the retainer 355 is disposed behind the head pipe 314 located at the front end of the body frame 310, and the airbag control device 354d is disposed between the head pipe 314 and the retainer 355.

According to such a configuration, the airbag control device 354d can be compactly disposed using a space between the head pipe 314 and the retainer 355.

### [Nineteenth Embodiment]

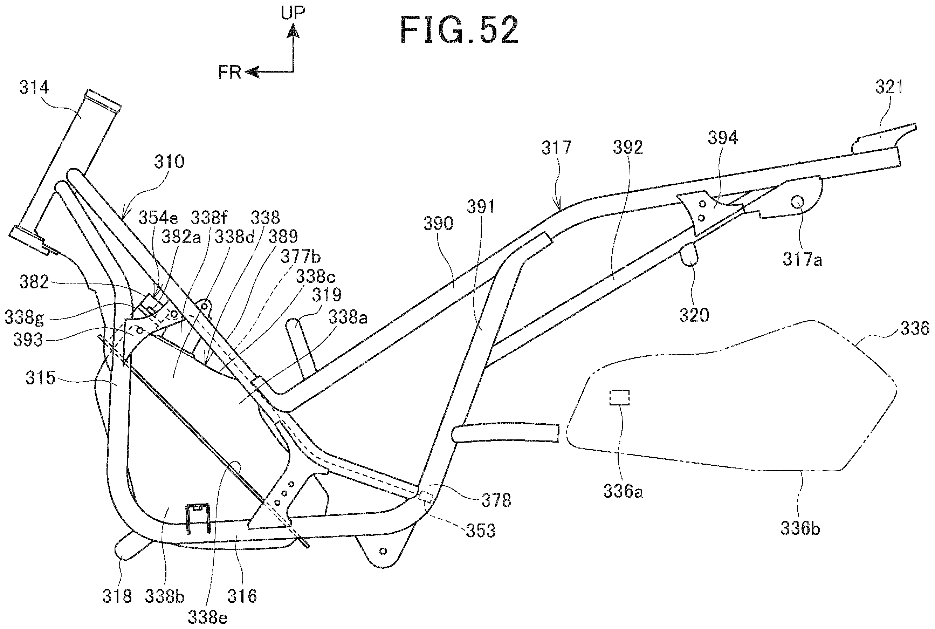

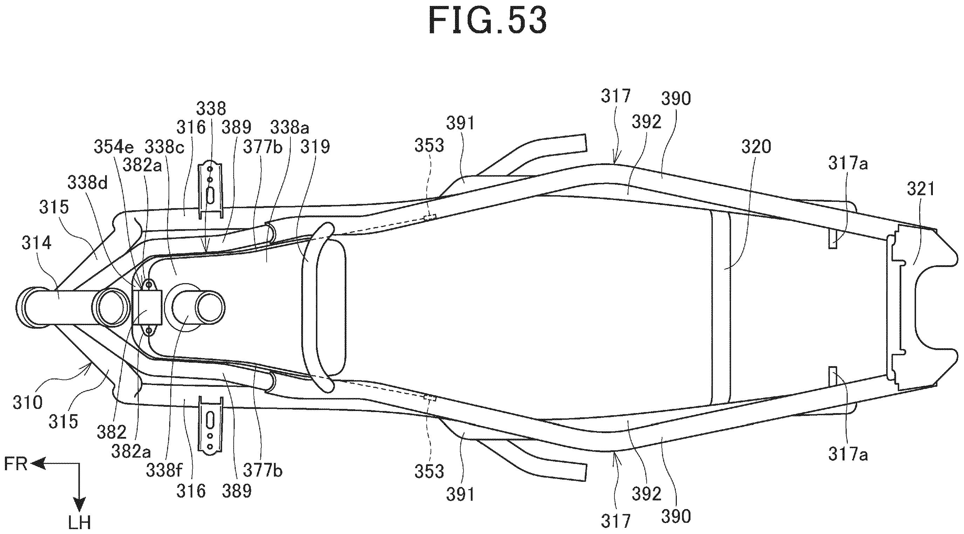

A nineteenth embodiment to which the present invention is applied will be described below with reference to Figs. 52 and 53. In the nineteenth embodiment, the same components as those in the fifteenth embodiment are denoted by the same reference numerals and will not be described.

The nineteenth embodiment is different from the fifteenth embodiment in terms of a position where an airbag control device 354e is disposed.

Fig. 52 is a left side view of a body frame 310 according to the nineteenth embodiment. Fig. 53 is a plan view of the body frame 310 as viewed from above. In Figs. 52 and 53, the fuel tank 338 and the airbag control device 354e are shown together with the body frame 310. The airbag control device 354e is configured in the same manner as the airbag control device 354a of the fifteenth embodiment, and is connected to an inflator 357.

As shown in Figs. 52 and 53, the airbag control device 354e is disposed along an upper surface 338c of an upper half body 338a of the fuel tank 338, and is fixed to the fuel tank 338.

The fuel tank 338 includes a stay 338g that supports the airbag control device 354e at a front end in front of the oil filler port 338f.

The stay 338g extends upward from a front surface of a flange 338e and a peripheral surface 338d of the upper half body 338a. The stay 338g is disposed at the center of the vehicle width. An upper surface of the stay 338g is located below an upper end of the oil filler port 338f, and is substantially parallel to the upper surface 338c of the fuel tank 338.

A case 382 of the airbag control device 354e includes a pair of attaching portions 382a extending in the left and right sides.

The airbag control device 354e is placed on an upper surface of the stay 338g, and is fastened to the stay 338g by a fixture inserted into the attaching portion 382a from above.

The airbag control device 354e is disposed in front of the oil filler port 338f to be adjacent to a front surface of the oil filler port 338f inclined to rise rearward as viewed from the side of the vehicle.

The airbag control device 354e is located behind a front end of the flange 338e that is a front end of the fuel tank 338. The airbag control device 354e is covered from above with a center cover 344.

As shown in Fig. 53, the airbag control device 354e is disposed behind front ends of a head pipe 314 and a down frame 315 as viewed from the top of the vehicle. Further, the airbag control device 354e is disposed between left and right lower frames 316 in the vehicle width direction and between left and right upper frame 389 as viewed from the top of the vehicle.

In other words, the airbag control device 354e is disposed inside a region surrounded by a frame-shaped frame portion 375 as viewed from the top of the vehicle. Therefore, the airbag control device 354e can be protected from an impact by the frame-shaped frame portion 375.

Referring to Figs. 39 and 52, the airbag control device 354e is disposed above an intake port 336a and a lower end 336b of an air cleaner box 336. Therefore, the airbag control device 354e can be prevented from being immersed in the puddle during running of the motorcycle 301.

The airbag control device 354e is located above the upper surface 338c of the fuel tank 338 and between the down frame 315 and the upper frame 389 as viewed from the side of the vehicle.

Electric wires 377b configured to connect the airbag control device 354e with the acceleration sensor 353 extend upward from the airbag control device 354e toward the upper frame 389, extend rearward along inside surfaces of the upper frames 389 in the vehicle width direction, and are connected to the left and right acceleration sensors 353, respectively. Therefore, the electric wire 377b can be covered from the outside with the upper frame 389, and the electric wire 377b can be effectively protected. The electric wire 377b is supported by the upper frame 389 through a fixture provided on the upper frame 389.

The acceleration sensor 353 may be disposed on the inside surface of the upper frame 389 at a position in front of a connection portion 378 and on a rear side of the airbag control device 354e.

As described above, according to the nineteenth embodiment to which the present invention is applied, the airbag control device 354e is disposed along the upper surface 338c of the fuel tank 338, and is fixed to the fuel tank 338.

According to such a configuration, the airbag control device 354e can be compactly disposed along the upper surface 338c of the fuel tank 338, and can be firmly fixed to the upper surface 338c of the fuel tank 338.

Further, the fuel tank 338 includes the oil filler port 338f that is erected upward from the upper surface 338c, and the airbag control device 354e is disposed adjacent to the oil filler port 338f.

According to such a configuration, the airbag control device 354e can be compactly disposed using a space around the oil filler port 338f that is erected upward.

In addition, the body frame 310 includes the down frame 315 extending downward from the head pipe 314 located at the front end of the body frame 310 and the lower frame 316 extending rearward from the down frame 315, the fuel tank 338 is disposed behind the down frame 315 and above the lower frame 316, the upper surface 338c of the fuel tank 338 is inclined to descend rearward, the oil filler port 338f extends upward from the upper surface 338c so as to rise rearward, and the airbag control device 354e is disposed in front of the oil filler port 338f.

According to such a configuration, the airbag control device 354e can be compactly disposed using a space in front of the oil filler port 338f extending upward so as to rise rearward from the upper surface 338c of the fuel tank 338 inclined to descend rearward.

Further, the body frame 310 includes the pair of left and right upper frames 389 through which the head pipe 314 and the rear end of the lower frame 316 are connected to each other, the upper frame 389 is inclined above the upper surface 338c of the fuel tank 338 to descend rearward along the upper surface 338c, and the airbag control device 354e is disposed between the left and right upper frames 389.

According to such a configuration, the airbag control device 354e can be effectively protected from an impact by the left and right upper frames 389.

### [Twentieth Embodiment]

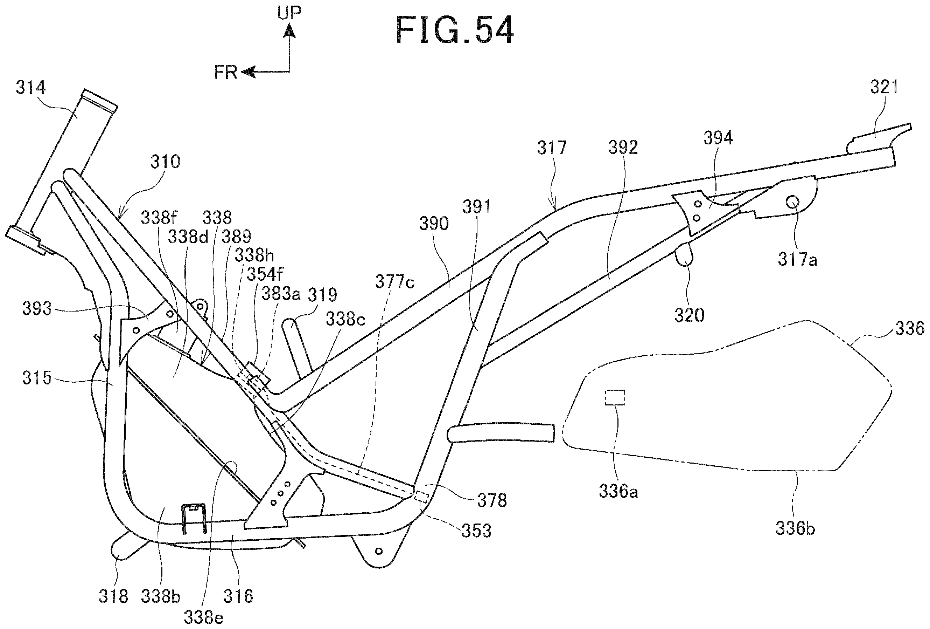

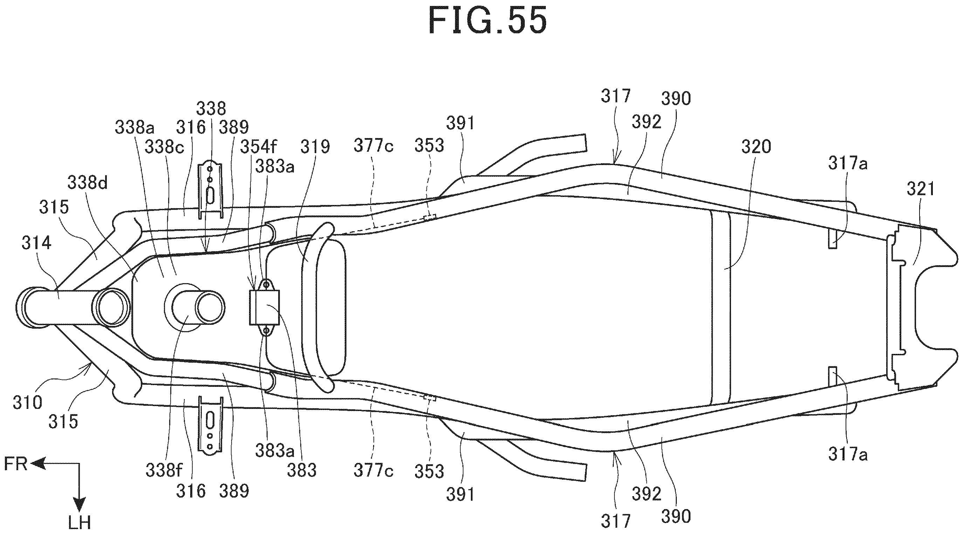

A twentieth embodiment to which the present invention is applied will be described below with reference to Figs. 54 and 55. In the twentieth embodiment, the same components as those in the fifteenth embodiment are denoted by the same reference numerals and will not be described.

The twentieth embodiment is different from the fifteenth embodiment in terms of a position where an airbag control device 354f is disposed.

Fig. 54 is a left side view of a body frame 310 according to the twentieth embodiment. Fig. 55 is a plan view of the body frame 310 as viewed from above. In Figs. 54 and 55, the fuel tank 338 and the airbag control device 354f are shown together with the body frame 310. The airbag control device 354f is configured in the same manner as the airbag control device 354a of the fifteenth embodiment, and is connected to an inflator 357.

As shown in Figs. 54 and 55, the airbag control device 354f is disposed along an upper surface 338c of an upper half body 338a of a fuel tank 338, and is fixed to the fuel tank 338.

The fuel tank 338 includes a stay 338h, which supports the airbag control device 354f, at a rear part of an upper surface 338c behind the oil filler port 338f.

The stay 338h is disposed at a rear part of the upper half body 338a in the center of the vehicle width. An upper surface of the stay 338h is substantially parallel to the upper surface 338c of the fuel tank 338.

A case 383 of the airbag control device 354f includes a pair of attaching portions 383a extending in the left and right sides.

The airbag control device 354f is placed on an upper surface of the stay 338h, and is fastened to the stay 338h by a fixture inserted into the attaching portion 383a from above.

As shown in Fig. 55, the airbag control device 354f is disposed behind a front end of a down frame 315 and a head pipe 314 as viewed from the top of the vehicle. Further, the airbag control device 354f is disposed between left and right lower frames 316 and between left and right upper frames 389 in the vehicle width direction as viewed from the top of the vehicle.

In other words, the airbag control device 354f is disposed inside a region surrounded by a frame-shaped frame portion 375 as viewed from the top of the vehicle. Therefore, the airbag control device 354f can be protected from an impact by the frame-shaped frame portion 375.

Referring to Figs. 39 and 54, the airbag control device 354f is disposed above an intake port 336a and a lower end 336b of an air cleaner box 336. Therefore, the airbag control device 354f can be prevented from being immersed in the puddle during running of the motorcycle 301.

The airbag control device 354f is located above the upper surface 338c of the fuel tank 338, and overlaps the upper frame 389 as viewed from the side of the vehicle.

Electric wires 377c configured to connect the airbag control device 354f with the acceleration sensor 353 extend rearward along inside surfaces of the left and right upper frames 389 in the vehicle width direction from the airbag control device 354f, and are connected to the left and right acceleration sensors 353, respectively. Therefore, the electric wire 377c can be covered from the outside with the upper frame 389, and the electric wire 377c can be effectively protected. The electric wire 377c is supported by the upper frame 389 through a fixture provided on the upper frame 389.

The acceleration sensor 353 may be disposed on the inside surface of the upper frame 389 at a position in front of the connection portion 378 and on the rear side of the airbag control device 354f.

As described above, according to the twentieth embodiment to which the present invention is applied, the body frame 310 includes the down frame 315 extending downward from the head pipe 314 located at the front end of the body frame 310 and the lower frame 316 extending rearward from the down frame 315, the fuel tank 338 is disposed behind the down frame 315 and above the lower frame 316, the upper surface 338c of the fuel tank 338 is inclined to descend rearward, and the airbag control device 354f is disposed at the rear part of the upper surface 338c.

According to such a configuration, the airbag control device 354f can be compactly disposed using a space above the rear part of the upper surface 338c of the fuel tank 338 that descends rearward.

Further, the upper frame 389 is inclined above the upper surface 338c of the fuel tank 338 to descend rearward along the upper surface 338c, and the airbag control device 354f is disposed between the left and right upper frames 389.

According to such a configuration, the airbag control device 354f can be effectively protected from an impact by the left and right upper frames 389.

### [Twenty-first Embodiment]

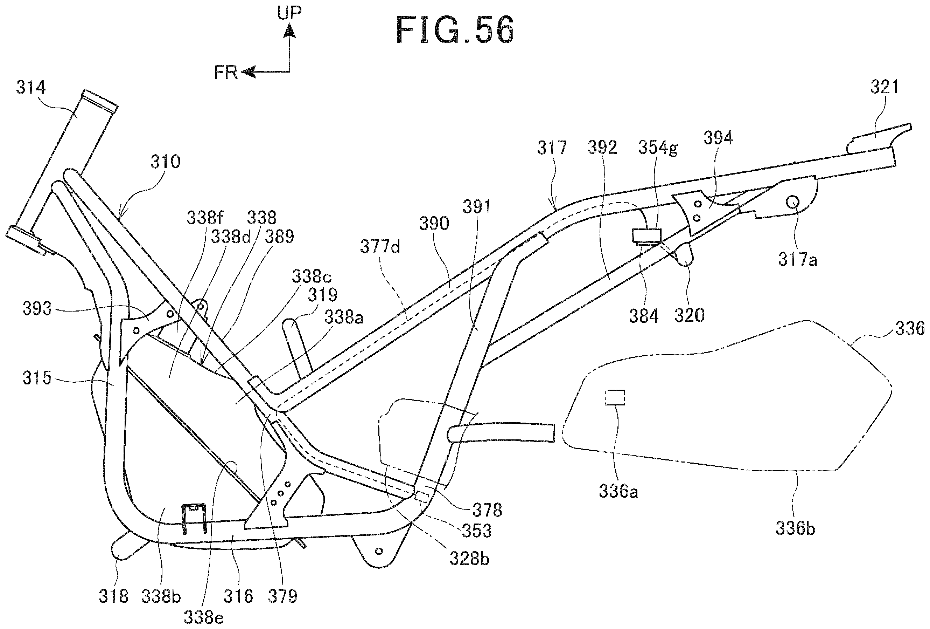

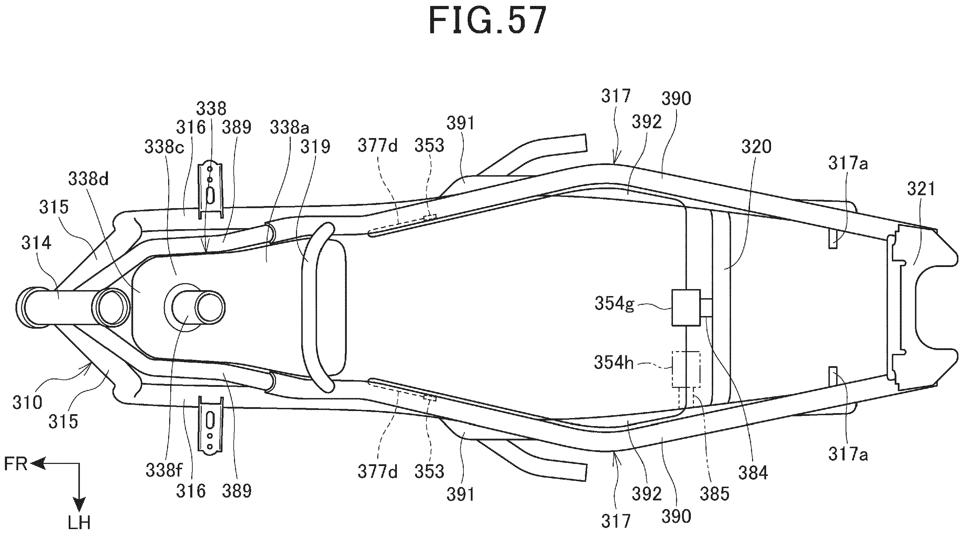

A twenty-first embodiment to which the present invention is applied will be described below with reference to Figs. 56 and 57. In the twenty-first embodiment, the same components as those in the fifteenth embodiment are denoted by the same reference numerals and will not be described.

The twenty-first embodiment is different from the fifteenth embodiment in terms of a position where an airbag control device 354g is disposed.

Fig. 56 is a left side view of a body frame 310 according to the twenty-first embodiment. Fig. 57 is a plan view of the body frame 310 as viewed from above. In Figs. 56 and 57, the fuel tank 338 and the airbag control device 354g are shown together with the body frame 310. The airbag control device 354g is configured in the same manner as the airbag control device 354a of the fifteenth embodiment, and is connected to an inflator 357.

As shown in Figs. 56 and 57, the airbag control device 354g is disposed adjacent to a third cross frame 320 configured to couple left and right seat frames 317 to each other and in front of the third cross frame 320.

The third cross frame 320 is provided behind a front seat 313a and in front of a suspension coupling portion 317a.

The body frame 310 includes a plate-shaped stay 384 extending forward from the third cross frame 320. The stay 384 is provided at the center of the vehicle width.

The airbag control device 354g is fixed to the third cross frame 320 through the stay 384.

The airbag control device 354g is covered from above with the lower surface 339a (Fig. 39) of the housing box 339, and is covered from below with the rear fender 348 (Fig. 39) extending forward to a lower part of the airbag control device 354g. Here, the lower surface 339a of the housing box 339 is provided with, for example, a recess as a relief portion configured to avoid the airbag control device 354g and the stay 384.

As shown in Fig. 57, the airbag control device 354g is located in front of the third cross frame 320 and is located between the left and right seat frames 317 as viewed from the top of the vehicle. In other words, the airbag control device 354g is disposed inside a region surrounded by a frame-shaped frame portion 375 as viewed from the top of the vehicle. Therefore, the airbag control device 354g can be protected from an impact by the frame-shaped frame portion 375.

Referring to Figs. 39 and 56, the airbag control device 354g (not shown in Fig. 39) is disposed above the intake port 336a and the lower end 336b of the air cleaner box 336. Therefore, the airbag control device 354g can be prevented from being immersed in the puddle during running of the motorcycle 301.

Electric wires 377d configured to connect the airbag control device 354g with an acceleration sensor 353 extend outward from the airbag control device 354g in the vehicle width direction, and extend to a front lower side along inside surfaces of the left and right upper seat frames 390 in the vehicle width direction. The electric wires 377d extending along the upper seat frame 390 are bent so as to be folded rearward and downward at a joint portion 379 between a front end of the upper seat frame 390 and a rear part of the upper frame 389, extend rearward and downward along the inside surfaces of the upper frames 389 in the vehicle width direction, and are connected to the left and right acceleration sensors 353, respectively.

Therefore, the electric wire 377d can be covered from the outside with the upper seat frame 390 and the upper frame 389, and the electric wire 377d can be effectively protected. The electric wire 377d is supported by the upper seat frame 390 and the upper frame 389 through fixtures provided on the upper seat frame 390 and the upper frame 389.

Referring to Figs. 39 and 56, a front part of the upper seat frame 390 extends forward and downward above a cylinder portion 328b of a power unit 312 as viewed from the side of the vehicle. A rear part of the upper frame 389 extends rearward and downward below the cylinder portion 328b of the power unit 312.

In other words, the electric wire 377d is arranged along the front part of the upper seat frame 390 and the rear part of the upper frame 389 so as to pass above the cylinder portion 328b, in front of the cylinder portion 328b, and below the cylinder portion 328b in this order.

Therefore, the electric wire 377d can be efficiently disposed so as to avoid the cylinder portion 328b.

The acceleration sensor 353 may be disposed between the airbag control device 354g and the connection portion 378 in the arrangement path along the front part of the upper seat frame 390 and the rear part of the upper frame 389. For example, the acceleration sensor 353 may be disposed on the inside surface of the joint portion 379.

As described above, according to the twenty-first embodiment to which the present invention is applied, the body frame 310 includes the pair of left and right seat frames 317 that support the seat 313 for the occupant and the third cross frame 320 configured to connect the seat frames 317 to each other in the left-right direction, and the airbag control device 354g is disposed adjacent to the third cross frame 320 and in front of the third cross frame 320.

According to such a configuration, the airbag control device 354g can be compactly disposed using space in front of the third cross frame 320 configured to connect the seat frames 317 to each other in the left-right direction.

Further, the airbag control device 354g is fixed to the third cross frame 320. According to such a configuration, the airbag control device 354g can be fixed using the third cross frame 320 with a simple structure.

As a modification of the twenty-first embodiment, as shown by a virtual line in Fig. 57, an airbag control device 354h configured in the same manner as the airbag control device 354g may be disposed to be closer to one side of the left and right seat frames 317, and the airbag control device 354h may be fixed to the seat frame 317 through the stay 385 provided on the seat frame 317. In this case, the airbag control device 354h can be fixed using the seat frame 317 with a simple structure.

### [Twenty-second Embodiment]

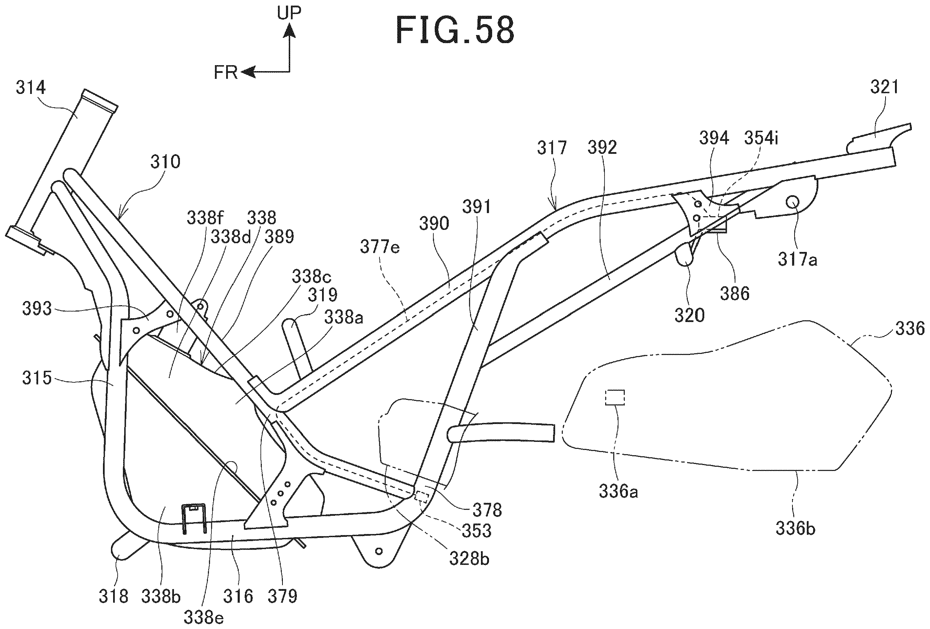

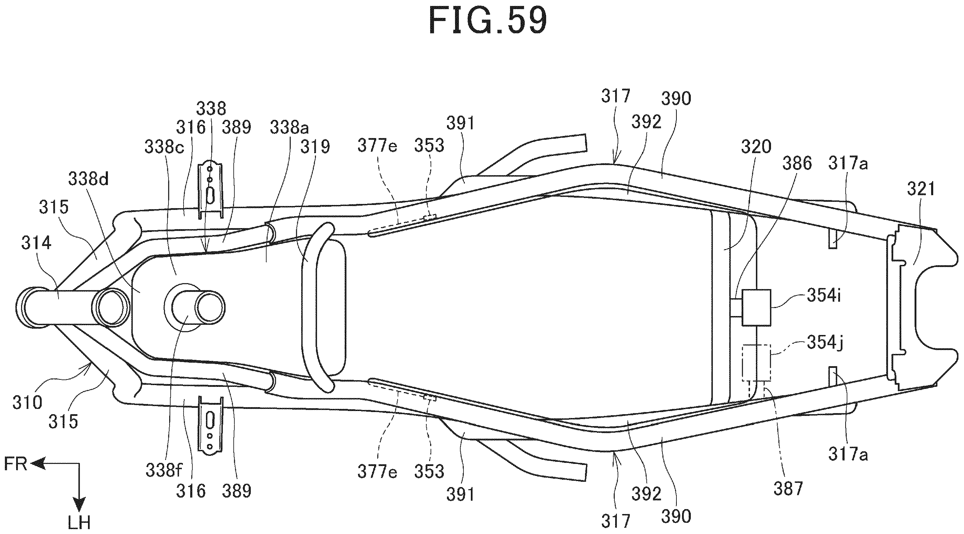

A twenty-second embodiment to which the present invention is applied will be described below with reference to Figs. 58 and 59. In the twenty-second embodiment, the same components as those in the fifteenth embodiment are denoted by the same reference numerals and will not be described.

The twenty-second embodiment is different from the fifteenth embodiment in terms of a position where an airbag control device 354i is disposed.

Fig. 58 is a left side view of a body frame 310 according to the twenty-second embodiment. Fig. 59 is a plan view of the body frame 310 as viewed from above. In Figs. 58 and 59, the fuel tank 338 and the airbag control device 354i are shown together with the body frame 310. The airbag control device 354i is configured in the same manner as the airbag control device 354a of the fifteenth embodiment, and is connected to an inflator 357.

As shown in Figs. 58 and 59, the airbag control device 354i is disposed adjacent to a third cross frame 320 configured to connect left and right seat frames 317 to each other and behind the third cross frame 320.

The third cross frame 320 is provided behind a front seat 313a and in front of a suspension coupling portion 317a.

The body frame 310 includes a plate-shaped stay 386 extending rearward from the third cross frame 320. The stay 386 is provided at the center of the vehicle width.

The airbag control device 354i is fixed to the third cross frame 320 through the stay 386.

The airbag control device 354i is covered from above with a lower surface of a housing box 339, and is covered from below with a rear fender 348 (Fig. 1) extending forward to a bottom of the airbag control device 354i.

As shown in Fig. 59, the airbag control device 354i is located behind the third cross frame 320 and in front of a fourth cross frame 321, and is located between the left and right seat frames 317 as viewed from the top of the vehicle. In other words, the airbag control device 354i is disposed inside a region surrounded by a frame-shaped frame portion 375 as viewed from the top of the vehicle. Therefore, the airbag control device 354i can be protected from an impact by the frame-shaped frame portion 375.

Referring to Figs. 39 and 58, the airbag control device 354i (not shown in Fig. 39) is disposed above the intake port 336a and the lower end 336b of the air cleaner box 336. Therefore, the airbag control device 354i can be prevented from being immersed in the puddle during running of the motorcycle 301.

Electric wires 377e configured to connect the airbag control device 354i with an acceleration sensor 353 extend outward from the airbag control device 354i in the vehicle width direction, and extend to a front lower side along inside surfaces of the left and right upper seat frames 390 in the vehicle width direction. The electric wires 377e extending along the upper seat frame 390 are bent so as to be folded rearward and downward at a joint portion 379 between a front end of the upper seat frame 390 and a rear part of the upper frame 389, extend rearward and downward along the inside surfaces of the upper frames 389 in the vehicle width direction, and are connected to the left and right acceleration sensors 353, respectively.

Therefore, the electric wire 377e can be covered from the outside with the upper seat frame 390 and the upper frame 389, and the electric wire 377e can be effectively protected. The electric wire 377e is supported by the upper seat frame 390 and the upper frame 389 through fixtures provided on the upper seat frame 390 and the upper frame 389.

Referring to Figs. 39 and 58, a front part of the upper seat frame 390 extends forward and downward above a cylinder portion 328b of a power unit 312 as viewed from the side of the vehicle. A rear part of the upper frame 389 extends rearward and downward below the cylinder portion 328b of the power unit 312.

In other words, the electric wire 377e is arranged along the front part of the upper seat frame 390 and the rear part of the upper frame 389 so as to pass above the cylinder portion 328b, in front of the cylinder portion 328b, and below the cylinder portion 328b in this order.

Therefore, the electric wire 377e can be efficiently disposed so as to avoid the cylinder portion 328b.

The acceleration sensor 353 may be disposed between the airbag control device 354i and the connection portion 378 in the arrangement path along the front part of the upper seat frame 390 and the rear part of the upper frame 389. For example, the acceleration sensor 353 may be disposed on the inside surface of the joint portion 379.

As described above, according to the twenty-second embodiment to which the present invention is applied, the body frame 310 includes the pair of left and right seat frames 317 that support the seat 313 for the occupant and the third cross frame 320 configured to connect the seat frames 317 to each other in the left-right direction, and the airbag control device 354i is disposed adjacent to the third cross frame 320 and below the third cross frame 320.

According to such a configuration, the airbag control device 354i can be compactly disposed using space behind the third cross frame 320 configured to connect the seat frames 317 to each other in the left-right direction.

Further, the airbag control device 354i is fixed to the third cross frame 320. According to such a configuration, the airbag control device 354i can be fixed using the third cross frame 320 with a simple structure.

As a modification of the twenty-second embodiment, as shown by a virtual line in Fig. 59, an airbag control device 354j configured in the same manner as the airbag control device 354i may be disposed to be closer to one side of the left and right seat frames 317, and the airbag control device 354j may be fixed to the seat frame 317 through the stay 387 provided on the seat frame 3217. In this case, the airbag control device 354j can be fixed using the seat frame 317 with a simple structure.

The first and fifth to twenty-second embodiments indicate aspects to which the present invention is applied, but the present invention is not limited to the above embodiments.

In the above embodiments, a motorcycle has been described as an example of the saddled vehicle. However, the present invention is not limited to a motorcycle, and is also applicable to a three-wheeled saddled vehicle including two front wheels or two rear wheels or to a saddled vehicle including four or more wheels.

### [Reference Signs List]

1, 201, 301 motorcycle (saddled vehicle)
3, 203, 303 rear wheel
10, 210, 310 body frame
12, 212, 312 power unit (engine)
13, 213, 313 seat
14, 214, 314 head pipe
15, 215, 315 down frame
16, 216, 316 lower frame
17, 217, 317 seat frame
20, 220, 320 third cross frame (cross frame)
35, 235, 335 intake device
36b, 236b, 336b lower end (lower end of intake device) 38, 338 fuel tank
38c, 338c upper surface
38f, 338f oil filler port
39, 339 housing box
39a, 339a lower surface (lower surface of housing box) 53, 253, 353 acceleration sensor
54a, 54b, 54c, 54d, 54e, 54f, 54g, 54h, 54i, 54j, 254a, 254b, 254c, 254d, 254g, 254h, 254i, 254j, 354a, 354b, 354c, 354d, 354e, 354f, 354g, 354h, 354i, 354j airbag control device
55, 255, 355 retainer
55a, 255a, 355a lower surface (lower surface of retainer)
56, 256, 356 airbag
57, 257, 357 inflator
59, 259, 359 engine control device
60, 260, 360 left and right extending portion
61, 261, 361 upward extending portion
70, 270, 370 storage portion
77a, 77b, 77c, 77d, 77e, 277a, 277d, 277e, 377a, 377b, 377c, 377d, 377e electric wire
78, 278, 378 connection portion
389 upper frame (frame)

## Claims

1. A saddled vehicle comprising:
an engine (12, 212, 312)
a body frame (10, 210, 310);
a retainer (55, 255, 355);
an inflator (57, 257, 357); and
an airbag (56, 256, 356) that is housed in the retainer (55, 255, 355), is inflated by gas released from the inflator (57, 257, 357), and is deployed outside the retainer (55, 255, 355),
the saddled vehicle including: an airbag control device (54a, 254a, 354a) that is provided separately from an engine control device (59, 259, 359) configured to control the engine (12, 212, 312) and controls deployment timing of the airbag (56, 256, 356); and an intake device (35, 235, 335) that supplies taken-in outside air to the engine (12, 212, 312) as intake air,
the airbag control device (54a, 254a, 354a) being disposed above a lower end (36b, 236b, 336b) of the intake device (35, 235, 335)
the body frame (10, 210, 310) including a head pipe (14, 214, 314) provided at a front end of the body frame (10, 210, 310), and the body frame (10, 210, 310) including a frame-shaped frame portion (75, 275, 375) that is formed by the head pipe (14, 214, 314), a down frame (15, 215, 315), a left and right lower frame (16, 216, 316), a left and right seat frame (17, 217, 317), and a cross frame (21), that is long in the front-rear direction as viewed from the top of the vehicle,
wherein the frame-shaped frame portion (75, 275, 375) extends to a rear part of the vehicle with the head pipe (14, 214, 314) as a front end and is formed in a frame shape as viewed from a top of the vehicle,
the airbag control device (54a, 254a, 354a) being disposed inside a region surrounded by the frame-shaped frame portion (75, 275, 375) as viewed from the top of the vehicle,
the retainer (55, 255, 355) is provided in an L-shape with a left and right extending portion (60, 260, 360) extending in a left-right direction and an upward extending portion (61, 261, 361) extending upward from an end of the left and right extending portion (60, 260, 360), **characterised in that**
the retainer (55, 255, 355) includes a stay (67, 267, 367) extending in a space portion (66, 266, 366) sandwiched between the left and right extending portion (60, 260, 360) and the upward extending portion (61, 261, 361), the airbag control device (54a, 254a, 354a) is supported by the stay (67, 267, 367) and disposed in the space portion (66, 266, 366), at the rear of an inner cover (43), and
the airbag control device (54a, 254a, 354a) is disposed above the left and right extending portion (60, 260, 360) and on a side of the upward extending portion (61, 261, 361).

2. The saddled vehicle according to claim 1, wherein
the inflator (57, 257, 357) is provided in the retainer (55, 255, 355), and
the airbag control device (54a, 254a, 354a) is connected to the inflator (57, 257, 357), and is fixed to the retainer (55, 255, 355).

3. The saddled vehicle according to claim 1 or 2, wherein the engine (12, 212, 312) is a unit swing engine that is swingably supported by the body frame (10, 210, 310) and supports a rear wheel (3, 203, 303), and the intake device (35, 235, 335) is fixed to the unit swing engine.

4. The saddled vehicle according to any one of claims 1 to 3, wherein the airbag control device (54a, 254a, 354a) includes a storage portion (70, 270, 370) that holds an operation record of the airbag even after the airbag (56, 256, 356) deploys.

5. The saddled vehicle according to any one of claims 1 to 4, wherein the airbag control device (54a, 254a, 354a) controls deployment timing of the airbag (56, 256, 356) based on a detection value obtained from an acceleration sensor (53, 253, 353), and
an electric wire (77a, 77b, 77c, 277a, 377a, 377b, 377c) is arranged along an inside surface of the body frame (10, 210, 310) in a vehicle width direction to connect the acceleration sensor (53, 253, 353) and the airbag control device (54a, 254a, 354a) to each other.

6. The saddled vehicle according to claim 5, wherein the body frame (10, 210, 310) includes the down frame (15, 215, 315) extending downward from the head pipe (14, 214, 314) located at the front end of the body frame (10, 210, 310), the lower frame (16, 216, 316) extending rearward from the down frame (15, 215, 315), and the seat frame (17, 217, 317) extending rearward and upward from a rear end of the lower frame (16, 216, 316), and the engine (12, 212, 312) is located behind the seat frame (17, 217, 317), and
the acceleration sensor (53, 253, 353) is disposed on an inside surface in the vehicle width direction of a connection portion (78, 278, 378) between the lower frame (16, 216, 316) and the seat frame (17, 217, 317).

7. The saddled vehicle according to any one of claims 1 to 6, wherein
the airbag control device (54a) is disposed inward in the vehicle width direction from an outer end (60a) in the vehicle width direction of the left and right extending portion (60) and below the upper surface opening (63) located at the upper end of the upward extending portion (61) .

## Patentansprüche

1. Sattelsitzfahrzeug das aufweist:
einen Motor (12, 212, 312),
einen Karosserierahmen (10, 210, 310);
einen Behälter (55, 255, 355);
einen Gasgenerator (57, 257, 357); und
einen Airbag (56, 256, 356), der im Behälter (55, 255, 355) aufgenommen ist, der durch Gas aufgeblasen wird, das aus dem Gasgenerator (57, 257, 357) freigesetzt wird, und außerhalb des Behälters (55, 255, 355) eingesetzt wird,
wobei das Sattelsitzfahrzeug aufweist:
eine Airbag-Steuervorrichtung (54a, 254a, 354a), die getrennt von einer Motorsteuervorrichtung (59, 259,359) vorgesehen ist, die ausgestaltet ist, den Motor (12, 212, 312) zu steuern, und die den Einsatzzeitpunkt des Airbags (56, 256, 356) steuert;
und eine Ansaugvorrichtung (35, 235, 335), die Außenluft dem Motor (12, 212, 312) als Ansaugluft zuleitet,
die Airbag-Steuervorrichtung (54a, 254a, 354a) über einem unteren Ende (36b, 236b, 336b) der Ansaugvorrichtung (35, 235, 335) angeordnet ist,
der Karosserierahmen (10, 210, 310) ein Lenkkopfrohr (14, 214, 314) aufweist, das an einem vorderen Ende des Karosserierahmens (10, 210, 310) vorgesehen ist, und der Karosserierahmen (10, 210, 310) einen rahmenförmigen Rahmenbereich (75, 275, 375) aufweist, der durch das Lenkkopfrohr (14, 214, 314) ausgebildet ist, einen unteren Rahmen (15, 215, 315), einen linken und rechten Bodenrahmen (16, 216, 316), einen linken und rechten Sitzrahmen (17, 217, 317) und einen Querrahmen (21), der in der Richtung von vorne nach hinten von der Oberseite des Fahrzeugs betrachtet lang ist,
wobei der rahmenförmige Rahmenbereich (75, 275, 375) zu einem hinteren Teil des Fahrzeugs mit dem Lenkkopfrohr (14, 214, 314) als ein vorderes Ende verläuft und in einer Rohrform von einer Oberseite des Fahrzeugs betrachtet ausgebildet ist,
die Airbag-Steuervorrichtung (54a, 254a, 354a) in einem Gebiet angeordnet ist, das von dem rahmenförmigen Rahmenbereich (75, 275, 375) von der Oberseite des Fahrzeugs betrachtet umgeben ist,
der Behälter (55, 255, 355) in einer L-Form mit einem links und rechts verlaufenden Bereich (60, 260, 360) vorgesehen ist, der in einer Richtung nach rechts und links verläuft, und einen nach oben verlaufenden Bereich (61, 261, 361), der von einem Ende des links und rechts verlaufenden Bereich (60, 260, 360) nach oben verläuft,
**dadurch gekennzeichnet, dass**
der Behälter (55, 255, 355) eine Verstrebung (67, 267, 367) aufweist, die in einem Raumbereich (66, 266, 366) verläuft, der zwischen dem links und rechts verlaufenden Bereich (60, 260,360) und dem nach oben verlaufenden Bereich (61, 261,361) angeordnet ist, wobei die Airbag-Steuervorrichtung (54a, 254a, 354a) von der Verstrebung (67, 267, 367) gehalten wird und in dem Raumbereich (66, 266, 366) an der Rückseite einer Innenverkleidung (43) angeordnet ist, und
die Airbag-Steuervorrichtung (54a, 254a, 354a) über dem links und rechts verlaufenden Bereich (60, 260, 360) und an einer Seite des nach oben verlaufenden Bereichs (61, 261, 361) angeordnet ist.

2. Sattelsitzfahrzeug nach Anspruch 1, wobei
der Gasgenerator (57, 257, 357) im Behälter (55, 255, 355) vorgesehen ist, und
die Airbag-Steuervorrichtung (54a, 254a, 354a) mit dem Gasgenerator (57, 257, 357) verbunden ist und am Behälter (55, 255, 355) befestigt ist.

3. Sattelsitzfahrzeug nach Anspruch 1 oder 2, wobei
der Motor (12, 212, 312) ein schwingbar gelagerter Motor ist, der schwingbar vom Karosserierahmen (10, 210, 310) gehalten wird und ein Hinterrad (3, 203, 303) hält, und die Ansaugvorrichtung (35, 235, 335) an dem schwingbar gelagerten Motor befestigt ist.

4. Sattelsitzfahrzeug nach einem der Ansprüche 1 bis 3,
wobei die Airbag-Steuervorrichtung (54a, 254a, 354a) einen Aufbewahrungsbereich (70, 270, 370) aufweist, der einen Betriebsdatensatz des Airbags selbst nach dem Einsatz des Airbags (56, 256, 356) enthält.

5. Sattelsitzfahrzeug nach einem der Ansprüche 1 bis 4,
wobei die Airbag-Steuervorrichtung (54a, 254a, 354a) den Einsatzzeitpunkt des Airbags (56, 256, 356) basierend auf einem Erfassungswert, der von einem Beschleunigungssensor (53, 253, 353) erhalten wurde, steuert, und
ein Elektrokabel (77a, 77b, 77c, 277a, 377a, 377b, 377c) entlang einer Innenfläche des Karosserierahmens (10, 210, 310) in einer Fahrzeugbreitenrichtung angeordnet ist, um den Beschleunigungssensor (53, 253, 353) und die Airbag-Steuervorrichtung (54a, 254a, 354a) miteinander zu verbinden.

6. Sattelsitzfahrzeug nach Anspruch 5, wobei der Karosserierahmen (10, 210,310) den unteren Rahmen (15, 215, 315) aufweist, der vom Lenkkopfrohr (14, 214, 314), das sich am vorderen Ende des Karosserierahmens (10, 210,310) befindet, nach unten verläuft, wobei der Bodenrahmen (16, 216, 316) vom unteren Rahmen (15, 215, 315) nach hinten verläuft, und den Sitzrahmen (17, 217, 317), der von einem hinteren Ende des Bodenrahmens (16, 216, 316) nach hinten und oben verläuft, und der Motor (12, 212, 312) sich hinter dem Sitzrahmen (17, 217, 317) befindet, und
der Beschleunigungssensor (53, 253, 353) an einer Innenfläche in der Fahrzeugbreitenrichtung eines Verbindungsbereichs (78, 278, 378) zwischen dem Bodenrahmen (16, 216, 316) und dem Sitzrahmen (17, 217, 317) angeordnet ist.

7. Sattelsitzfahrzeug nach einem der Ansprüche 1 bis 6, wobei
die Airbag-Steuervorrichtung (54a) von einem äußeren Ende (60a) in der Fahrzeugbreitenrichtung des links und rechts verlaufenden Bereichs (60) und unter der Öffnung (63) an der Oberfläche, die sich am oberen Ende des nach oben verlaufenden Bereichs (61) befindet, in der Fahrzeugrichtung nach innen angeordnet ist.

## Revendications

1. Véhicule à selle comprenant :
un moteur (12, 212, 312)
un corps de cadre (10, 210, 310) ;
un élément de retenue (55, 255, 355) ;
un gonfleur (57, 257, 357) ; et
un coussin de sécurité gonflable (56, 256, 356) qui est logé dans l'élément de retenue (55, 255, 355), est gonflé par du gaz libéré à partir du gonfleur (57, 257, 357), et est déployé à l'extérieur de l'élément de retenue (55, 255, 355),
le véhicule à selle comportant : un dispositif de commande de coussin de sécurité gonflable (54a, 254a, 354a) qui est prévu séparément d'un dispositif de commande de moteur (59, 259, 359) configuré pour commander le moteur (12, 212, 312) et commande le moment de déploiement du coussin de sécurité gonflable (56, 256, 356) ; et un dispositif d'admission (35, 235,335) qui amène de l'air extérieur admis au moteur (12,212,312) en tant qu'air d'admission,
le dispositif de commande de coussin de sécurité gonflable (54a, 254a, 354a) étant disposé au-dessus d'une extrémité inférieure (36b, 236b, 336b) du dispositif d'admission (35, 235, 335)
le cadre de corps (10, 210, 310) comportant une tubulure de refoulement (14, 214, 314) prévue au niveau d'une extrémité avant du cadre de corps (10, 210, 310), et le cadre de corps (10, 210, 310) comportant une portion de cadre en forme de cadre (75, 275, 375) qui est formée par la tubulure de refoulement (14, 214, 314), un cadre bas (15, 215, 315), un cadre inférieur gauche et droit (16, 216, 316), un cadre de siège gauche et droit (17, 217, 317), et un cadre croisé (21), qui est long dans la direction avant-arrière telle que vue à partir du haut du véhicule,
dans lequel la portion de cadre en forme de cadre (75, 275, 375) s'étend vers une partie arrière du véhicule avec la tubulure de refoulement (14, 214, 314) en tant qu'extrémité avant et est formée dans une forme de cadre telle que vue à partir d'un haut du véhicule,
le dispositif de commande de coussin de sécurité gonflable (54a, 254a, 354a) étant disposé à l'intérieur d'une zone entourée par la portion de cadre en forme de cadre (75, 275, 375) telle que vue à partir du haut du véhicule,
l'élément de retenue (55, 255, 355) est prévu dans une forme de L avec une portion s'étendant à gauche et à droite (60, 260, 360) s'étendant dans une direction gauche-droite et une portion s'étendant vers le haut (61, 261, 361) s'étendant vers le haut à partir d'une extrémité de la portion s'étendant à gauche et à droite (60, 260, 360), **caractérisé en ce que**
l'élément de retenue (55, 255, 355) comporte un support (67, 267, 367) s'étendant dans une portion d'espace (66, 266, 366) prise en sandwich entre la portion s'étendant à gauche et à droite (60, 260, 360) et la portion s'étendant vers le haut (61, 261, 361), le dispositif de commande de coussin de sécurité gonflable (54a, 254a, 354a) est supporté par le support (67, 267, 367) et disposé dans la portion d'espace (66, 266, 366), au niveau de l'arrière d'un couvercle intérieur (43), et
le dispositif de commande de coussin de sécurité gonflable (54a, 254a, 354a) est disposé au-dessus de la portion s'étendant à gauche et à droite (60, 260, 360) et sur un côté de la portion s'étendant vers le haut (61, 261, 361).

2. Véhicule à selle selon la revendication 1, dans lequel
le gonfleur (57, 257, 357) est prévu dans l'élément de retenue (55, 255, 355), et
le dispositif de commande de coussin de sécurité gonflable (54a, 254a, 354a) est relié au gonfleur (57, 257, 357), et est fixé à l'élément de retenue (55, 255, 355).

3. Véhicule à selle selon la revendication 1 ou 2, dans lequel le moteur (12, 212, 312) est un moteur oscillant unitaire qui est supporté de manière oscillante par le cadre de corps (10, 210,310) et supporte une roue arrière (3, 203, 303), et le dispositif d'admission (35, 235, 335) est fixé au moteur oscillant unitaire.

4. Véhicule à selle selon l'une quelconque des revendications 1 à 3, dans lequel le dispositif de commande de coussin de sécurité gonflable (54a, 254a, 354a) comporte une portion de stockage (70, 270, 370) qui conserve un enregistrement d'opération du coussin de sécurité gonflable même après que le coussin de sécurité gonflable (56, 256, 356) s'est déployé.

5. Véhicule à selle selon l'une quelconque des revendications 1 à 4, dans lequel le dispositif de commande de coussin de sécurité gonflable (54a, 254a, 354a) commande le moment de déploiement du coussin de sécurité gonflable (56, 256, 356) sur la base d'une valeur de détection obtenue à partir d'un capteur d'accélération (53, 253, 353), et
un fil électrique (77a, 77b, 77c, 277a, 377a, 377b, 377c) est agencé le long d'une surface intérieure du cadre de corps (10, 210, 310) dans une direction de largeur de véhicule pour relier le capteur d'accélération (53, 253, 353) et le dispositif de commande de coussin de sécurité gonflable (54a, 254a, 354a) l'un à l'autre.

6. Véhicule à selle selon la revendication 5, dans lequel le cadre de corps (10, 210, 310) comporte le cadre bas (15, 215, 315) s'étendant vers le bas à partir de la tubulure de refoulement (14, 214, 314) située au niveau de l'extrémité avant du cadre de corps (10, 210, 310), le cadre inférieur (16, 216, 316) s'étendant vers l'arrière à partir du cadre bas (15, 215, 315), et le cadre de siège (17, 217, 317) s'étendant vers l'arrière et vers le haut à partir d'une extrémité arrière du cadre inférieur (16, 216, 316), et le moteur (12, 212, 312) est situé derrière le cadre de siège (17, 217, 317), et
le capteur d'accélération (53, 253, 353) est disposé sur une surface intérieure dans la direction de largeur de véhicule d'une portion de liaison (78, 278, 378) entre le cadre inférieur (16, 216, 316) et le cadre de siège (17, 217, 317).

7. Véhicule à selle selon l'une quelconque des revendications 1 à 6, dans lequel
le dispositif de commande de coussin de sécurité gonflable (54a) est disposé à l'intérieur dans la direction de largeur de véhicule à partir d'une extrémité extérieure (60a) dans la direction de largeur de véhicule de la portion s'étendant à gauche et à droite (60) et au-dessous de l'ouverture de surface supérieure (63) située au niveau de l'extrémité supérieure de la portion s'étendant vers le haut (61).
